# EUROPEAN PATENT SPECIFICATION

(11) **EP 1 157 493 B1**
(45) Date of publication and mention of the grant of the patent: **21.05.2008**
(21) Application number: 00985161.9
(22) Date of filing: 14.12.2000
(51) Int. Cl.: H04J 14/02, H04N 7/22

(54) **DWDM CATV RETURN SYSTEM WITH UP-CONVERTERS TO PREVENT FIBER CROSSTALK**
DWDM-CATV-RETURNSYSTEM MIT UP-UMSETZERN, UM FASERNEBENSPRECHEN ZU VERHINDERN
SYSTEME DE RETOUR DE SYSTEMES DE TELEVISION PAR CABLE (CATV) PAR MULTIPLEXAGE EN LONGUEUR D'ONDE DENSE (DWDM) AVEC CONVERTISSEUR ELEVATEUR AFIN D'EMPECHER UNE DIAPHONIE DE FIBRE

(30) Priority: 29.12.1999 US 474299
(43) Date of publication of application: 28.11.2001
(73) Proprietor: BROADBAND ROYALTY CORPORATION, Wilmington, DE 19801 (US)
(72) Inventor: SCHEMMANN, Marcel, F., C., NL-5656 AA Eindhoven (NL); MUTALIK, Venkatesh, G., NL-5656 AA Eindhoven (NL)
(74) Representative: Beyer, Andreas
(86) International application number: PCT/EP2000/012725
(87) International publication number: WO 2001/050662

(56) References cited:
- EP-A- 0 721 261
- US-A- 5 128 790
- US-A- 5 153 763
- LI A ET AL: "EXPERIMENTAL CONFIRMATION OF CROSSTALK DUE TO STIMULATED RAMAN SCATTERING IN WDM AM-VSB CATV TRANSMISSION SYSTEMS" ELECTRONICS LETTERS,GB,IEE STEVENAGE, vol. 31, no. 18, 31 August 1995 (1995-08-31), pages 1538-1539, XP000530938 ISSN: 0013-5194
- HEIJNINGEN VAN P H ET AL: "CROSSTALK IN A FIBRE ACCESS NETWORK DEMONSTRATOR CARRYING TELEVISION AND INTERACTIVE DIGITAL SERVICES" ELECTRONICS AND COMMUNICATION ENGINEERING JOURNAL,GB,INSTITUTION OF ELECTRICAL ENGINEERS, LONDON, vol. 6, no. 1, 1 February 1994 (1994-02-01), pages 49-55, XP000439122 ISSN: 0954-0695

## Description

The invention is related to the field of broadband hybrid fiber cable communication systems such as cable television systems and is most closely related to laser optical communication links for return signals in such systems using dense wavelength division multiplexing.

Commonly in cable television systems (CATV), television programs are broadcast from a central head-end to a multitude of customers. The programs are distributed from the head-end through an branching tree-like, optical fiber network to a multitude of local hybrid fiber cable nodes (HFCNs) in respective communities. Then the programs are further distributed from the local HFCNs through a branching tree-like coaxial cable network to customer interface units (CIUs) also called cable terminations at the customer's residence or place of business.
In multicarrier signals, a plurality of carrier signals that have mutually different radio frequencies, are each modulated by a different respective information signal. At the head-end, a multitude of analog electronic signals for respective television programs are used to modulate respective radio frequency carrier signals that have mutually different respective frequencies. The multitude of modulated carrier signals are combined to form the multicarrier electronic signal. The multicarrier signal is used to modulate a laser beam to provide an optical signal carried by the laser beam through an optical fiber.
Analog television signals are broadcast in cable television systems as multicarrier amplitude modulated virtual side band signals (AM-VSB) at radio frequencies nominally from 50 to 550 MHz for the NTSC standard or 65 to 550 MHz for the PAL standard. The base-band signal for each television program modulates a respective carrier signal to form a so called channel. The carrier frequencies are spaced at 6 MHz intervals for reception by a cable ready television set. Thus, about 83 analog channels are available for analog NTSC broadcasting.
In the fiber tree network, optical fibers branch out from optical splitters to reach all the HFCNs. The optical splitters are typically one-to-multiple-way optical couplers produced by twisting two or more optical fibers together and fusing the fibers.
At each local HFCN node, the multicarrier optical signal is used to modulate the current through a photo-detector in order to covert the optical signal back into an electronic multicarrier signal. The reconverted electronic signal is amplified and transmitted from the local nodes through the tree-like network of coaxial conductor cables to the CIUs. In the customers home or place of business an internal coaxial cable network extends from the CIU, and the customer connects a cable ready television to the internal cable to receive the cable television broadcasts.
Often several coaxial cables will extend from the same HFCN. In some cases they are simply branches of the same network. They all receive signals from the same receiver in the HFCN and the same transmitter in the HFCN transmits return signals from all the branch networks. In other cases, multiple independent coaxial cable networks extend from the same HFCN. In that case, each independent coaxial network receives signals from a respective receiver in the HFCN and a respective transmitter in the HFCN transmits return signals from a respective coaxial cable network.
In addition to analog television, some cable systems are beginning to provide digital television broadcasts through the same cable television networks. These are multicarrier QPSK (quadrature phase shift keying) or multilevel QAM (quadrature amplitude modulation) such as 16-QAM to 256-QAM, that are compatible with digital television standards. These signals are commonly transmitted at frequencies above 550 MHz (the maximum frequency of standard analog television), such as, in a band nominally of about 550-750 MHz or 550-875 MHz. The customer connects a settop box to his internal coaxial cable network and connects a short coaxial cable between the settop box and his analog television. At the standard 6 MHz spacing between carrier frequencies, the 550-750 MHz band has room for about 32 digital channels, and a 550-875 MHz band has room for about 53 digital channels.
In addition to broadcast television programming, many cable television operators are beginning to provide additional types of communication services such as telephone service, computer networking services (e.g. high speed internet connection), video conferencing, security services, and/or interactive television services through the cable television system. These additional services require bi-directional private communication in the cable television system between the customers and the head-end. In the forward direction, private narrowcast signals for these additional services are transmitted along with the broadcast television signals through the cable television network to the CIUs as described above for digital broadcast television. Typically some of the digital channels above 550 MHz are reserved for these private, narrowcast, forward signals.
The customer connects telephone equipment, computer equipment, security systems, and various appliances through various interfaces (e.g. a set top box) to an internal coaxial cable network connected to his CIU. The customer's equipment receives the forward signals for addition services and produce return signals for additional services that are transmitted by the CIUs into the external coaxial network of the cable television system. The return signals for the additional communication services are commonly transmitted back through cable television systems in the same form as digital television signals and at frequencies below the minimum frequency of analog television (e.g. within a band nominally from 5 to 50 MHz for NTSC or from 5 to 65 MHz for PAL). Thus for NTSC, there are about 7 channels which are shared between users, for example, by packet switching.
The return signals travel back through the external coaxial network to the local HFCNs. In the local nodes, the electronic return signals are separated from the electronic forward signals by a diplex filter. The separated electronic return signals are used to modulate a return laser beam to produce an optical return signal. The optical return signal is transmitted back to the head-end. The separate optical return signal from each HFCN is converted back into a respective electronic return signal by a respective optical detector for the return signal. The electronic return signals are demodulated and used in the head-end for control, telephone, television, and computer communications.
The optical return signals from the HFCNs can be transmitted through a different optical fiber for each HFCN. This results in an additional optical fiber from every node extending from the node to the head-end. This option is expensive when installing a new system even though optical fibers are relatively inexpensive, because of the large number of fibers that are required in the fiber tree network, but it is impractical to upgrade a system in this manner because of the large expense of installing additional fiber all the way back to the head-end whenever another node is added as system.
A more practical method of providing additional signal paths to the head-end for return signals is wavelength division multiplexing (WDM) in which, multiple laser beams of different respective optical wavelength are routed through the same common optical fiber.
A different optical wavelength is used for the return laser from each respective HFCN node, all the return optical signals travel back through the same fibers as the forward optical signal. A wavelength division multiplexer (WDM) is used to separate the return light beams at the head-end. WDMs can be used to combine (multiplex) multiple light beams of mutually different respective optical wavelengths from separate fibers into a common optical fiber and/or to separate (demultiplex) the light beams from the common fiber into the separate fibers. WDMs that use a grating or prism to combine and/or separate light beams of different wavelength are well known in the art. In the WDM, the end of each single wavelength fiber is positioned relative to the prism or grating and relative to the end of the common fiber, so that, only light within a narrow range in wavelength, around a nominal wavelength for the single wavelength fiber, will travel through the prism or grating between the end of the single wavelength fiber and the end of the common fiber. During combining, any light from the single wavelength fiber which is not within that tolerance range for that single wavelength fiber will be rejected. Alternatively, a multi-branch optical coupler can be used for multiplexing multiple beams, but does not provide the inherent side mode rejection of a multiplexing WDM.
Relatively inexpensive lasers are available with optical wavelengths with relatively low attenuation in silica glass in wavelength bands from about 1220 to 1360 nm and from about 1480 to 1620 nm. The number of discrete laser beams that can be transmitted through the same fiber within these optical wavelength bands, depends on the amount of wavelength separation required between the beams which is limited by beam wavelength width, wavelength tolerances, and crosstalk between signals carried in the beams.
The wavelength of a laser is not a vertical line (single value) on the wavelength intensity curve, but rather a narrow peak with side peaks representing side modes. The single-mode DFB lasers typically used for communication, commonly have line-widths of less 0.1 nm and side mode suppression of 30 to 40 dB. A multiplexing WDM can essentially eliminate the side modes of laser beams as they are combined. The wavelength of the laser and of the WDM must be precisely matched, but the wavelengths of both the lasers and WDM are temperature dependent, so that, the wavelength separation between beams must be sufficient, so that, temperature fluctuations will not cause loss of signal through the WDM. In addition, the optical wavelength of a directly modulated DFB laser fluctuates (chirps) when the intensity of the laser beam is modulated by modulating the bias current of the laser. Chirping can be eliminated by using external modulation of the laser beam, but external modulation is more complex and expensive. Thus, the separation between optical wavelengths of light beams in a WDM system is limited by fluctuations of the laser wavelength due to temperature fluctuations and chirping of the laser.
Requirements for signal to noise ratio (S/N) at the cable termination together with limits on the allowed optical power, limit the length of optical transmission of analog television signal to around 100 km. The introduction of additional light beams in a common optical fiber results in crosstalk as additional noise that further reduces the range of cable broadcasting.
There are three principal causes of crosstalk between laser beams in a WDM system, namely, imperfect separation, stimulated Raman scattering (SRS), and four wave mixing. The separation of the beams in the WDM is not perfect, so that, some light from other beams contaminates the separated beams and is detected by the optical detectors as crosstalk.
Stimulated Raman scattering (SRS) transfers energy from shorter wavelength beams to amplify longer wavelength beams in the same fiber. For intensity modulated beams, this energy transfer occurs more when signals in both beams are simultaneously at high intensity. SRS results in crosstalk in the signals of both beams. SRS intensity tends to be proportional to the length of the common fiber. The intensity of SRS is also inversely related to the radio frequency of a signal modulating the light beam, so that, when the modulation frequency is reduced by half, then the noise resulting from SRS increases by 6 dB (i.e. it is 4 times higher).

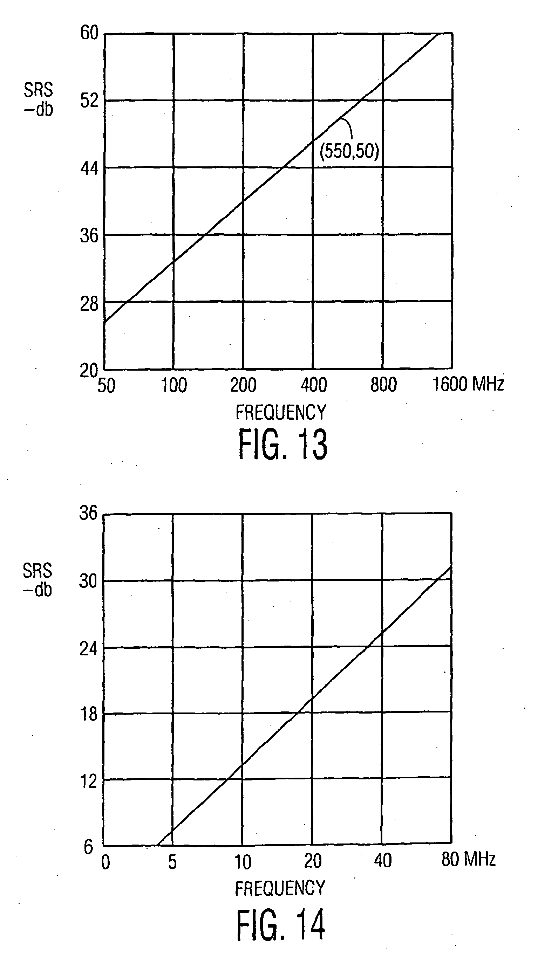

Figures 13 and 14 show the relationship between noise resulting from SRS and the frequency of a modulating signal for a particular fiber optic link. The actual level of SRS noise depends on the length of the common fiber, the quality of the fiber, the radius of the turns in the fiber, the number and quality of the connections in the fiber, and other variables.
Four wave mixing FWM occurs when three light beams of wavelength λ1, λ2, and λ3 in an optical fiber interact resulting in additional light beams of wavelength λ1 + λ2 - λ3; λ2 + λ3 - λ1; and λ1 + λ3 -λ2. If the wavelength of one of the resulting light beams is sufficiently close to the wavelength of another light beam in the WDM, so that, the resulting light beam is not fully rejected by the WDM, then cross talk will result. The intensity of the resulting light wave is proportional to the length of the WDM link and also depends on the degree of optical phase matching which in turn is dependent on fiber dispersion and wavelength spacing. Careful selection of the spacing between light beam wavelengths can be used to minimize crosstalk due to four wave mixing.
There is substantial loss in light intensity in the multiplexing WDM where the beams are combined and in the demultiplexing WDM where the beams are separated, so that, WDM systems usually include optical amplifiers. Currently Erbium doped fiber, pumped laser amplifiers (EDFAs) are commonly used to amplify the light beams in optical communication networks. Current EDFAs only have a bandwidth of 30 nm and only operate at around1550 nm, so that,1330 nm lasers can not be used with current EDFAs and only a small portion of the available bandwidth at 1550 can be used. Also, SRS crosstalk between beams in a WDM system increases in the erbium doped fiber. Semiconductor laser amplifiers are available which can amplify optical signals within the full wavelength bands at both 1550 and1310 nm, but they are more expensive and they produce more crosstalk than EDFAs. However, optical signal amplification is a quickly developing field.
Those skilled in the art are directed to the following citations. U. S. patent 4,992,745 to Blauvelt suggests a pre-distortion network for compensating for second, third, and higher order distortion in a transmission device such as a semiconductor laser.U. S. patent 5,257,124 to Glaab suggests dual optical links to cancel out even order distortion. U. S. patent 5,430,568 to Little suggests a system in which 4 independent lasers each transmit different respective multi-carrier signals having different respective frequency bands of less than one octave each. In that citation, at optical receivers, second order distortions are filtered out of each of the 4 signals and then the signals are combined into a single 54-500 MHz multi-carrier signal. U. S. patent application 5,864,612 to Bodeep suggests a telephone switching network with downstream multiple CATV channels (AM-VSB) or enhanced payper-view (EPPV) channels extend from 55.25 to 500 MHz, downstream switched signals extend from 500 MHz to 1 GHz. Upstream switched signals in multiple coaxial cable networks connected to the node, extend from 5 to 40 MHz. Upstream bands from different coaxial cables are frequency shifted and frequency multiplexed to use different upstream bandwidths in a common signal converted to an optical signal using a laser transmitter. According to Bodeep this system presents an unsatisfactory upstream bandwidth bottleneck. "Telecommunications TransmissionHandbook"fourth edition, by Roger L. Freeman pp. 711-762 describes current fiber optic communication links.
US 5,128,790 discloses that in order to transmit a frequency-division multiplex signal occupying a broad frequency band over an optical-fiber transmission link, in the transmitter the whole frequency band to be transmitted is converted by single-sideband amplitude modulation of a high-frequency carrier to a higher-frequency band, which, referred to its lowest frequency, is less than one octave wide.
US 5,153,763 discloses a CATV distribution network using light wave transmission lines. The head end comprises before the laser diode AM transmitter a block converter, which converts the entire broadband CATV spectrum to a frequency range, where the lowest and highest frequency in that range differ by less than an octave.
The present invention provides an up-converter according to claim 1 and a method according to claim 33.
In the invention herein, SRS crosstalk is minimized by minimizing the length of optical fibers that use WDM to carry optical signals having low frequency carrier signals.
Also, SRS crosstalk is minimized by providing separate fibers for optical signals with low frequency carrier signals, so that, wavelength division multiplexing (WDM) is only used for light beams that exclusively use high frequency carrier signals. Prior to DWDM, the carrier frequencies of light beams are increased, so that, after the light beam is multiplexed with other beams, cross talk due to SRS will be minimized. In addition, in order to further reduce cross-talk between information in wavelength multiplexed laser beams, information in different beams is modulated with carrier signals in different frequency bands, so that, crosstalk is minimized and some of the resulting cross talk can be filtered out. Preferably, each of the different frequency bands are less than an octave wide, so that, essentially all of the second order distortion and some third order distortions and higher order distortions can be filtered out, and more preferably, each of the different frequency bands are less than half an octave wide, so that, essentially all of the second and fourth order distortions and more of the third order and higher order distortions can be filtered out.
The optical apparatus of the invention includes an input path, an output path, and an optical up-converter. The input optical path carries an input light beam modulated by an input carrier signal modulated by an information signal, the input carrier signal having a radio frequency. The output optical path carries an output light beam modulated by on output carrier signal modulated by the same information signal as the input carrier signal, the output carrier signal having a higher radio frequency than the input carrier signal. The optical up-converter converts the input light beam carrying the input carrier signal carrying the information signal into the output light beam carrying the higher frequency output carrier signal carrying the same information signal.
Preferably, the optical apparatus further includes: an input optical coupler for connecting an input optical fiber to the input optical path; and an output optical coupler for connecting an output optical fiber to the output optical path. The wavelengths of the input and output light beams are preferably, between 1220 and 1360 nm and/or between 1480 and 1620 nm. The radio frequency of the output carrier signal is at least approximately 2 times higher than a radio frequency of the input carrier signal, the radio frequency of the input carrier signal is below 100 MHz, and the radio frequency of the output carrier signal is above 200 MHz. Preferably, the radio frequency of one output carrier signal is more than approximately 40 times higher than the frequency of the corresponding input carrier signal, and the radio frequency of the input carrier signal is approximately between 5 and 65 MHz and the radio frequency of the output carrier signal is approximately between 300 and 1000 MHz. Also, preferably, the optical apparatus further includes one or more additional input optical paths providing a plurality of input optical paths carrying respective input light beams modulated by respective input carrier signals modulated by respective information signals, the respective input carrier signals having radio frequencies. Preferably, the optical up-converter converts the plurality of the input light beams carrying the input carrier signals carrying the information signals into the output light beam carrying the higher frequency output carrier signals carrying the same information signals. Preferably, the optical apparatus further includes one or more additional output optical paths providing a plurality of output optical paths carrying respective output light beams modulated by respective output carrier signals modulated by the same information signals as corresponding input carrier signals, the respective output carrier signals having a higher radio frequency than the corresponding input carrier signals; and the optical apparatus converts the plurality of the input light beams carrying the input carrier signals carrying the information signals into the plurality of output light beams carrying the higher frequency output carrier signals carrying the same information signals.
In a preferred embodiment of the invention, the input and output light beams are multicarrier optical signals in which each light beam is modulated by a multitude of carrier signals, the multitude of carrier signals of the same light beam have mutually different respective radio frequencies and the carrier signals of the same light beam are modulated by different respective information signals. Also, the output carrier signals are modulated by the same respective information signals as corresponding input carrier signals having lower frequencies.
Preferably, the radio frequencies of the output carrier signals are all within a frequency band with a band width of approximately less than one octave, so that, the maximum frequency of any carrier in the band is less than or equal to approximately 2 times the minimum frequency of any carrier in the band, so that, essentially all second order distortions of the multicarrier signal can be filtered out. More preferably, the output carrier signals have radio frequencies within a frequency band with a width of approximately less than half an octave, so that, the maximum frequency of any carrier in the band is less than or equal to approximately 1.5 times the minimum frequency of any carrier in the band, so that, essentially, all fourth order distortions of the multicarrier signal can be filtered out. Also, preferably, the multiple carrier signals of the input light beam have radio frequencies in a frequency band extending in a potion of the range between approximately 5 and 65 MHz, and the corresponding carrier signals in the output light beam have radio frequencies in a band with a minimum carrier frequency above 400 MHz.

The optical apparatus, preferably includes, one or more additional output optical paths to provide a plurality of output optical paths carrying respective output light beams which are multicarrier optical output signals including a first output light beam modulated by a multitude of carrier signals in a first frequency band and a second output light beam modulated by a multitude of carrier signals in a second frequency band, and in which the frequency bands do not overlap. In this case, preferably, the first frequency band extends in a portion of the range of 200-800 MHz; and the second frequency band extends in a portion of the range of 300-1200 MHz, and the wavelengths of two of the output light beams are separated by a difference between 0.4 nm and 1.6 nm. More preferably, the first frequency band is approximately 400-600 MHz and the second frequency band is approximately 600-900 MHz.
The optical up-converter of the invention includes optical receiver , electronic up-converter and optical transmitter. The optical receiver converts the input light beam carrying the input carrier signal into an input electronic current signal carrying the same input carrier signal. The electronic up-converter converts the input electronic current signal modulated by the input carrier signal modulated by the information signal into an output electronic current signal modulated by the higher frequency output carrier signal modulated by the same information signal. The optical transmitter converts the output electronic current signal carrying the higher frequency carrier signal into the output light beam carrying the same higher frequency output carrier signal. Preferably, the optical transmitter includes a directly modulated, distributed feedback (DFB) laser. The optical transmitter, preferably includes, a power amplifier, a biaser for biasing the output electronic signal, and a lens system for directing the laser beam into an end of an optical fiber. The optical receiver, preferably includes, a PIN photo-diode followed by a preamplifier. Preferably, the optical apparatus also includes a controller to dynamically control the wavelength of the lasers during operation.
Also, the optical up-converter, preferably includes, one or more additional input optical paths, providing a plurality of input optical paths carrying respective input light beams modulated by respective input carrier signals modulated by a different respective information signals. In which case, the optical receiver converts the plurality of input light beams into respective electronic input current signals carrying the respective input carrier signals; and the electronic up-converter converts the plurality of input current signals carrying the input carrier signals into the output electronic current signal carrying output carrier signals with higher frequencies than the input carrier signals and carrying the same information signals. Also, the electronic up-converter includes a combiner for combining multiple electronic current signals into a single electronic current signal.
Preferably, the apparatus further includes one or more additional output optical paths to provide a plurality of output optical paths carrying respective output light beams modulated by respective output carrier signals corresponding with the input carrier signals of the plurality of input light beams and having a radio frequency higher than the input carrier signals, the output carrier signals being modulated by the same information signals as the corresponding input carrier signals. In this case, the electronic up-converter converts the plurality of input electronic current signals modulated by the input carrier signals modulated by the information signals, into a plurality of output electronic current signals modulated by the higher frequency output carrier signals modulated by the same information signals. Also, an optical transmitter converts the plurality of output electronic current signals carrying the higher frequency output carrier signals into respective output light beams carrying the same higher frequency output carrier signals in the output optical paths. Preferably, the combiner converts 4 or more input electronic signals into one output electronic signal. More preferably, 4 to 6 input electronic signals are converted into each output electronic signal.
A wavelength multiplexing fiber-hub of the invention includes the apparatus described above and the following. The fiber-hub includes a multitude of return signal input optical paths carrying different respective return input light beams each modulated by a different respective multitude of return input carrier signals. For each return input light beam, the respective multitude of return input carrier signals are modulated by different respective return information signals and each have a different radio frequency. The hub also includes a plurality of return signal output optical paths carrying respective return output light beams, each modulated by a respective multitude of return output carrier signals. For each return output light beam, the respective multitude of return output carrier signals are modulated by a different one of the return information signals. The return output carrier signals each having a different radio frequency, and the radio frequencies of the return output carrier signals are higher than the radio frequencies of the return input carrier signals. Also, the hub includes an optical up-converter for converting the multitude of return input light beams carrying the return input carrier signals carrying the return information signals, into the plurality of return output light beams carrying the higher frequency return output carrier signals carrying the return information signals. Finally the hub also includes a signal router including a return combiner for combining the return output light beams from the plurality of return output optical paths into a common hub optical fiber.

Preferably, the hub also includes a multitude of forward signal optical paths carrying respective forward light beams modulated by respective multitudes of forward carrier signals. For each forward light beam, each forward carrier signal is modulated by a different respective forward information signal and each forward carrier signal has a different radio frequency. Also, the hub, preferably includes, common node fibers for respective return input optical paths, and the signal router routes respective forward light beams from respective forward signal optical paths into respective common node fibers and routes respective return input signal from respective common node fiber into respective return input optical paths, so that, in each common node fiber, a forward light beam travels away from the hub and a return light beam travels toward the hub. Preferably, the signal router also includes a node wavelength division multiplexer for each common node fiber which routes respective forward light beams from respective forward signal optical paths into respective common node fibers and routes respective return input signal from respective common node fiber into respective return input optical paths. Also, the signal router, preferably includes, a hub wavelength division multiplexer for routing forward light beams from the common hub fiber into respective forward signal optical paths. The hub wavelength division multiplexer routes return light beams from forward signal optical paths into the common hub fiber.
Preferably, the hub also includes, a broadcast signal optical path carrying an analog broadcast light beam modulated by a multitude of broadcast carrier signals modulated by different respective broadcast information signals. The broadcast carrier signals each have a different radio frequency. In this case, the signal router includes a splitter for dividing the broadcast light beam into a multitude of similar broadcast light beams in respective broadcast signal optical paths for respect common node fibers. Also, the node wavelength division multiplexers route the broadcast light beams from respective broadcast signal optical paths into respective common node fibers.
A second embodiment, of the wavelength multiplexing fiber-hub of the invention, includes, a multitude of return input optical paths carrying respective return input light beams. Each beam is modulated by a multitude of return input carrier signals modulated by different corresponding return information signals. For each return input light beam, the radio frequencies of the return input carrier signals of the return input light beam are mutually different. The second hub embodiment also includes a plurality of return output optical paths carrying respective return output light beams. Each beam is modulated by a multitudes of return output carrier signals respectively modulated by the same return information signals as corresponding return input carrier signals. The return output carrier signals have a higher radio frequency than the return input carrier signals. The second hub embodiment includes: an optical receiver, an electronic up-converter , and an optical transmitter. The optical receiver converts the multitude of return input light beams that carry the return input carrier signals into corresponding return input electronic current signals that carry the same return input carrier signals as the return input light beams. The electronic up-converter converts the multitude of return input electronic current signals that carry the return input carrier signals that carry the return information signals, into a plurality of return output electronic current signals that carry higher frequency return output carrier signals, that carry the same return information signals as corresponding return input carrier signals. The optical transmitter converts each return output electronic current signal into a corresponding return output light beam carrying the same higher frequency return output carrier signals in an output optical path. Each return output light beam has a mutually different wavelength, so that, each one of the plurality of return output optical paths carries a corresponding one of the plurality of return output light beams. Finally, the second hub embodiment includes an output router for combining the return output light beams from the plurality of return output optical paths into a common hub fiber that carries the plurality of return output light beams.
An up-converter of the invention includes receiving apparatus for receiving a first plurality of first multicarrier electronic first signals that include a multitude, of first carrier signals modulated by different respective information signals, the frequency of the carrier signals in the same multicarrier signal are all different, the frequencies of a plurality of the carrier signals of different first electronic signals are approximately the same. The first carrier signals of each first electronic signal are within the same first frequency band. The up-converter also includes conversion apparatus for converting and combining the respective
first signals into a single multicarrier electronic second signal including a multitude of second carrier signals of mutually different respective frequencies and modulated respectively by the same information signals as the first signals. The frequencies of the second carrier signals are within a second frequency band and the minimum carrier frequency of the second band is at least 2 times higher than the maximum carrier frequency of the first band. Finally, the up-converter includes transmission apparatus for transmitting the second signal.
Preferably, in the up-converter, the information signals of each first signal modulate respective second carrier signals with frequencies within a different subband of the second frequency band. In this case, the frequency band width of the first frequency band is more than an octave, and the frequency band width of the second frequency band is less than an octave, and more preferably, less than half an octave. The minimum frequency of the second band is more than the maximum frequency of the first band, and preferably, more than 2 times higher, and more preferably, more than 6 times higher than the maximum frequency of the first band. Preferably, the maximum frequency of the first frequency band is below 100 MHz and the minimum frequency of the second band is above 200 MHz, more preferably, the maximum frequency of the first frequency band is below approximately 65 MHz and the minimum frequency of the second band is above 300 MHz. More specifically, the first frequency band is in a range approximately between 5 and 65 MHz, and the first band width is more than 3 octaves, and the second frequency band is in a portion of a range approximately between 400 and 650 MHz, and the second band width is less than half an octave.
Preferably, in a first embodiment of the up-converter of the invention, the receiving apparatus communicates with respective coaxial cable networks to receive the first plurality of first electronic signals. The conversion apparatus includes: electronic frequency converters for converting, the respective first electronic signals into different respective third multicarrier electronic signals that include a portion of the second carrier signals with frequencies within a subband of the second frequency band; and a combiner for combining the third electronic signals into the second electronic signal. Also, the up-converter, preferably includes, an optical transmitter for converting the single second electronic signal into a first multicarrier optical signal.
In a second embodiment of the up-converter of the invention, the up-converter includes an optical transmitter for converting the single second electronic signal into a first multicarrier optical signal. Also, in this case, preferably, the conversion apparatus includes a combiner, an optical receiver, a second frequency converter, and a second optical transmitter. The multiple first frequency converters convert the respective first electronic signals into different respective third multicarrier electronic signals that each including a multitude of third carrier signals. The frequencies of the third carrier signals of each third electronic signal are within a different subband of a third frequency band. The maximum frequency of the third frequency band is at least approximately the minimum frequency of the first frequency band plus the frequency band width of the first frequency band times the number of first multicarrier signals in the first plurality of signals. The combiner combines the third electronic signals into a single fourth multicarrier electronic signal with third carrier signals in the third frequency band. A first optical transmitter converts the fourth electronic signal into a first multicarrier optical signal. The optical receiver converts the first optical signal into a fifth multicarrier electronic signal. The second frequency converter converts the fifth electronic signal into the second electronic signal with second carrier signals in the second frequency band. The minimum frequency of the second frequency band being higher than the maximum frequency of the third frequency band. The second optical transmitter converts the single second signal into a second multicarrier optical signal.
Preferably, in the second up-converter embodiment of the invention, the receiving apparatus includes a plurality of optical receivers for converting respective first multicarrier optical signals respectively into the first plurality of first multicarrier electronic signals. Also, preferably, the conversion apparatus includes frequency converters for converting the respective first electronic signals into different respective third multicarrier electronic signals that each have a portion of the second carrier signals with carrier frequencies in a different respective portion of the frequency band of the second carrier signals. Also, the conversion apparatus includes a combiner for combining the third electronic signals into the second electronic signal. In this embodiment, preferably, the up-converter also includes, an optical transmitter for converting the single second electronic signal into a second multicarrier optical signal.
In a third embodiment, of the up-converter of the invention, the receiving apparatus communicates with respective coaxial cable networks to receive fourth multicarrier electronic signals equal in number to the first plurality of first electronic signals. In this embodiment, the receiving apparatus includes an optical transmitter for converting the fourth electrical signals into respective first multicarrier optical signals and the receiving apparatus includes an optical receiver for converting the first optical signals respectively into the first electronic signals. In this embodiment, the conversion apparatus includes: a frequency converter for converting the respective first electronic signals into different respective third multicarrier electronic signals that each include a portion of the second carrier signals with frequencies within a subband of the second frequency band; and a combiner for combining the third electronic signals into the second electronic signal.
A hybrid cable fiber node of the invention includes: a first connector, a first combiner, a second connector, and an optical transmitter. The first connector connects a plurality of coaxial cable networks to the node. The up-converter receives a plurality of multicarrier first electronic return signals from respective coaxial cable networks. The multicarrier signals each include a multitude of carrier signals modulated by different respective information signals. The frequency of each carrier signal in the same multicarrier signal is mutually different, and the frequencies of the carrier signals of all the first return signals are within the same first frequency band. The up-converter converts the respective first electronic return signals into different respective second electronic return signals. The frequencies of the carrier signals of each second return signal are within a different subband of a second frequency band with a frequency band width that is less than one octave. The first electronic combiner combines the second electronic return signals into a single third electronic return signal with frequencies of carrier signals within the second frequency band. The optical transmitter converts the third electronic return signal into a first optical return signal. The second connector connects a first optical fiber for carrying the first optical signal from the node.
Preferably, the node also includes: a first optical receiver for converting a forward optical signal into a respective electronic forward signal in one or more of the coaxial cable networks; and a diplex filter for separating the first electronic return signals from the electronic forward signals in respective coaxial cable networks and providing the first return signals to the up-converter apparatus. In this case, preferably, the optical receiver and the optical transmitter communicate with the same end of a common optical fiber. Also, preferably, the node further includes: a second optical receiver for converting an optical broadcast signal into an electronic broadcast signal; and second electronic combiner for combining the electronic broadcast signal with each of the electronic forward signals.
A communication system of the invention includes: apparatus for transmitting analog broadcast television from a head-end to customer interface units, apparatus for transmitting forward digital signal for additional services from the head-end to the customer interface units, and apparatus for receiving return digital signals for additional services from the customer interface units into the head end. The apparatus for transmitting analog broadcast television from the head-end to the customer interface units include: a multitude of optical fibers, a gateway, a first modulator, a first combiner, a first optical transmitter, an optical signal router, a multitude of coaxial cable networks, a first receiver, and customer interface units. The gateway provides a plurality of first analog electronic broadcast signals. The first modulator modulates a multitude of first carrier signals with the first electronic broadcast signals. The first combiner combines the modulated first carrier signals into a second multicarrier electronic broadcast signal. The first optical transmitter converts the second broadcast signal into a multicarrier optical broadcast signal. The optical router splits the optical broadcast signal into a plurality of multicarrier optical broadcast nodes signals in respective optical fibers. The system includes a multitude of coaxial cable networks. The first receiver converts the optical broadcast node signals into respective third electronic multicarrier broadcast signals in a respective one of the coaxial cable network. The customer interface units are connected to the coaxial cable networks for receiving the third electronic broadcast signals.
In addition to the multitude of optical fibers, the gateway, the optical signal router, the multitude of coaxial cable networks, the first receiver and the customer interface units, described above, the apparatus for transmitting forward digital signal for additional services from the head-end to the customer interface units, includes: a second modulator, a second combiner, and a second optical transmitter. The gateway provides a multitude of first electronic service signals for computer and telephone communications services, the first electronic service signals being divided into a multitude of destination groups, each destination group including a multitude of information signals for transmission to one or more of the coaxial cable networks. The second modulator modulates groups of second carrier signals with respective groups of first electronic service signals. The second combiner combines the modulated second carrier signals of each group into a respective second multicarrier electronic service signal. The second optical transmitter converts the second service signals into respective multicarrier optical service signals. The optical router multiplexes a plurality of the optical service signals into each fiber of a plurality of common optical fibers for respective fiber-hubs. For each common fiber, the optical service signals in the fiber have different respective optical wavelengths. The optical router also wavelength demultiplexes the plurality of optical service signals from each common optical fiber into respective optical fibers. The first receiver converts the optical service signals in the respective fibers into respective third electronic multicarrier service signals in the coaxial cable networks. The customer interface units receive the third electronic service signals through the coaxial cable networks.
In addition to the a multitude of optical fibers, the gateway , the optical signal router, the multitude of coaxial cable networks, and the customer interface, described above, the apparatus for receiving return digital signals for additional services from the customer interface units into the head end include: an electronic up-converter, a second combiner, a third optical transmitter, a second receiver, and a signal separator. The customer interface provides a multitude of first electronic multicarrier return signals that each include a multitude of third carrier signals that are modulated by different respective information signals. The frequency of the carrier signals in the same multicarrier signal are all mutually different. The frequencies of a plurality of the third carrier signals in any of the first electronic return signals in its respective coaxial cable network are approximately the same as in any other first electronic return signal in another respective coaxial cable network. For all the first electronic return signals, the frequencies of the third carrier signals, are within the same first frequency band. The electronic up-converter converts the first electronic return signals into respective second multicarrier electronic return signals that each include a respective multitudes of fourth carrier signals corresponding to respective third carrier signals. For each second return signal, the multitude of carrier signals have mutually different respective frequencies. The fourth carrier signals are modulated respectively by the same information signals as corresponding third carrier signals. The second combiner combines groups of first electronic return signals into respective third multicarrier electronic return signals. The fourth carrier signals in the third return signals have mutually different respective frequencies which define respective second frequency, bands. The minimum carrier frequency of the second bands is higher than the maximum carrier frequency of the first band. The third optical transmitter converts the multitude of second electronic return signals into respective first multicarrier optical return signals in respective optical fibers. The optical router multiplexes a group of multiple first optical return signals from respective optical fibers into each fiber of multiple common optical fibers, and for each common fiber, the first optical return signals in the fiber have different optical wavelengths. The optical router also wavelength demultiplexes the multiple first optical return signals from each common optical fiber into respective optical fibers. The second receiver converts the first optical return signals into respective third multicarrier return signals. The separator separates each of the fourth carrier signals from each of the third return signals. The demodulator extracts the information signals from respective fourth carrier signals and provides the extracted information signals to the gateway, and the gateway receives the extracted information signals.
A method of providing optical communications of the invention includes: providing an electronic multicarrier communication signal; converting the multicarrier electronic communication signal into a first multicarrier optical communication signal including a multitude of carrier signals modulated by respective information signals, with the frequencies of the carrier signals different from each other and within a first frequency band; and converting the first multicarrier optical signal into a second multicarrier optical signal including a multitude of carrier signals with frequencies in a second frequency band with a minimum frequency of the second frequency band higher than a maximum frequency of the first frequency band.
Preferably, the method also includes providing a third multicarrier optical return signal including a multitude of carrier signals with frequencies in a third frequency band with a minimum frequency higher than a maximum frequency of the first frequency band and a wavelength sufficiently different from a wavelength of the second frequency band, so that, the optical signals can be combined together into one optical fiber and separated by a wavelength division demultiplexer; and combining the second and third optical return signals into the same common optical fiber. Also, preferably, the second and third frequency bands have different non-overlapping frequency ranges, so that, the minimum frequency of any carrier signal in the third frequency band is less than the maximum frequency of any carrier signal in the second frequency band.
Preferably, in the method of the invention, the minimum frequency of carrier signals in the second and third frequency bands are at least 4 times higher than the maximum frequency of the carrier signals in the first frequency band. Also, preferably, the second frequency band extends in a portion of a range of 200 to 900 MHz and the third frequency band extends in a range from 300 to 1400 MHz and the width of the second and third frequency bands are less than an octave. More preferably, the second frequency band extends in a portion of a range of 300 to 800 MHz and the third frequency band extends in a range from 400 to 1300 MHz. Even more preferably, the second frequency band extends in a portion of a range of 350 to 700 MHz and the third frequency band extends in a range from 550 to 900 MHz and the width of the second and third frequency bands are less than an half an octave.
In a system embodiment of the method of the invention, the method includes: providing a respective multitude of customer interface units connected to each of a multitude of coaxial cable networks; generating a first electronic multicarrier signals in each of the coaxial cable networks, using the multitude of the customer interface units connected to each network, with the frequencies of carrier signals of the first electronic signal in each of coaxial network in the same first frequency band; providing one or more hybrid fiber cable nodes; providing one or more optical fibers; converting one or more forward multicarrier optical signals from one of the optical fibers into forward multicarrier electronic signals in the coaxial cable networks; separating the multitude of first electronic signals in the coaxial cable networks into a multitude of separated first electronic signals in the nodes; first converting a first plurality of separated first electronic signals in the nodes into a single second electronic multicarrier signal with frequencies of carrier signals in a second frequency band having a minimum carrier frequency higher than a maximum carrier frequency of the first frequency band and a width of the second frequency band is less than one octave; and second converting the second electronic signal into a first optical multicarrier signal in a first one of the optical fibers, with frequencies of carrier signals in the second frequency band. The system embodiment of the method may further include: third converting a second plurality of separated first electronic signals in the nodes into a single third electronic multicarrier signal with frequencies of carrier signals in a third frequency band having a minimum carrier frequency higher than a maximum carrier frequency of the first frequency band and a frequency band width of less than one octave; and fourth converting the third electronic signal into a second optical multicarrier signal in the first one of the optical fibers, with frequencies of carrier signals in the third frequency band and a light wavelength sufficiently different from a light wavelength of the first optical signal, so that, the first and second optical signals can be separated by a wavelength division demultiplexer.
Preferably, the method of the system embodiment further includes providing a fiber-hub and the first converting includes: third converting the first plurality of separated first electronic signals in the nodes into a corresponding plurality of second optical signals in one or more of the optical fibers, with frequencies of carrier signals in a third frequency band; fourth converting the plurality of second optical signals in the one or more optical fibers into one or more third electronic multicarrier signals in the hub, with frequencies of carrier signals in the third frequency band; and fifth converting the frequencies and combining the carrier signals of the third electronic signals to provide the single second electronic signal. Preferably, in the system embodiment of the method, there are a plurality of nodes and each of the nodes is connected to a single respective coaxial cable network; the third converting uses a respective optical transmitter in each node to provide the second optical signals in different respective optical fibers with frequencies of the carrier signals in the first band; the fourth converting converts each of the second optical signals in a respective optical fiber into a respective third electronic signal with frequencies in the third band; and the frequency ranges of the first and third bands are approximately equal. Also, in the system embodiment of the method preferably, the fifth converting includes: converting the frequencies of carrier signals of the third electronic signals to provide respective fourth electronic signals each with carrier frequencies in a different subband of the second frequency band; and combining the fourth electronic signals into the single second electronic signal.
In a grouping embodiment of the method of the invention, the return signals from respective groups of multiple coaxial cable networks are combined. In that case, the first converting includes: third converting the plurality of separated first electronic signals in the nodes into a plurality of respective third electronic multicarrier signals with frequencies of carrier signals of each third electronic signal in a different subband of a third frequency band having maximum carrier frequency at least equal to the minimum carrier frequency of the first frequency band plus the number of second electronic signals converted into the first optical signal times the width of the first frequency band; and fourth converting the plurality of third electronic signals into the second signal. In this case, preferably, the third frequency band of the third electronic signals has the same frequency range as the second frequency band of the second electronic signals. Also, the first converting includes combining the third electronic signals to form the second electronic signals. Also, preferably, the grouping method further includes providing a fiber-hub and the maximum carrier frequency of the third frequency band is less then the minimum carrier frequency of the second frequency band. Also, the third converting, preferably includes: combining the plurality of third electronic signals into a single fourth electronic signal with frequencies of carrier signals in the third frequency band; fifth converting the fourth electronic signal into a second optical multi-carrier signal in one of the optical fibers with frequencies of carrier signals in the third frequency band; sixth converting the second optical signal in the optical fiber into a fifth electronic signal in the hub, which is approximately a duplicate of the fourth electronic signal; and seventh converting the fifth electronic signal with frequencies of carrier signals in the third frequency band into the second electronic signal with frequencies of carrier signals in the second frequency band.
Other alternatives and advantages of the inventions herein will be disclosed or become obvious to those skilled in the art by studying the detailed description below with reference to the following drawings which illustrate the elements of the appended claims of the inventions.

Figure 1 illustrates portions of a hybrid fiber cable television network of the invention for converting return signals with low carrier frequencies from multiple coaxial cable networks into a single optical signal with high frequency carrier signals.
Figure 2 presents an optical transmitter of the network of figure 1.
Figure 3 illustrates an optical receiver of the network of figure 1.
Figure 4 displays an electronic up-converter of the network of figure 1.
Figure 5 illustrates relations between selected apparatus of a hybrid fiber cable television network of the invention.
Figure 6 shows more details of the head-end of figure 5.
Figure 7 presents an example DWDM fiber-hub of figure 5.
Figure 8 shows an example converting fiber-hub of figure 5.
Figure 9 shows customer interface units of the cable television network of figure 5.
Figure 10 illustrates an embodiment of the conversion apparatus of the invention.
Figure 11 shows another embodiment of the conversion apparatus of the invention.
Figure 12 displays yet another example of the conversion apparatus of the invention.
Figure 13 illustrates an example function of noise due to stimulated Ramon scattering (SRS) in a fiber link depending on radio frequency of the signal.
Figure 14 illustrates a lower frequency portion of the curve of figure 13 to a different scale.

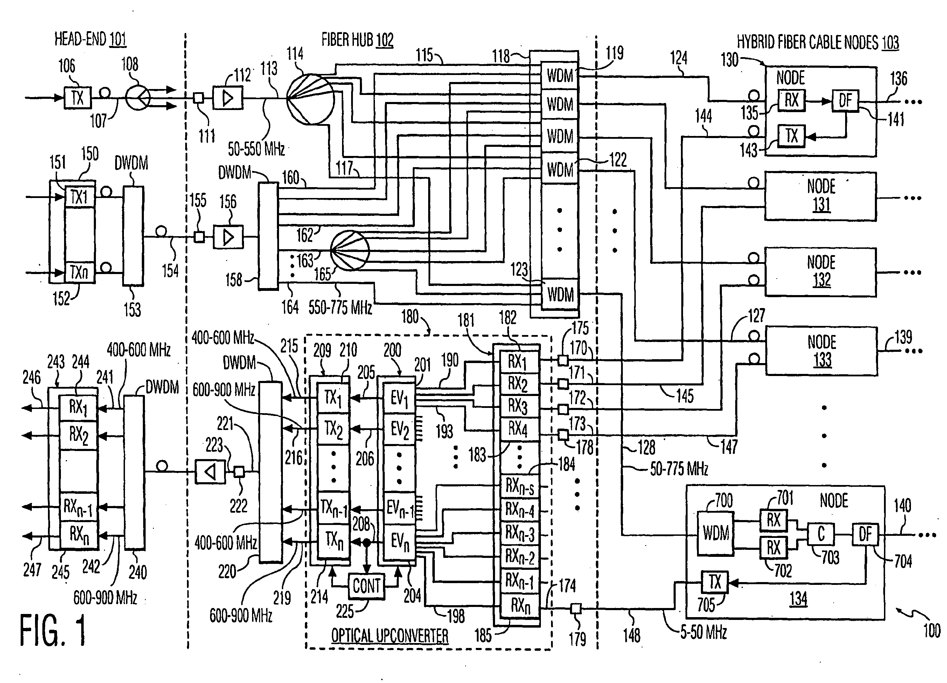

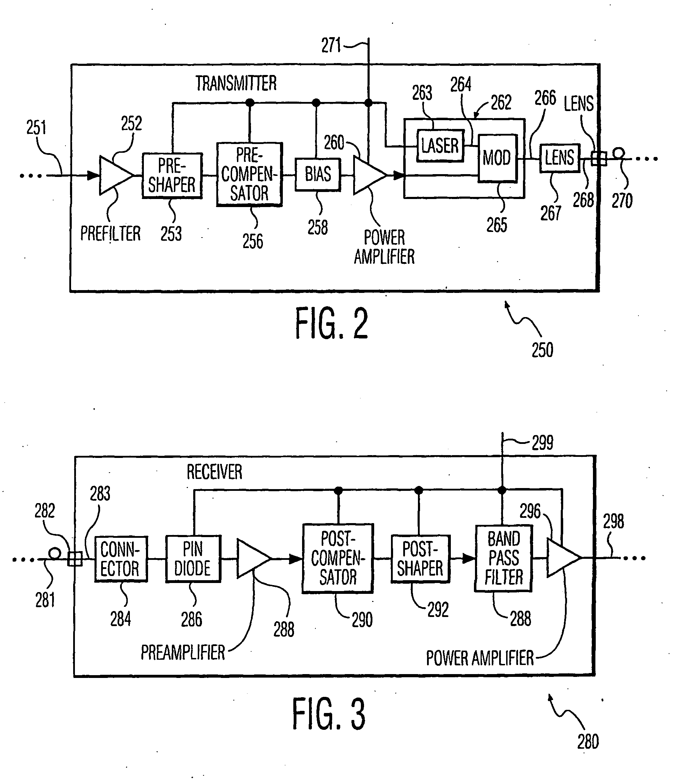

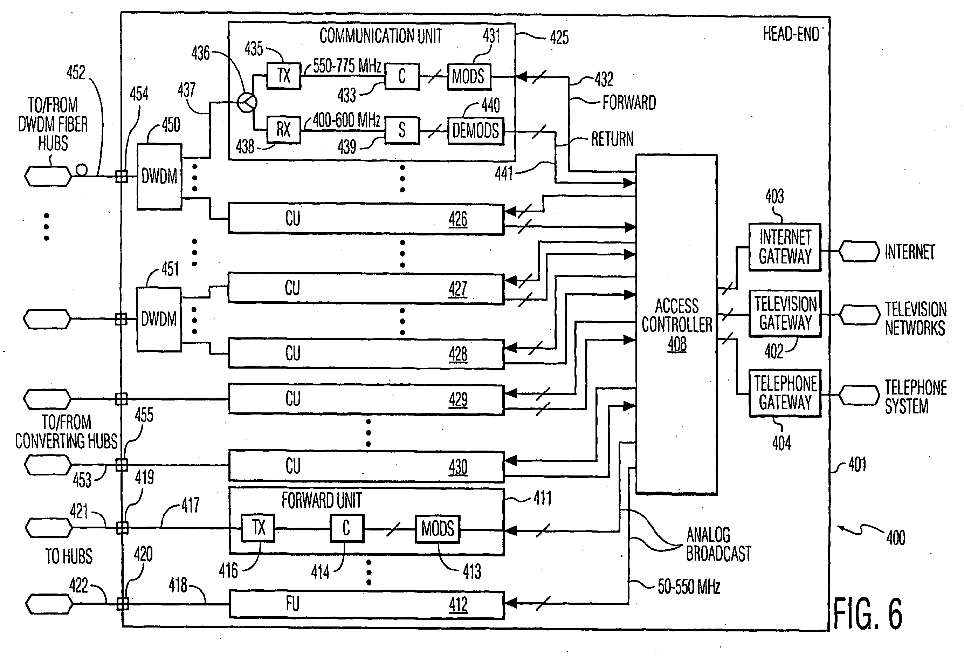

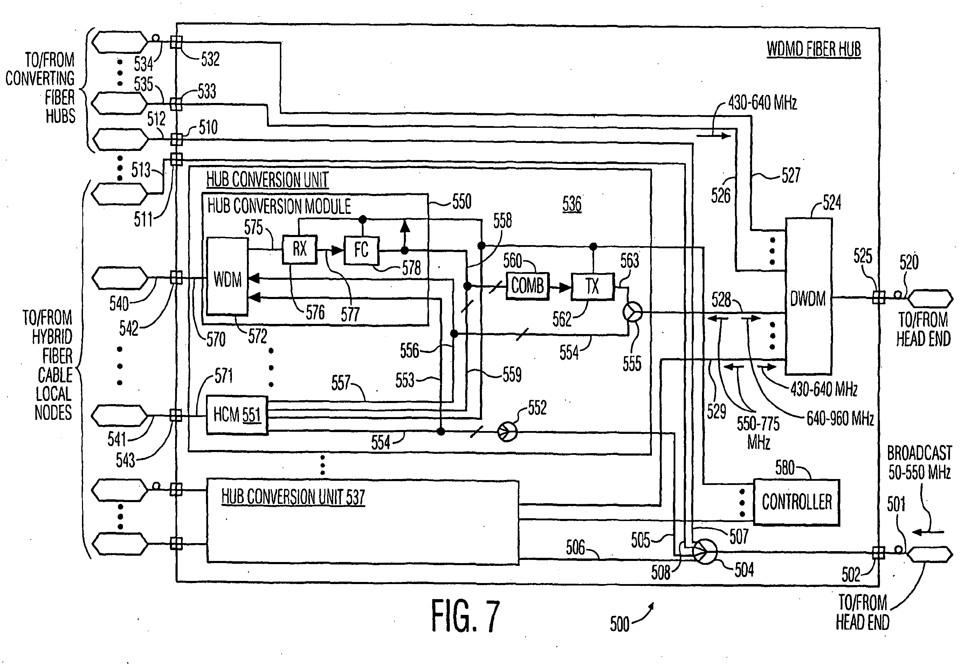

Figure 1 illustrates relevant portions of a hybrid fiber cable television network of the invention. At a head-end 101 (see figure 6), an optical transmitter 106 (see figure 2) converts an electronic multicarrier signal for analog television broadcast, into a optical multicarrier signal in optical fiber 107. Optical splitter 108 splits the optical signal up into a plurality of optical signals in different optical fibers for respective fiber-hubs such as fiber 113. The signal transmitted by transmitter 106 is a conventional analog television broadcast signal typical of cable television systems as described above with a carrier frequency band of nominally 50-550 MHz for NTSC and 65-550 MHz for PAL broadcasts.
Fiber 113 is connected to a fiber-hub 102 (see figure 7) by optical connector 111. An optical amplifier 112 amplifies the broadcast signal in fiber 113. The optical amplifier may be positioned in the head-end, intermediate between the head-end and the fiber-hub, or in the fiber-hub as shown. In the fiber hub, an optical splitter 114 splits the broadcast signal from fiber 113 into a plurality of optical broadcast signals for local nodes and routes the split-up signals into a plurality of respective optical signal paths 115-117, such as optical fibers.
At head-end 101, an array 150 of transmitters 151-152 convert different multicarrier forward signals for digital television broadcasting and other services (e.g. interactive digital television, video conferencing, telephone, internet, other appliances, security services) into multicarrier optical forward signals in respective optical signal paths such as optical fibers. The wavelengths of the optical signals produced by each laser of the array of lasers, are sufficiently different from each other, so that, after the optical signals are combined together into a common optical fiber then they can be reliably and essentially completely recovered separate from each other. A dense wavelength division multiplexer (DWDM) 153 combines the different optical signals from the respective optical paths into a common forward optical fiber 154. Alternately, a multiple-to-one way optical coupler could be used to combine the optical signals from multiple fibers into one fiber, but would not have the side mode rejection and wavelength error rejection of a DWDM as discussed above. The frequencies of the carrier signals transmitted by the transmitters of the array are above 550 MHz and preferably, one or more of the transmitters provide a signal in a band nominally of approximately 550-835 MHz.
Fiber 154 is connected to a fiber-hub 102 by optical connector 155. An optical amplifier 156 amplifies the forward signals in fiber 154. Again, the optical amplifier may be positioned at the head-end, intermediate between the head-end and the fiber-hub, or at the fiber-hub as shown. Alternatively or in addition, optical amplifiers may be positioned in the separate optical paths after DWDM 158 as discussed below. In the hub, DWDM 158 is used to separate the laser beams from common fiber 154 into respective optical signal paths 160-164, such as optical fibers for the forward signals. Signal paths 160-164 are routed to an array 118 of wavelength division multiplexers (WDMs) including one WDM for each forward signal receiver in the hybrid fiber cable nodes (HFCNs) 103 connected to the hub. Also, one of the signal paths 116-117 for the analog broadcast signal may be routed to each WDM in array 118.
Each WDM in array 118, combines the analog broadcast optical signal and one or more forward optical signals into common optical fibers 124-127 for respective forward signal receivers in the HFCNs. Each of the optical signals combined in a WDM must have a different optical wavelength. Preferably, the carrier signals in each of the optical signals combined by the WDMs in array 118 are mutually different, in order to minimize SRS noise and to allow reception by the same photo-detector in the respective HFCN. One or more of the forward digital optical signals may each be routed to multiple WDMs, such as, the digital optical signal (e.g, digital television broadcast) in optical path 163 which is routed through splitter 165 to all of the WDMs of array 118. In addition (not shown), different digital broadcasts may be routed to different WDMs of array 118 to provide multicasting (i.e. different digital television broadcasts to different nodes).

In HFCNs 103, such as HFCN 130, an optical receiver 135 (see figure 3) converts the optical signals in the common optical fiber 124 into electronic signals which are routed through a diplex filter 141 and into a coaxial cable network 136.
In the HFCNs the same photo-detector is used to receive both the optical broadcast signal and one or more of the forward optical signals. This requires that the carrier signal frequencies used in the analog broadcast signal together with the carrier signal frequencies used in the forward digital optical signals be mutually different, so that, the carrier frequencies do not interfere with each other during reception. Commonly, carrier frequencies for NTSC analog broadcasting are nominally in a band of 50-550 MHz with approximately 6 MHz spacing between carrier frequencies and carrier frequencies for PAL analog broadcasting are nominally in a band of 65-550 MHz with approximately 6 MHz spacing between carrier frequencies. A higher frequency range (e.g. nominally 550-750 MHz) is commonly used for carrier signals to modulate the forward digital information signals.
In the system of the invention, the distances that the forward optical signal travels between the head-end and the fiber-hub is much larger than the distances between the fiber-hub and the HFCNs. SRS is minimized in the forward transmission between the head-end and the fiber-hub by separating the optical broadcast signal containing lower frequency carrier signals from the optical forward signals. After the optical broadcast signal and forward optical signals are combined the SRS is minimized by minimizing the distance between the fiber-hub and HFCNs.
In the HFCNs, such as HFCN 130, multicarrier return electronic signals from coaxial cable network 136 are separated from the analog broadcast and forward digital electronic signals by diplex filter 141. Optical transmitter 143 (see figure 2) converts the separated return digital electronic signals into return optical signals and transmits the return optical signals through optical fiber 144. HFCNs 130-134 transmit different respective multicarrier return optical signals in respective return optical fibers 144-148 which are routed back to fiber-hub 102.
The radio frequencies of carrier signals in the return signals in the coaxial cable networks are commonly above 5 MHz and below the lowest carrier frequency of the broadcast signals (below about 50 MHz for NTSC broadcasting or below about 65 MHz for PAL broadcasts). The carrier frequencies in the same coaxial cable network may be separated by 6 MHz as in the broadcast signal or they may be separated by larger or smaller frequency spacing. The optical transmitters such as transmitter 143 use the multicarrier electronic return signals to modulate a laser beam. The transmitter may be a DFB laser directly modulated by using the electronic return signal as the bias current of the laser or the transmitter may have a continuous laser such as a Fabry-Perot laser and an external modulator that is modulated by the electronic return signal.
At fiber-hub 102, return optical paths (170-174) are connected to return optical fibers 144-148 by couplers 175-179. Thus, each optical path 170-174 carries an input light beam modulated by an a multitude of carrier signals modulated by respective base band information signals. Each carrier signal in a light beam having a different radio frequency.
Optical up-converter (180) converts the return light beams in multiple optical paths 170-174 modulated by carrier signals in a lower frequency range into return light beams in optical paths 215-219 modulated by carrier signals in a higher frequency range. That is, each information signal that modulates a carrier signal in optical signal paths 170-174 then modulates a higher frequency carrier signal in optical signal paths 215-219.
In optical up-converter 180, input optical paths 170-174 are divided into groups of 1 to 6 paths such as paths 170-173. The information signals carried by the light beams in a group of multiple input optical paths are all carried in a single return light beam in a single respective output optical path. That is, for example, all the return information signals from HFCNs 130-133, carried in input optical paths 170-173 are all carried in a single output optical path 215 toward head-end 101. More specifically, for example, the return information signals that modulate the carrier signals with frequencies between 5 and 50 MHz in input optical path 170, then modulate carrier signals with frequencies between 400 and 450 MHz in output optical path 215. The return information signals that modulate carrier signals with frequencies between 5 and 50 MHz in input optical path 171, then modulate carrier signals with frequencies from 450 and 500 MHz in output optical path 215. The return information signals that modulate carrier signals with frequencies between 5 and 50 MHz in input optical path 172, then modulate carrier signals with frequencies from 500 and 550 MHz in output optical path 215. The return information signals that modulate carrier signals with frequencies between 5 and 50 MHz in input optical path 174, then modulate carrier signals with frequencies from 550 and 600 MHz in output optical path 215. Thus, four return light beams with information signals that modulate carrier signals with frequencies of 5-50 MHz are converted into a single light beam with the same information signals modulating carrier signals with frequencies of 400-600 MHz. Similarly, the information in 6 light beams with information signals that modulate carrier signals with frequencies of 5-50 MHz are converted into a single light beam with the same information signals modulating carrier signals with frequencies of 600-900 MHz in optical path 219. Both the 400-600 and 600-900 MHz bands are non-overlapping and less than half an octave wide. Using two non-overlapping bans reduces SRS and allows filtering out second order and fourth order distortions.
This arrangement has the advantage that the information signals from the same HFCN can be easily separated from the information signals from other HFCNs in the output optical path because all the signals from the same HFCN are in the same frequency band, for example, the information signals from HFCN 130 in optical path 170 all modulate carrier signals in a single band of 400-050 MHz in optical path 215.
In this system, the return distances between the HFCNs and the fiber-hub are much shorter than the distance between the fiber-hub and the head-end. SRS is minimized in the return transmission between the HFCNs and the fiber-hub by minimizing the distance between the HFCNs and the fiber-hub. The SRS is minimized in the return transmissions between the fiber-hub and the head-end by using higher frequency carrier signals in the optical transmissions from the fiber-hub to the head-end. As explained above, SRS decreases by a factor of 4 when carrier frequency is doubled.
In optical up-converter 180, an array 181 of optical receivers 182-185 (see figure 2) convert a multitude of multicarrier return light beams in respective optical paths 170-174 into a corresponding multitude of electronic return signals in respective input electronic paths or conductors 190-198. Thus, the same information signals that modulate carrier signals that modulate the light beams in input optical paths 170-174, also modulate carrier signals that modulate current (or potential) in input conductors 190-198, the carrier signals having the same frequencies in the input optical paths as in the input conductors. An array 200 of electronic up-converters 201-204 convert the multicarrier electronic return signals in input conductors 190-198, modulated by carrier signals in a lower frequency range, into multicarrier electronic return signals in input conductors 205-208 modulated by carrier signals of a higher frequency. That is, each return information signal that modulates a carrier signal in conductors 190-198, also modulates a higher frequency carrier signal in conductors 205-208.
Input conductors 190-198 are divided into groups of 1 to 6 paths such as input conductors 190-193. All the return information signals carried in the group of multiple input conductors 190-193 are all carried in a single output conductor 205 after the up-converting. More specifically, for example, the return information signals the modulating carrier signals with frequencies between 5 and 50 MHz in input conductor 190, then modulate carrier signals with frequencies between 400 and 450 MHz in conductor 205. The return information signals modulating carrier signals with frequencies between 5 and 50 MHz in input conductor 191, then modulate carrier signals with frequencies from 450 and 500 MHz in input conductor 205. The return information signals modulating carrier signals with frequencies between 5 and 50 MHz in input conductor 192, then modulate carrier signals with frequencies from 500 and 550 MHz in input conductor 205. The return information signals modulating carrier signals with frequencies between 5 and 50 MHz in input conductor 193, modulate carrier signals with frequencies from 550 and 600 MHz in output conductor 205. Thus, four return signals with information signals that modulate respective carrier signals with frequencies of 5-50 MHz are converted into a single return signal with the same information signals modulating carrier signals with frequencies of 400-600 MHz. Similarly, the information in 6 return with information signals that modulate carrier signals with frequencies of 5-50 MHz are converted into a single return signal with the same information signals modulating carrier signals with frequencies of 600-900 MHz.
An array 209 of optical transmitters 210-214 (see figure 3) convert each multicarrier return electronic current signal carrying the higher frequency carrier signals carrying return information signals in conductors 205-208 into a corresponding multicarrier return light beam carrying the same higher frequency carrier signals carrying the same return information signals in respective output optical paths 215-219. Each return light beam in optical paths 215-219 has a different respective optical wavelength with sufficient spacing between the wavelengths for subsequently separating the light beams using a DWDM after they are combined into the same common optical fiber. Preferably, the wavelength of the light beams in paths 215-219 are between 1220 and 1360 nm or between 1480 and 1620 nm.
The optical up-converter 180 also includes DWDM 220 which combines all the optical signals (light beams) in optical paths 215-219 into a single common optical path 221. Output coupler 222 connects common fiber 223 to output optical path 221. Controller 225 controls the conversion of frequencies in electronic up-converters 201-204 and controls the wavelength of laser transmitters 210-214. In addition, (not shown) the controller may control the connections between the optical receivers 182-185 and electronic up-converters 201-204 and/or between electronic up-converters 201-204 and laser transmitters 210-214 in order to provide flexibility and rerouting around failed components such as failed laser transmitters. The controller may control various portions of the receivers end transmitters as described below with reference to figures 2 and 3.
At the head-end, VWDM 240 separates the multiple light beams from common optical fiber 223 and routes a single respective light beam into each one of single optical paths 241-242. An array 243 of receivers 244-245 convert the return light beams in respective optical paths 241-242 into respective electronic return signals in respective optical paths 246-247. The electronic return signals contain the same carrier signals modulated by the same information signals as the respective optical return signals.
Figure 2 illustrates optical transmitter 250 of the invention which converts a multicarrier electronic signal (current and/or potential modulated) into a multicarrier optical signal (frequency or amplitude modulated). In the signal path through transmitter 250, multicarrier electronic signals are received into the transmitter through a transmission line 251. Preshaper 253 changes the relative amplitude of the signals, so that, signals with very high amplitudes are reduced and signals having lower amplitudes are not changed. The preshaper may be a simple truncating of the signal, but more preferably, is a modification of the signals that can be reversed by a postshaper in the receiver discussed below. This preshaping prevents cut-off of higher amplitude negative excursions and distortion of higher amplitude positive excursions. Precompensator 256 compensates for second-order, third-order and possibly higher order distortions, as discussed below due to modulation of the laser beam in a DFB laser, and in transmission of the laser beam through the optical cable, and in receiving the laser beam (conversion from an optic into an electronic signal). The order of the preshaper and precompensator in the transmitter signal path is not critical.
For transmitters using a DFB laser, the electronic signal is used as the bias current for the laser and the signal must be biased, so that, negative excursions are above a positive cut-off current of the laser, but positive excursions are not so high that they become distorted. Biaser 258 biases the signal to convert the signal from a signal with a mean current level of zero to a signal with a positive mean current level. For an externally modulated laser, a biasing circuit may not be required. Power amplifier 260 amplifies the signal to the ideal power level for the particular laser transmitter used for transmission. The power amplifier 260 may include multiple stages (not shown). Biaser 258 and amplifier 260 may be integrated into a single unit. Although a preamplifier stage 252 may be included earlier in the transmitter path, preferably, power amplification is performed after preshaping and precompensation.
Laser package 262 converts a modulated electronic signal into a modulated optical signal with the same modulation as the electronic signal. The laser package may consists of a laser portion 263 a modulator portion 264. For a DFB laser the two portions are integrated into a single solid state device. Alternatively, the two portions may be a continuous laser such as a Fabry-Perot laser and an external modulator, in which case, transmission medium 264 may include an optical lens system and fiber and the laser and modulator may be physically separated by a substantial distance. Optics system 267 directs modulated laser beam 266 into the end of optical fiber 268, and coupler 269 connect between fiber 268 and optical fiber 270.
Preferably, one or more of the components of the transmitter are controlled by control line 271. The optical wavelength of laser 263 must be precisely controlled because of the use of DWDMs in the system of the invention, precompensator 256 may have to be adjusted depending on changes in the length of the fiber through which the optical beam is transmitted and because the distortion properties of the laser may change over time, and power amplifier 260 may need to be adjusted because the output level of the solid state laser may change over time or system requirements may change.
Figure 3 illustrates optical receiver 280 of the invention which converts a multicarrier optical signal (frequency or amplitude modulated) into a multicarrier electronic signal (current and/or potential modulated). The signals are described in more detail below. In the signal path through the optical receiver, optical fiber 281 is connected to optical path 283 (e.g. another fiber) through fiber connector 282. Fiber 283 is connected to photo detector 286 by connector 284. Connector 286 may be a lens system or a direct attachment to the photodetector. The photo detector is preferably, a PIN diode but may alternatively be an avalanche diode or any known apparatus for detecting light. The photo-detector typically modulates current through the photo-detector depending on the modulation of the received multicarrier optical signal. Thus, the modulation of the multicarrier electronic signal is similar to the modulation of the received optical signal. Preamplifier 288 amplifies the electronic signal sufficient for processing the signal.
Postcompensator 290 compensates for second-order, third-order and possibly higher order distortions as discussed below. The distortions are due to pretransmission power amplification transmission from the laser, transmission of the laser beam through the optical fiber, receiving the laser beam (conversion from an optic into an electronic signal) preamplication of the received signal and power amplification of the received signal. Preferably, precompensation at the transmitter compensate for distortion due to pretransmission amplification and conversion of the electronic signal into an optical signal at the transmitter. Its likely that at least some of the optical signals in the system will be split into sub-signals that will travel to different receivers through paths of different length, so that, compensation that depends on fiber length is required at the receiver. Postshaper 292 changes the relative amplitude of the signals, so that, signals with very high amplitudes are increased and signals having lower amplitudes are not changed. Preferably, the postshaping reverses the effects that a preshaper in the transmitter has on the signal. Of course if the preshaper simply truncates the signal then a postshaper would not be useful.
Filter 294 filters out distortion and noise in the signal that is outside the nominal frequency band of the signal. When the frequency band of the carrier signals is less than one octave wide then essentially all the second order distortion can be filtered out and when the frequency band of the carrier signals is less than half an octave wide then essentially all the fourth order distortions can be filtered out. In addition, some of the third order and higher order distortions can be filtered out, and narrowing the band width of the carrier signals increases the effectiveness of the filtering. Also, in the common optical fiber of a DWDM system, there is SRS crosstalk between light beams, which results in noise outside the carrier band of the optical signals which filtering will remove.
Filtering is especially useful when the electronic signals will be combined with other electronic signals that have a different carrier frequency band. For example, in an HFCN, if the analog broadcast signal and the forward digital signal are received by different photo-detectors, then the forward digital signal can be filtered before it is combined with the analog television signal in the coaxial cable network, so as to prevent interference with the analog broadcast signal by distortion and SRS in the forward digital signal.
Power amplifier 296, amplifies the electronic signal for transmission through transmission line 298. Preferably, the power amplifier is located after any postcompensator and postshaper to minimize power loss in those portions of the system.
Preferably, one or more of the components of the receiver are controlled by control line 299. The bias of the photo-detector may have to be adjusted due to changes in the input power of the optical signal or due to degradation of components of the system, precompensator 256 may have to be adjusted depending on changes in the length of the fiber through which the optical beam is transmitted, and power amplifier 298 may need to be adjusted because system requirements may change.

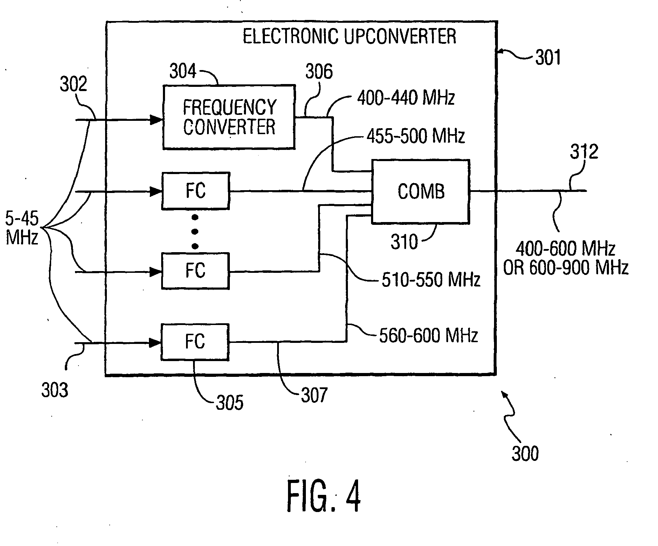

In figure 4, electronic up-converter 300 receives a plurality of first multicarrier electronic signals through transmission lines 302-303 connected to respective frequency changers 304-305 which convert the first multicarrier electronic signals into second multicarrier electronic signals in transmission lines 306-307. Each information signal that modulates one of the carrier signals in the first multicarrier signals is different than any other information signal of the first multicarrier signals, and each such information signal of the first multicarrier signals also modulates a corresponding higher frequency carrier signal in the second multicarrier signals. The carrier frequencies of the first multicarrier signals are all in the same 5-50 MHz frequency band and the carrier frequencies in the second multicarrier signals are all in a higher frequency band. The carrier signal frequencies in each of the first multicarrier signals can be the same as carrier signal frequencies in others of the first multicarrier signals, but each of the carrier signal frequencies in the second multicarrier signals is different from the frequency of any other carrier signal in any other of the second multicarrier signals. Preferably, either the carrier signal frequencies of 4 second multicarrier signals are in a frequency band of 400-600 MHz or the carrier signal frequencies of 6 second multicarrier signals are in a frequency band of 600-900 MHz. Preferably, the carrier frequencies of each of the second signals are in a mutually different portion of the frequency band of either the 400-600 or 600-900 MHz frequency band.
Combiner 310 combines the plurality of second carrier signals in respective transmission lines 307-307 into a single third multicarrier signal with the same carrier frequencies as in the second multicarrier signals in transmission line 312.

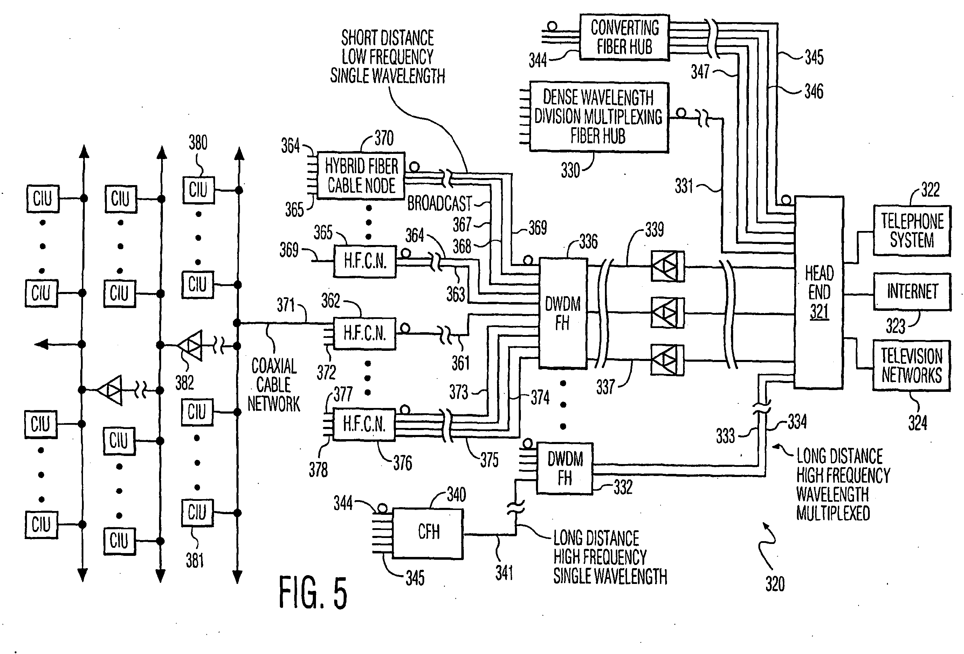

Figure 5 illustrates the cable television system of the invention for providing additional services to customers. Head-end 321 is connected to telephone system 322, computer system 323 (e.g. the internet), and television system 324 (e.g. television networks) for bi-directional communication with each of these systems to provide additional services.
Fiber-hub 330 is connected by single fiber 331 to head-end 321. In this case, the same fiber is used for the analog television broadcasting optical signal, forward digital optical signals, and return digital optical signals. All the carrier frequencies of the digital optical signals are high frequency so cross talk between the digital optical signals and the analog optical signal should be minimized. Cross talk between second order distortions of the digital optical signal and the analog broadcasting signal should be reduced by precompensating the digital signals to minimize distortion due to the laser and optical transmission through the fiber.
Fiber-hub 332 is connected by two fibers 333 and 334 to head-end 321. In this case, fiber 333 carries the analog television broadcast signal and fiber 334 is used for digital optical signals in both the forward and return directions. The wavelengths of two optical signals traveling through the fiber in opposite directions can be the same if sufficient optical isolation is provided for the laser transmitters. The SRS noise resulting in multiple optical signals traveling through a fiber in opposite directions is similar to the SRS resulting in multiple optical signals in the same direction, and is minimized in the invention by using high frequency carrier signals for the return digital signals. Alternatively, each of fiber 333 and 334 can be used as fiber 331 is used as described above, to provide a larger number of digital optical channels while only slightly degrading the analog broadcast optical signal.
Fiber-hub 336 is connected by three fibers 337-339 as described above for figure 1. Fiber 337 is used for analog broadcasting, fiber 338 is used for forward digital optical signals and fiber 339 is used for return digital optical signals. Alternatively, both fibers 338 and 339 can be used for digital optical signals in both the forward and return directions in order to increase the capacity of the system. Larger numbers of fibers can be provided, and preferably, for new installations 8 fibers is preferred with no DWDM (or if required then DWDM installed on only 2 of the fibers), in order to minimize initial cost.
Converting hubs 340 and 344 are similar to the fiber-hub of figure 1. They have an optical up-converter such as 180 of figure 1 except they not have any DWDMs, so that, each forward and return digital optical signal requires a separate fiber. Converting fiber-hubs 340 is connected by fiber 341 to fiber-hub 332. In this case, the same fiber is used for the analog television broadcasting optical signal, a forward digital optical signal, and a return digital optical signal. The analog optical signal and the forward digital optical signal must have different optical wavelengths since they are traveling in the same direction and would otherwise interfere. All the HFCNs connected to converting hub 340, receive the same analog broadcast signal and the same forward digital signal. The optical return signals from all the HFCNs connected to converting fiber-hub 340 are optically up-converted into a single return optical signal. For example, if 6 HFCNs are connected to the converting fiber-hub, then their optical return signals may be up-converted into a single optical signal with carrier signals from 600 to 900 MHz. All the carrier frequencies of the digital optical signals are high frequency so cross talk between the digital optical signals and the analog optical signal should be minimal.
Converting fiber-hub 344 is connected to head-end 321 by fiber 345 for analog broadcasting optical signals and one or more fibers 346-347 for digital optical signals. At least one fiber is required for digital optical signals for each 4 to 6 HFCNs that are connected to a converting fiber-hub.
An optical fiber network connects between each fiber-hub and a respective plurality of HFCNs (e.g. 40), but only a few of the HFCNs connected to fiber-hub 331 are shown to simplify illustration.
HFCN 362 is connected by a single optical fiber 361 to fiber-hub 331. The single fiber is used for the analog broadcast optical signals, forward digital signals, and return digital signals. The fiber is attached to a WDM in the fiber-hub which combines the analog and forward digital signals and separates the return digital signal from fiber 361. Then the optical return signal is routed from the WDM to an optical up-converted and up-converter as described in relation to figure 1.
HFCN 365 is connected with fiber hub 331 by a pair of fibers 363, 364. One of the fibers can be used for analog broadcast signals and forward digital signals and the other used to return digital signals as shown in figure 1. Alternatively, one of the fibers can be used for the analog broadcast signals and the other fiber used for both forward and return digital signals. In that case, return digital optical signals would be routed from the WDMs of array 118 to the optical up-converter. Alternatively, both of the fibers could be used for analog broadcast signals and for both forward and return digital signals as described for fiber 361 above.
HFCN 370 is connected by three fibers 367-369 with fiber-hub 331. One of the fibers can be used for analog broadcast signals, a second fiber can be used for forward digital signals and the third fiber can be used for return digital signals. Alternatively, both the second and third fibers could be used for both forward and return digital signals to provide increased capacity, or all three fibers used for analog broadcast signals and for both forward and return digital signals as described for fiber 361 above.
One or more independent coaxial cable networks is attached to each HFCN but only a small portion of one network attached to HFCN 336 is shown in figure 5 in order to simplify illustration and description. Branching tree-like coaxial cable network 371 connects between HFCN 366 and a plurality of CUIs (e.g. 500) as shown. The network includes bi-directional amplifiers such as amplifier 382 positioned every 300 to 600 meters along the cable in order to amplify the electronic signals in each direction in the coaxial cable network.
Figure 6 illustrates more details of a head-end 400 of a cable television network of the invention in which multicarrier return digital signals have high frequency carrier signals. Television gateway 402 is connected to a plurality of programming providers to receive television programs for analog broadcasting, digital broadcasting (e.g. pay per view), private interactive viewing, and for transmitting video programming signals produced by customers in the cable television system out of the system. Internet gateway 403 is connected to the internet for high speed transmission and reception of computer data which may include internet pages, digital pictures, digital video data, video conferencing, digital audio files and other types of data. Telephone gateway 404 is connected to the telephone system, so that, telephone service can be provided through the cable television network. Access controller 408 is connected to each of the gateways to route signals between the gateways and other portions of the cable television system.
Base-band analog television broadcast electronic signals travel from the access controller though a multi-conductor cable to forward units 411 and 412. Each channel of programming is provided with a different respective conductor in the cable. The forward units convert the electronic baseband television signals into optical multicarrier signals. Only the details of one of the forward units is shown in order to simplify illustration and description. Modulators 413 use the baseband electronic signals to modulate respective carrier signals having mutually different respective radio frequencies in order to provide modulated carrier signals. The modulated carrier signals are combined by combiner 414 to form a multicarrier television broadcast electronic signal. Transmitter 416 uses the multicarrier signal to modulate a laser beam to form an analog optical signal for television broadcast in optical path 417. Optical couplers 419, 420 connect respective optical paths 417, 418 to respective optical fibers 421, 422.
Communication units 425-430 convert forward digital electronic signals into forward digital optical signals and convert return digital optical signals into return digital electronic signals.
Only the details of communication unit (CU) 425 is shown for simplifying illustration and description. The details of the other CUs are similar and may be identical. Modulator 431 receive a plurality of digital baseband signals in respective conductors of cable 432 routed from access controller 408. Preferably, the digital baseband signals are multilevel quadrature phase shift keyed (QPSK) signals such as 16, 64, or 256 QPSK signals. The baseband signals are used to modulate respective carrier signals of different respective frequencies (e.g. 550 to 835 MHz). Combiner 433 combines the modulated carrier signals to form a forward multicarrier digital signal. In transmitter 435, multicarrier signal is used to modulate a laser beam to form a forward multicarrier digital optical signal. Coupler 436 routes the forward optical signal from the transmitter into common optical path 437, and routes a return multicarrier digital optical signal from common optical path 437 to optical receiver 438. The receiver converts the optical return signal into an electronic return signal. Separator 439 separates (tunes) each of the modulated carriers into separate conductors and demodulator 440 converts the modulated carrier signals into a baseband signals in separate conductors of cable 441 which routes the baseband signals to access controller 408.
For optical signals between the head-end and a respective DWDM fiber-hub, the optical signals are routed through DWDMs 450, 451 which combine the forward optical signals from each respective CU traveling to the fiber-hubs and which separate the return optical signals from the fiber hubs for each respective CU.
The optical signals travel between the head-end and the fiber-hubs (DWDM fiber-hubs and converting fiber-hubs) through optical fibers 452-453 which are connected to the head-end by optical couplers 454-455.
In Figure 7, a DWDM fiber-hub 500 of the invention receives analog broadcast television signals from optical fiber 501 through coupler 502 to optical splitter 504 which provides approximately equal portions of the analog broadcast optical signal through paths 505-506 for each of one or more hub conversion units (HCUs) 536-538 and through paths 507-508 that are connected by optical connectors 510-511 to optical fibers 512-513 for each of one or more conversion fiber-hubs that are connected to the DWDM fiber-hub.
DWDM fiber-hub 500 is connected to the head-end by a common optical fiber 520 for the hub, which is connected to DWDM 524 by optical connector 525. A multitude of forward digital multicarrier optical signals with mutually different respective optical wavelength are routed through optical fiber 520, and a multitude of return digital multicarrier optical signals with mutually different respective optical wavelength are routed through common optical fiber 520 between the DWDM fiber-hub and the head-end. A multitude of optical paths 526-529, connected to DWDM 524, each carry optical signals of a single wavelength, the single wavelength of each of the paths being different than the wavelength of any other of paths 526-529. Each path carries a forward and/or a return multicarrier digital optical signals with the same optical wavelength. One or more of paths 526-527 are connected by respective connectors 532-533 to respective optical fibers 534-535 for one or more converting fiber-hubs connected to DWDM fiber hub 500. One of more of paths 528-529 are connected to respective hub conversion units (HCUs) 536=537. Respective optical connectors 540-541 connect HCUs 536-537 to optical fibers 540-541 which extend to respective HFCNs. The HCUs up-convert return optical signals from the HFCNs with lower frequency carrier signals into return optical signals with higher frequency carrier signals.
In describing the HCUs, only the details of HCU 536 will be described in order to simplify illustration and description. The other HCUs are similar and may be identical. HCU 536 contains multiple hub conversion modules (HCMs) 550-551 that convert return optical signals with lower frequency carrier signals from the HFCNs into electronic signals with higher frequency carrier signals. The HCMs also route forward optical signals (analog and digital) to corresponding HFCNs. In HCU 536, optical splitter 552 splits the analog broadcast optical signal in path 505 into approximately equal portions which are routed through optical paths 553-554 respectively to HCMs 550-551. Similarly, optical splitter 555 splits the forward digital optical signal in optical path 528 into approximately equal portions which are routed through optical paths 556-557 to each respective HCM. Forward multicarrier electronic signals from respective HCMs are routed through electrical conductors 558-559 to combiner 560 which combines all the electronic signals for the HCU into a single forward multicarrier electronic signal. Transmitter 562 modulates a laser beam with the single multicarrier electronic signal to produce a forward multicarrier optical signal in optical path 563. Optical splitter 555 routes the return multicarrier optical signal for the HCU from optical path 563 into optical path 528.
In describing the HCMs, only the details of HCM 550 will be described in order to simplify illustration and description. The other HCMs are similar and may be identical. In HCM 550, WDM 572 routes the return optical signal from common optical path 570 to optical path 575. Receiver 576 converts the return optical signal in optical path 575 into a return input electronic signal in electrically conductive path 577. Frequency converter 578 converts the return input electronic signal in conductive path 577 into a return output electronic signal in electrically conductive path 558. The return input electronic signal having a multitude of carrier signals of mutually different frequencies and the return output electronic signal having a corresponding multitude of carrier signals of higher frequency than the return input electronic signal. The carrier signals of the return output electronic signal are modulated by the same return information signals as the carrier signals of the return input electronic signal. Controller 580 controls receiver 576 frequency converter 578 and transmitter 562 as previously described for controller 225 with reference to figures 1-3.

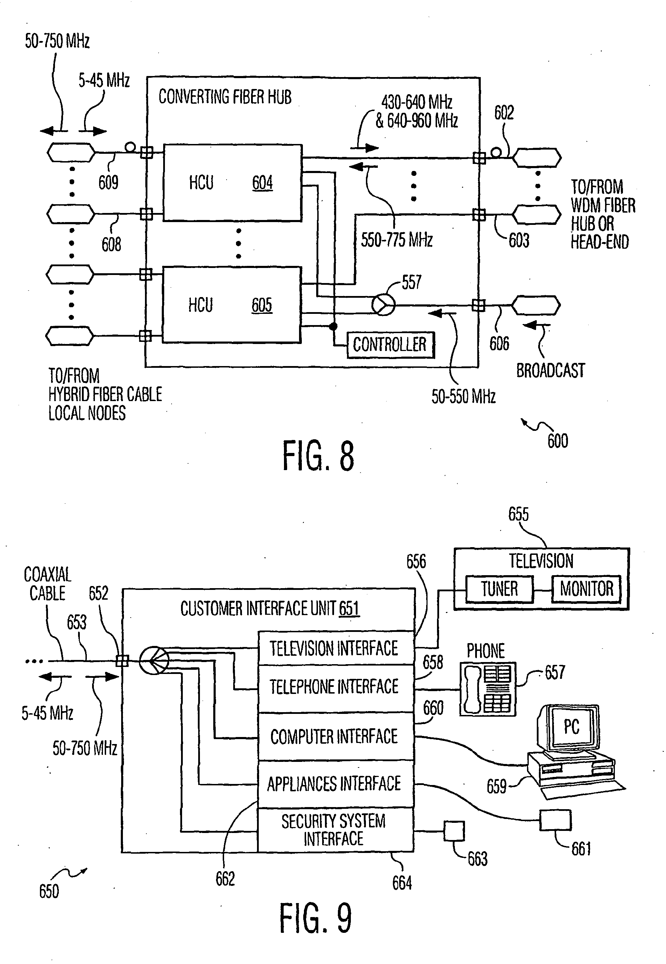

Figure 8 illustrates a converting fiber-hub 600 which is similar to the DWDM fiber-hub of figure 7, but has no DWDM, so that, separate fibers 602-603, extending between the converting fiber node and the head-end (or a DWDM fiber node), are required for each respective HCU 606-608. HCUs 606-608 are similar to HCU 536 of figure 7 and needs no further description. Optical fiber 606 carries forward analog broadcast signals which are separated into multiple signals for respective HCUs by splitter 607. One or more optical fibers 608-609 extend between the converting fiber node and respective HFCNs.
Figure 9 illustrates an example of the customer interface 650 of the system of the invention. Customer interface unit (CIU) 651 is connected through coupler 652 to a coaxial cable 653 of a coaxial cable network of the cable television system of the invention. The CIU includes an interface for television and other interfaces for various other services provided through the cable television system in addition to broadcast television. Television equipment 655 (e.g. a television network with televisions, DVD recorder/players, audio equipment, video conferencing equipment) is connected to television interface 656. Telephone equipment 657 (a telephone network with telephones) is connected to telephone interface 656. Computer equipment 659 (e.g. personal computer, printer, scanner) is connected to a computer interface 660. Appliances 661 (e.g. oven, range, refrigerator, microwave, sprinkler system, heating and air conditioning) are connected to appliances interface 662. Security equipment 663 (continuity loops, motion detectors, electromagnetic beams, light detectors) are connected to the security interface 663.

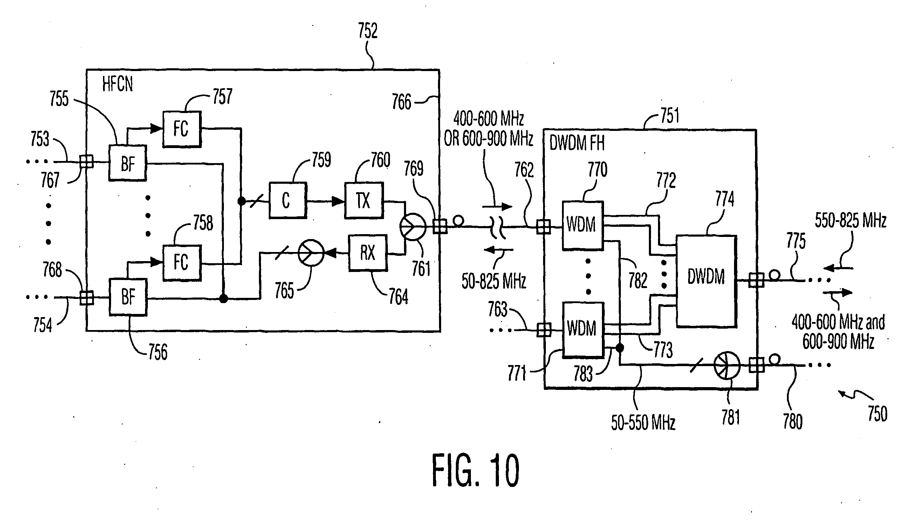

Figures 10-12 illustrate alternative embodiments of portions of the cable television system of the invention. In general, only the differences between these alternative embodiments and the embodiment shown in Figures 1-8 will be discussed. Generally, in newly installed systems, preferably, each HFCNs will have one coaxial cable network attached thereto, but as systems are upgraded, different configurations will emerge. The example embodiments were selected to show a variety of different configurations to illustrate the wide applicability of the inventions herein.
In figure 1, HFCN 134 includes a WDM 170 to separate the analog broadcast optical signal from the forward digital signal. Separate receivers 171 and 172 are used for each respective signal to convert the optical signals to electronic signals. Separate receivers allows post-processing the forward digital electronic signal before it is combined with the analog broadcast electronic signal. The post-processing may include shaping, post-distortion, and/or filtering e.g. filtering out of some of the distortions in the forward digital signals, so as to reduce noise in the analog broadcast signal. Essentially all second order distortions could be filtered out, if the range of carrier signal frequencies in each separated beam carrying the forward signals, is limited to less than an octave (e.g. 550-1100 MHz). More preferably, two light beams for forward digital signals are each limited to carrier frequency ranges of less than half an octave, so that, essentially all 4th order distortions could be filtered out (e.g. 550-835 MHz and 835-1260 MHz). Also, the narrower the carrier frequency band, the more third order distortions and higher order distortions can be filtered out. After post-processing combiner 703 combines the analog broadcast signals and forward digital signals into coaxial cable network 140.
In figure 10, DWDM fiber-hub 751 is similar to the one shown in figure 7, but does not contain any optical up-converter since in this case, HFCN 752 up-converts the electronic return signals returned from the CIUs from a multicarrier signal with lower frequency carrier signals to a multicarrier signal with higher frequency carrier signals. Each return electronic signal is received by the HFCN with carrier frequencies in a bandwidth of 5-50 MHz and the HFCN converts the return signal, so that, the carrier frequencies are in a bandwidth of 400-600 MHz or 600-900 MHz. Preferably, in this case, multiple coaxial cable networks 753-754 may be connected to each HFCN node, so that, the 400-600 or 600-900 MHz bandwidth can be more fully utilized. This is especially useful for upgrading the nodes.
Respective diplex filters 755-756 separate the 5-50 MHz return electronic signals from the 50-835 MHz forward signals in respective coaxial cable networks. Frequency converters 757-758 convert the 5-50 MHz signals into electronic return signals with carrier frequencies in a band of 400-600 MHz or 600-900 MHz (HFCNs convert the signals to a 400-600 MHz band for some HFCN transmitters and convert the signals to a 600-900 MHz band for other HFCN transmitters so that, in the common optical fiber, crosstalk will be minimized). The return signals from each frequency converter are combined by combiner 759. The frequency of each carrier signals is different than the frequency of any other carrier signal in the up-converted signals that are combined by combiner 759. The up-converted return multicarrier electronic signal is converted into a return optical signal by transmitter 760 (see figure 2) and routed by optical splitter 752 into common optical fiber 762.
Forward multicarrier optical signals in common optical fiber 762 are routed by splitter 761 to receiver 764 (see figure 3) which converts the forward optical signals into a forward multicarrier electronic signal. Signal splitter 765 routes the same forward signal to each respective coaxial cable network. There are many more channels available in the forward digital electronic signal then in the return digital electric signal for a coaxial cable network, so that, the same forward digital signal may be shared by multiple coaxial cable networks.
In DWDM fiber node 751, return digital optical signals are routed through WDMs 770-771, optical paths 772-773, and DWDM 774 to common fiber 775. Forward digital optical signals from the head-end are routed from common fiber 775 through DWDM 774, through optical paths 772-773, through WDMs 765-766 into common fibers 762-763. The forward and return optical signals for the HFCN may have different optical wavelengths in which case two optical paths between DWDM 774 and WDM 770 is required, or preferably, the same optical wavelength is used for the forward and return digital optical signal, so that, only one optical path is required as shown in figure 7. Forward analog broadcast signals are routed from fiber 780, through splitter 781, through separate optical paths 782-783 to WDMs 770-771 and through common optical fiber 762 to HFCN 752.

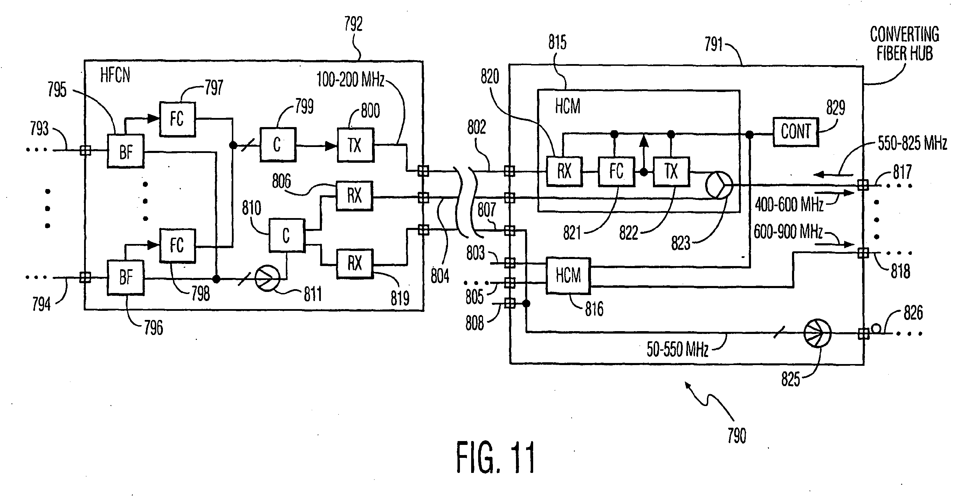

In figure 11 converting fiber-hub 791 is similar to the one shown in figure 8, and HFCN 792 is similar to the one shown in figure 10, except that separate fibers for forward analog, forward digital, return digital optical signals are provided between the converting fiber-hub and the HFCNs. In this example embodiment, frequency conversion occurs in both the HFCN and in the fiber-hub, so that, one transmitter in the HFCN can transmit return signals from multiple coaxial cable networks.
In HFCN 792, respective diplex filters 795-796 separate the 5-50 MHz return electronic signals from the 50-835 MHz forward signals in respective coaxial cable networks 793-794. The carrier frequencies in return signal of each of the coaxial cable networks are the same, so that, the signals can not be directly combined. Frequency converters 797-798 convert the 5-50 MHz signals into electronic return signals with different carrier frequencies, for example, the return information signals from each coaxial cable network modulate carrier signals with frequencies in different respective portions of a band of 100-200 MHz. This allows a simple low frequency up-converter to be used in the HFCNs. The return signals from each frequency converter are combined by combiner 799. The frequency of each carrier signals is different than the frequency of any other carrier signal in the up-converted signals that are combined by combiner 799. The up-converted return multicarrier electronic signal is converted into a return optical signal by transmitter 800 (see figure 2) and routed by optical splitter 792 into a separate optical fiber 802.
Forward digital optical signals in separate optical fiber 804 are routed to receiver 806 (see figure 3) which converts the forward digital optical signal into a forward digital electronic signal. Forward analog optical signals in separate optical fiber 807 are routed to another receiver 809 which converts the optical signals into forward analog electronic signals. The forward digital signals and the forward analog signals are combined by combiner 810 and the combined forward signal is routed to signal splitter 811 to provide the same forward signal to each respective coaxial cable network. Preferably, the carrier signals in forward digital electronic signals are in a frequency band which is less than an octave (e.g. 550-1100 MHz), so that, essentially all the second order distortions and some higher order distortions can be filtered out in receiver 806. More preferably, if the band of the carrier frequencies of the forward digital signal is less than half an octave then essentially all the second and forth order distortions can be filters out along with more of the third order and higher order distortions.
In converting fiber node 791, input return optical signals in separate fibers 802-803 are routed to similar respective hub conversion modules (HCMs) 815-816. Forward and return optical signals travel between the HCMs and the head-end (or a DWDM fiber-hub) through optical fibers 817-818. These HCMs are similar to the HCMs of the DWDM fiber-hub of figure 7 and only the differences will be discussed in detail. HCMs 815-816 may be identical and only HCM 815 will be described.
In HCM 815, receiver 820 (see figure 3) converts the input return optical signal to an input return electronic signal. The input return electronic signal is routed to frequency converter 821 which converts the input return electronic signal into an output electronic return signal with higher frequency carrier signals than the input return signal. For example, input return signals with a carrier frequency band of 100-200 MHz are converted to output return signals with a carrier frequency band of 400-600 MHz for some HCMs and 600-900 MHz for other HCMs. The output return electronic signal is routed to transmitter 822 (see figure 2) which converts the output return electronic signal to an output return optical signal. Splitter 823 routes the output return optical signal into common fiber 817 and routes the forward digital signal from common fiber 817 into fiber 804. Controller 829 controls receiver 820, frequency converter 821 and transmitter 822 as previously described for controller 225 with reference to figures 1-3.
In DWDM fiber-hub 791, splitter 825 routes the forward analog optical signal from common optical fiber 826 to multiple optical fibers 807-808 which are connected to respective HFCNs. Controller 829 is connected to receive the output (and possibly also the input) return electronic signal from each HCM and to control the apparatus of each HCM. For HCM 815, controller 829 is connected to receiver 820 as described for figure 2, is connected to frequency controller 821 to control the frequency conversion of each carrier signal, and is connected to transmitter 822 as described for figure 3.

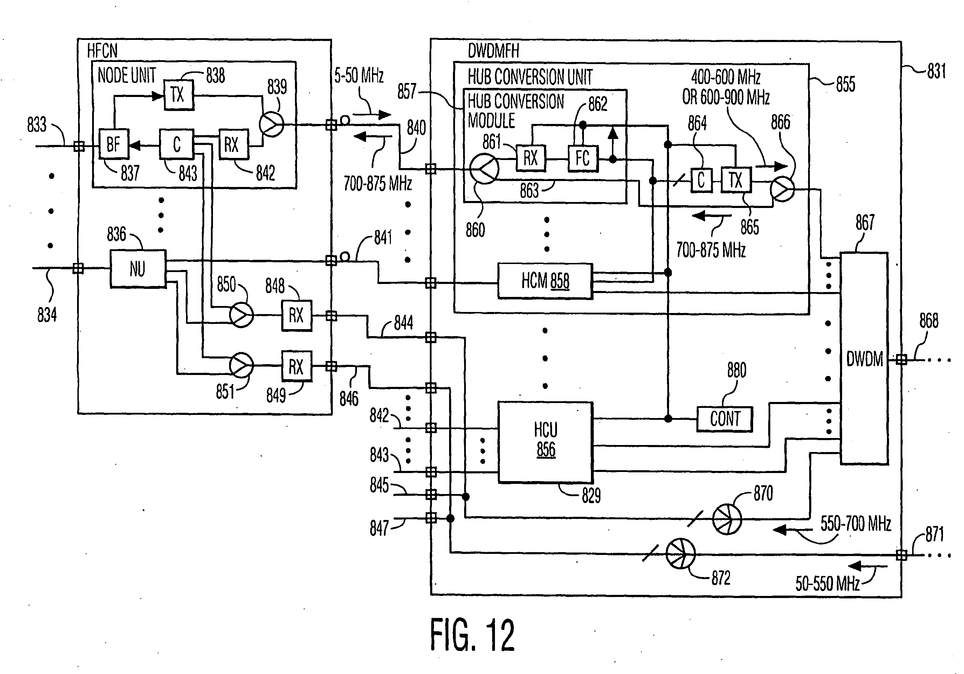

In figure 12, DWDM fiber-hub 831 is similar to the DWDM fiber-hub shown in figure 7, except that the forward analog optical signal is not routed to the HCUs and then to the HCMs for combination with the forward digital signal in common optical fibers routed to respective HFCNs as in figure 7. In figure 12, the forward analog signal travels from hub 831 through respective separate optical fibers to each respective HFCN. Thus, the requirement for a WDM in each HCM is eliminated.
Also, HFCN 832 is similar to HFCN 130 in figure 1, except for a few notable differences. The apparatus of HFCN 130 in figure 1 is included in node units which are multiplied in HFCN 832 of figure 12 to provide for multiple coaxial cable networks connected to the same HFCN. Although multiple coaxial cable networks for each HFCN is not preferred for initial installations, this may be a desirable upgrade path, and is included to generalize the discussion. The forward analog optical signal is routed to the HFCN in a separate optical cable, thus requiring an additional optical receiver and splitter in the HFCN and a combiner for each respective coaxial cable network. Also, in addition to the forward digital signal for additional services, another separate forward signal is routed through a separate optical fiber for forward digital broadcast television. Providing separate optical signals for digital broadcast and digital signals for additional services allows more capacity and or provides a narrower signal band in the forward signals for improved filtering of distortions.
In HFCN 832, respective similar node units (NUs) 833- 834 receive different respective 5-50 MHz return digital electronic signals from different respective coaxial cable networks 833-834. The node units may be identical and only node unit 835 will be discussed. Diplex filter 837 separates the return electronic signals with carrier frequencies in a band of 5-50 MHz from the forward electronic signal in bands of 50-875 MHz. Transmitter 838 (see figure 2) converts the return electronic signal to a return optical signal. Optical splitter 839 routes the return digital optical signal into common optical fiber 840 and routes a forward digital optical signal for other services from common optical fiber 840 to receiver 842 (see figure 3) which converts the forward optical signal to a forward digital electronic signal for other services. Combiner 843 combines into the coaxial cable network, the forward digital signal for other services along with a forward digital television broadcast signal and a forward analog television broadcast signal discussed below. The digital and analog forward broadcast optical signals are transmitted to HFCN 832 through respective optical fibers 844 and 846; converted from optical signals to respective electronic signals by respective receivers 848 and 849; and routed through splitters 850 and 851 and each to multiple NUs 835-836.
Forward and return digital optical signals for additional services are routed through optical fibers 840-843 between the HFCNs and similar respective hub conversion units (HCUs) 855-856 of DWDM fiber-hub 831. The HCUs may be identical and only the details of HCU 855 will be described. For HFCN 832, forward and return signals for additional services are routed through respective optical fibers 840-841 between NUs 835-836 and similar respective hub conversion modules (HCMs) 857-858 of HCU 855. Again, the HCMs may be identical and only details of HCM 857 will be described. In HCM 857, optical splitter 860 routes the forward optical signal in fiber 840 to receiver 861 (see figure 3) which converts the forward optical signal into a input electronic signal. Frequency converter 862 converts the input electronic signal with carrier frequencies in a band of 5-50 MHz to an output electronic signal with carrier frequencies in a higher frequency band (e.g. 400-450 MHz) as described above for frequency converter 304 in figure 4. A forward optical signal for additional services in optical path 863 is also routed by splitter 860 to fiber 840 for transmission to NU 835 of HFCN 832 as described above.
In HCU 855, the output return electronic signals from HCMs 857-858 are routed by combiner 864 to transmitter 865 which converts the combined return electronic signals into an optical return signal. The optical return signal for HCU 855 is routed through optical splitter 866 and further routed through DWDM 867 to common optical fiber 868. Forward optical signals for additional services are routed from common fiber 868 through DWDM 867 to the HCMs in HCUs 855-856. In HCU 855, the forward optical signal for additional services is routed through splitter 866 to optical path 863. The forward optical signals for additional services for the other HCMs of HCU 855 are routed directly to the respective HCM (no splitter is required).
In DWDM fiber-hub 831, the forward digital broadcast optical signal is routed from fiber 868 through DWDM 867 and through splitter 870 to optical fibers 844-845. The forward analog broadcast optical signal from optical fiber 871 is routed through splitter 872 to optical fibers 846 and 847. Controller 880 is connected to receive the output (and possibly also the input) return electronic signal from each HCM and to control the apparatus of each HCM. For HCM 855, controller 880 is connected to receiver 861 as described for figure 2, is connected to frequency controller 862 to control the frequency conversion of each carrier signal, and is connected to transmitter 865 as described for figure 3.
The invention has been disclosed with reference to specific preferred embodiments, to enable those skilled in the art to make and use the invention, and to describe the best mode contemplated for carrying out the invention. Those skilled in the art may modify or add to these embodiments or provide other embodiments without departing from the scope of the invention. The scope of the invention is not limited to the embodiments, but lies in each and every novel feature or combination of features described above and in every novel combination of these features. Thus, the scope of the invention is only limited by the following claims.

## Claims

1. An up-converter, comprising:
receiving means (302-303) for receiving a first plurality of first electronic multicarrier signals, each including a multitude of first carrier signals modulated by different respective information signals, the frequencies of the first carrier signals in the same electronic multicarrier signal being all different, the frequencies of a plurality of the first carrier signals of different first electronic multicarrier signals being approximately the same, the first carrier signals of each first electronic multicarrier signal being within the same first frequency band; **characterised by**:
conversion means (304-305, 310) for converting and combining the respective first electronic multicarrier signals into a second single electronic multicarrier signal including a multitude of second carrier signals of mutually different respective frequencies and modulated respectively by the same information signals as the first carrier signals, the frequency of each of the second carrier signals being within a second frequency band, the minimum carrier frequency of the second band being at least 2 times higher than the maximum carrier frequency of the first band; and
transmission means (312) for transmitting the second single electronic multicarrier signal.

2. The up-converter of claim 1, being adapted so that:
the information signals of each first signal modulate respective second carrier signals with frequencies within a different subband of the second frequency band;
the frequency bandwidth of the first frequency band is more than an octave;
the frequency bandwidth of the second frequency band is less than an octave, preferably less than half an octave;
the minimum frequency of the second band is more than approximately 6 times higher than the maximum frequency of the first band;
the maximum frequency of the first frequency band is below 100 MHz and the minimum frequency of the second band is above 200 MHz;
the maximum frequency of the first frequency band is below approximately 65 MHz and the minimum frequency of the second band is above approximately 400 MHz; and/or
the maximum frequency of the first frequency band is approximately above 5 MHz and approximately below 65 MHz, and the first bandwidth is more than 3 octaves, and the minimum frequency of the second band is approximately above 400 MHz and approximately below 650 MHz, and the second bandwidth is less than half an octave.

3. The up-converter of claim 1, in which:
the receiving means (753-754) is for communicating with respective coaxial cable networks to receive the first plurality of first electronic multicarrier signals;
the conversion means includes electronic frequency converters (757-758) for converting the respective first electronic multicarrier signals into different respective third electronic multicarrier signals, each including a portion of the second carrier signals with frequencies within a subband of the second frequency band; and a combiner (759) for combining the third electronic multicarrier signals into the second electronic multicarrier signal; and
the up-converter further comprises an optical transmitter (760) for converting the second single electronic multicarrier signal into a first optical multicarrier signal.

4. The up-converter of claim 1, in which:
the up-converter further comprises an optical transmitter (800) for converting the single second electronic multicarrier signal into a first optical multicarrier signal; and
the conversion means includes:
first frequency converters (797, 798) for converting the respective first electronic multicarrier signals into different respective third electronic multicarrier signals, each including a multitude of third carrier signals, the frequencies of the third carrier signals of each third electronic multicarrier signal being within a different subband of a third frequency band, the maximum frequency of the third frequency band being at least approximately the minimum frequency of the first frequency band plus the frequency bandwidth of the first frequency band times the number of first electronic multicarrier signals in the first plurality of signals;
a combiner (799) for combining the third electronic multicarrier signals into a fourth single electronic multicarrier signal with third carrier signals in the third frequency band;
first optical transmitter (800) for converting the fourth single electronic multicarrier signal into a first optical multicarrier signal;
an optical receiver (820) for converting the first optical multicarrier signal into a fifth electronic multicarrier signal;
a second converter (821) for converting the fifth electronic multicarrier signal into the second single electronic multicarrier signal with second carrier signals in the second frequency band, the minimum frequency of the second frequency band being higher than the maximum frequency of the third frequency band; and
a second optical transmitter (822) for converting the second single electronic multicarrier signal into a second optical multicarrier signal.

5. The up-converter of claim 1, in which:
the receiving means (302-303) includes a plurality of optical receivers (182-183) for converting respective first optical multicarrier signals into the first plurality of first electronic multicarrier signals;
the conversion means includes: frequency converters (304-305) for converting the respective first electronic multicarrier signals into different respective third electronic multicarrier signals, each having a portion of the second carrier signals with carrier frequencies in a different respective portion of the frequency band of the second carrier signals; and a combiner (310) for combining the third electronic signals into the second electronic multicarrier signal; and
the up-converter further comprises an optical transmitter (210) for converting the second single electronic multicarrier signal into a second optical multicarrier signal.

6. The up-converter of claim 1, in which:
the receiving means are for communicating with respective coaxial cable networks (833-834) to receive fourth electronic multicarrier signals equal in number to the first plurality of first electronic multicarrier signals;
the receiving means includes optical transmitter means (838) for converting the fourth electronic multicarrier signals into respective first optical multicarrier signals;
the receiving means includes optical receiver means (861) for converting the first optical multicarrier signals respectively into the first electronic multicarrier signals;
the conversion means includes: frequency converter (862) for converting the respective first electronic multicarrier signals into different respective third electronic multicarrier signals, each including a portion of the second carrier signals with frequencies within a subband of the second frequency band; and a combiner (864) for combining the third electronic multicarrier signals into the second electronic multicarrier signal; and
the up-converter further comprises an optical transmitter (865) for converting the single second electronic multicarrier signal into a second optical multicarrier signal.

7. The up-converter according to claim 1, wherein
the up-converter (201 - 204) is configured to up-convert a first carrier of the first frequency band so that the first carrier, once modulated, occupies a first sub-band of the first frequency band, and to up-convert a second carrier of the first frequency band so that the second carrier, once modulated, occupies a second sub-band of the first frequency band, where the bandwidth of the first sub-band is greater than one octave, and the bandwidth of the second sub-band is less than one octave.

8. The up-converter according to claim 7, wherein
the up-converter (201 - 204) is configured to up-convert a first carrier of the first frequency band so that the first carrier, once modulated, occupies a first sub-band of the first frequency band, and to up-convert a second carrier of the first frequency band so that the second carrier, once modulated, occupies a second sub-band of the first frequency band, where the bandwidth of the first sub-band is greater than three octaves, and the bandwidth of the second sub-band is less than one half of an octave.

9. The up-converter according to claim 8, wherein
the up-converter (201 - 204) is configured to up-convert a first carrier of the first frequency band so that the first carrier, once modulated, occupies a first sub-band of the first frequency band in the range of 5 - 65 MHz, and to up-convert a second carrier of the first frequency band so that the second carrier, once modulated, occupies a second sub-band of the first frequency band in the range of 400 - 650 MHz.

10. The up-converter according to claim 7, wherein
the up-converter (201 - 204) is configured to up-convert a first carrier of the first frequency band so that the first carrier, once modulated, occupies a first sub-band of the first frequency band, and to up-convert a second carrier of the first frequency band so that the second carrier, once modulated, occupies a second sub-band of the first frequency band, where a minimum frequency of the second sub-band is more than two times higher than a maximum frequency of the first sub-band.

11. The up-converter according to claim 7, wherein
the up-converter (201 - 204) is configured to up-convert a first carrier of the first frequency band so that the first carrier, once modulated, occupies a first sub-band of the first frequency band, and to up-convert a second carrier of the first frequency band so that the second carrier, once modulated, occupies a second sub-band of the first frequency band, where a minimum frequency of the second sub-band is more than six times higher than a maximum frequency of the first sub-band.

12. The up-converter according to claim 7, wherein
the up-converter (201 - 204) is configured to up-convert the frequencies of carriers in a first multicarrier to a first frequency band, and to up-convert the frequencies of carriers in a second multicarrier signal to a second band, a minimum frequency of the carriers in the second band being above 200 MHz and a maximum carrier frequency of carriers in the first band being below 100 MHz.

13. The up-converter according to claim 7, wherein
the up-converter (201 - 204) is configured to up-convert the frequencies of carriers in a first multicarrier to a first frequency band, and to up-convert the frequencies of carriers in a second multicarrier signal to a second band, a minimum frequency of the carriers in the second band being above 300 MHz and a maximum carrier frequency of carriers in the first band being below 65 MHz.

14. The up-converter according to claim 1, wherein
the up-converter (201 - 204) is configured to increase the carrier frequencies of received electrical signals by a factor of approximately two when the carrier frequency of the received electrical signals is below 100 MHz and the wavelength of the optical signal to which the received electrical signal is converted after up-conversion is between 1220 nm and 1360 nm, or between 1480 nm and 1620 nm.

15. The up-converter according to claim 1, wherein
the up-converter (201 - 204) is configured to increase the carrier frequencies of received electrical signals by a factor of approximately 40 when the carrier frequency of the received electrical signals is approximately between 5 and 65 MHz.

16. A hybrid cable fiber node (752), having the up-converter of claim 1 and further comprising:
an enclosure (766) containing the apparatus of the node;
means (767-768) for connecting a plurality of coaxial cable networks (753-754) to the node;
means (769) for connecting a first optical fiber (762) for carrying an optical signal from the node; and
optical transmitter means (760) for converting the second electronic multicarrier signal into a first optical multicarrier signal.

17. The node of claim 16, in which:
the node further comprises: first optical receiver means (764) for converting a forward optical signal into a respective electronic forward signal in one or more of the coaxial cable networks; and filter means (755-756) for separating the first electronic multicarrier signals from the electronic forward signals in respective coaxial cable networks and providing the first electronic multicarrier signals to the up-converter means.

18. The node of claim 17, in which:
the first optical receiver means and the optical transmitter means are adapted to communicate with the same end of a common optical fiber (762);
the node further comprises second optical receiver means (819) for converting an optical broadcast signal into an electronic broadcast signal; and
second electronic combiner means (810) for combining the electronic broadcast signal with each of the electronic forward signals.

19. A communication system, having the up-converter of claim 1, comprising:
a multitude of optical fibers (113, 124-128, 144-148, 154, 223);
gateway means (402) for providing a plurality of first electronic broadcast signals and;
first modulating means (413) for modulating a multitude of first carrier signals with the first electronic broadcast signals;
first combining means (414) for combining the modulated first carrier signals into a second multicarrier electronic broadcast signal;
first optical transmitter means (106) for converting the second electronic broadcast signal into an optical multicarrier broadcast signal;
first optical routing means (108, 114) for splitting the optical multicarrier broadcast signal into a plurality of optical multicarrier broadcast sub-signals in respective optical fibers;
a multitude of coaxial cable networks (136-140);
first receiver means (135) for converting the optical multicarrier broadcast sub-signals into respective third electronic multicarrier broadcast signals in the coaxial cable networks;
customer interface means (380-381) connected to the coaxial cable networks (771) for receiving the third electronic broadcast signals;
the gateway means for providing a multitude of first electronic service signals for computer and telephone communications services, the first electronic service signals being divided into a multitude of destination groups, each destination group including a multitude of information signals for transmission to one or more coaxial cable networks;
second modulating means (431) for modulating groups of second carrier signals with respective groups of first electronic service signals;
second combining means (433) for combining the modulated second carrier signals of each group into a respective second multicarrier electronic service signal;
second optical transmitter means (435) for converting the second service signals into respective multicarrier optical service signals;
second optical routing means (153, 158) for multiplexing a plurality of the optical service signals into each fiber (452) of a plurality of common optical fibers (452-453) for respective fiber hubs, and for each common fiber, the optical service signals in the fiber having different optical wavelengths; and for wavelength demultiplexing the plurality of optical service signals from each common optical fiber into respective optical fibers;
wherein the first receiver means (135) is for converting the optical service signals in the respective fibers into respective third electronic multicarrier service signals in the coaxial cable networks;
wherein the customer interface means is for receiving the third electronic service signals; and
wherein the customer interface means (380-381) is for providing a multitude of first electronic multicarrier return signals, each first electronic return signal including a multitude of third carrier signals modulated by different respective information signals, the frequencies of the carrier signals in the same multicarrier signal are all different, the frequencies of a plurality of the third carrier signals of the first electronic return signals are approximately the same as other first electronic return signals, the frequencies of the third carrier signals of each first electronic return signal being within the same first frequency band;
further comprising a conversion means (181, 200) for converting and combining a group of one or more first electronic return signals into a respective single second multicarrier electronic signal including a multitude of fourth carrier signals, each of a different frequency, modulated respectively by the same information signals as in the respective group of first electronic return signals, with frequencies of the fourth carrier signals within a second frequency band, the minimum carrier frequency of the second band being higher than the maximum carrier frequency of the first band;
third optical transmitter means (209) for converting the multitude of second electronic return signals into respective first multicarrier optical return signals in respective optical fibers;
third optical routing means (220, 240) for multiplexing a group of multiple first optical return signals from respective optical fibers into each fiber of multiple common optical fibers, for each common fiber, the first optical return signals in the fiber have different optical wavelengths; and for wavelength demultiplexing the multiple first optical return signals from each common optical fiber;
second receiver means (243) for converting the first optical return signals into respective third multicarrier return signals;
separating means (439) for separating each of the fourth carrier signals from each of the third return signals; and
demodulating means (440) for extracting the information signals from respective fourth carrier signals and providing the extracted information signals to the gateway means; and
in which the gateway means (402-404) is for receiving the extracted information signals.

20. Optical apparatus, comprising:
the up-converter according to claim 1;
an input optical path (170) for carrying an input light beam modulated by an input carrier signal modulated by an information signal, the input carrier signal having a radio frequency;
an output optical path (215) for carrying an output light beam modulated by an output carrier signal modulated by the same information signal as the input carrier signal, the output carrier signal having a higher radio frequency than the input carrier signal; and
optical up-converter means (180) for converting the input light beam carrying the input carrier signal carrying the information signal into the output light beam carrying the higher frequency output carrier signal carrying the same information signal.

21. The optical apparatus of claim 20, in which:
the apparatus further comprises: an input coupler (175) for connecting an input fiber (144) to the input optical path (170); and an output coupler (222) for connecting an output fiber (223) to the output optical path (221);
a wavelength of the input or output light beams is between 1250 and 1360 nm or between 1500 and 1610 nm;
a radio frequency of the output carrier signal is at least approximately 2 times higher than a radio frequency of the input carrier signal;
the radio frequency of the input carrier signal is below 100 MHz and the radio frequency of the output carrier signal is above 200 MHz;
the radio frequency of the output carrier signal is between approximately 400 and 900 MHz;
the radio frequency of the output carrier signal is more than approximately 40 times higher than the frequency of the input carrier signal;
the radio frequency of the input carrier signal is approximately between 5 and 65 MHz and the radio frequency of the output carrier signal is at least 400 MHz;
the optical apparatus further comprises one or more additional input optical paths (171-173) for providing a plurality of input optical paths (170-173) carrying respective input light beams modulated by respective input carrier signals modulated by a respective information signal, the respective input carrier signals having radio frequencies; and the optical up-converter means convert the plurality of the input light beams carrying the input carrier signals carrying the information signals into the output light beam carrying the higher frequency output carrier signals carrying the same information signals;
the optical apparatus further comprises one or more additional output optical paths (216-219) for providing a plurality of output optical paths carrying respective output light beams modulated by respective output carrier signals modulated by the same information signals as corresponding input carrier signals, the respective output carrier signals having a higher radio frequency than the corresponding input carrier signals; and/or
the optical up-converter means (180) is for converting the plurality of the input light beams carrying the input carrier signals carrying the information signals into the plurality of output light beams carrying the higher frequency output carrier signals carrying the same information signals.

22. The optical apparatus of claim 20, in which:
the input and output light beams are multicarrier optical signals in which the light beam is modulated by a multitude of carrier signals, each carrier signal of the same light beam has a different radio frequency;
the carrier signals of the same light beam are modulated by different respective information signals;
the output carrier signals are modulated by the same respective information signals as corresponding input carrier signals having lower frequencies;
the output carrier signals have different respective radio frequencies all within a frequency band with a band width of approximately less than one octave, so that the maximum frequency of a carrier in the band is less than or equal to approximately 2 times the minimum frequency of a carrier in the band, so that essentially all second order distortions of the multicarrier signal can be filtered out;
the output carrier signals have radio frequencies within a frequency band with a width of approximately less than half an octave, so that the maximum frequency of a carrier in the band is less than or equal to approximately 1.5 times the minimum frequency of a carrier in the band, so that essentially all fourth order distortions of the multicarrier signal can be filtered out;
the multiple carrier signals of the input light beam have radio frequencies in a frequency band extending at least between approximately 5 and 45 MHz and the corresponding carrier signals in the output light beam have radio frequencies in a band with a minimum carrier frequency above 400 MHz;
the optical apparatus further comprises one or more additional output optical paths (216-219) to provide a plurality of output optical paths carrying respective output light beams which are multicarrier optical output signals including a first output light beam modulated by a multitude of carrier signals in a first frequency band and a second output light beam modulated by a multitude of carrier signals in a second frequency band, and in which the frequency bands do not overlap;
the carrier frequencies of the first frequency band are all between approximately 200 MHz and approximately 800 MHz; and the carrier frequencies of the second frequency band are all between 300 MHz and 1200 MHz;
the wavelengths of two of the output light beams are separated by a difference between 0.4 nm and 1.6 nm.

23. The optical apparatus of claim 20, in which:
the optical up-converter means (180) includes:
optical receiver means (181) for converting the input light beam carrying the input carrier signal into an input electronic current signal carrying the same input carrier signal;
electronic up-converter means (200) for converting the input electronic current signal modulated by the input carrier signal modulated by the information signal into an output electronic current signal modulated by the higher frequency output carrier signal modulated by the same information signal; and
optical transmitter means (209) for converting the output electronic current signal carrying the higher frequency carrier signal into the output light beam carrying the same higher frequency output carrier signal.

24. The optical apparatus of claim 23, in which:
the optical transmitter means (209) includes a directly modulated laser (262), preferably a distributed feedback laser (262);
the optical transmitter means (209) includes a lens system (267);
the optical transmitter means (209) includes means (258) for biasing the output electronic signal;
the optical transmitter means (209) includes a power amplifier (260);
the optical receiver means (181) includes a PIN photo-diode (286);
the optical receiver means (181) includes a preamplifier (288);
the optical apparatus further comprises a controller (225) to dynamically control the wavelength of the lasers during operation;
the optical apparatus further comprise one or more additional input optical paths (171- 173), for providing a plurality of input optical paths (170-173) carrying respective input light beams modulated by respective input carrier signals modulated by a different respective information signals; the optical receiver means convert the plurality of input light beams into respective electronic input current signals carrying the respective input carrier signals; and the electronic up-converter means (200) convert the plurality of input current signals carrying the input carrier signals into the output electronic current signal carrying output carrier signals with higher frequencies than the input carrier signals and carrying the same information signals;
the electronic up-converter means (200) include combining means (310) for combining multiple electronic current signals into a single electronic current signal;
the optical apparatus further comprises one or more additional output optical paths (216-219) to provide a plurality of output optical paths (215-219) carrying respective output light beams modulated by respective output carrier signals corresponding with the input carrier signals of the plurality of input light beams and having a radio frequency higher than the input carrier signals, the output carrier signals being modulated by the same information signals as the corresponding input carrier signals; the electronic up-converter means (200) convert the plurality of input electronic current signals modulated by the input carrier signals modulated by the information signals into a plurality of output electronic current signals modulated by the higher frequency output carrier signals modulated by the same information signals; and the optical transmitter means (209) convert the plurality of output electronic current signals carrying the higher frequency output carrier signals into respective output light beams carrying the same higher frequency output carrier signals in the output optical paths (215-219); and
the combining means (310) is for converting 4 or more input electronic signals into one output electronic signal.

25. A wavelength multiplexing fiber hub, having the optical apparatus of claim 20, comprising:
a multitude of return signal input optical paths (170-173) for carrying different respective return input light beams each modulated by a different respective multitude of return input carrier signals, for each return input light beam, the respective multitude of return input carrier signals are modulated by different respective return information signals and each have a different radio frequency;
a plurality of return signal output optical paths (215-219) for carrying respective return output light beams, each modulated by a respective multitude of return output carrier signals, and for each return output light beam, the respective multitude of return output carrier signals are modulated by a different one of the return information signals, the return output carrier signals each having a different radio frequency, the radio frequencies of the return output carrier signals being higher than the radio frequencies of the return input carrier signals;
optical up-converter means (180) for converting the multitude of return input light beams carrying the return input carrier signals carrying the return information signals into the plurality of return output light beams carrying the higher frequency return output carrier signals carrying the return information signals, said optical up-converter means (180) comprising the up-converter according to claim 1; and
signal routing means including return combining means (220) for combining the return output light beams from the plurality of return output optical paths (215-219) into a common hub optical fiber (223).

26. The hub of claim 25, in which:
the hub further comprises a multitude of forward signal optical paths (160-164) for carrying respective forward light beams modulated by respective multitudes of forward carrier signals, and for each forward light beam, each forward carrier signal is modulated by a different respective forward information signal and each forward carrier signal has a different radio frequency;
the hub further comprises common node fibers (540) for respective return input optical paths (570); and the signal routing means is for routing respective forward light beams from respective forward signal optical paths (556) into respective common node fibers (540) and routes respective return input signal from respective common node fiber (540) into respective return input optical paths (575), so that in each common node fiber, a forward light beam travels away from the hub and a return light beam travels toward the hub;
the signal routing means includes a node wavelength division multiplexer (572) for each common node fiber for routing respective forward light beams from respective forward signal optical paths (556) into respective common node fibers (540) and routes respective return input signal from respective common node fiber (540) into respective return input optical paths (575);
the signal routing means includes a hub wavelength division multiplexer (524) for routing forward light beams from the common hub fiber (154) into respective forward signal optical paths (160-164);
the hub wavelength division multiplexer (524) is for routing return light beams from forward signal optical paths (563) into the common hub fiber; and
the hub further comprises a broadcast signal optical path (501) for carrying a broadcast light beam modulated by a multitude of broadcast carrier signals modulated by different respective broadcast information signals, the broadcast carrier signals each have a different radio frequency; and the signal routing means include splitter means (504, 552) for dividing the broadcast light beam into a multitude of similar broadcast light beams in respective broadcast signal optical paths (505-508) for respective common node fibers; and the node wavelength division multiplexer is for routing the broadcast light beams from respective broadcast signal optical paths (505-508) into respective common node fibers (540-541).

27. A multiplexing fiber hub, having the optical apparatus of claim 20, comprising:
a multitude of return input optical paths (170-173) for carrying respective return input light beams, each beam modulated by a multitude of return input carrier signals modulated by different corresponding return information signals, and for each return input light beam, the radio frequencies of the return input carrier signals of the return input light beam are mutually different;
a plurality of return output optical paths (215-219) for carrying respective return output light beams, each beam modulated by a multitudes of return output carrier signals respectively modulated by the same return information signals as corresponding return input carrier signals, the return output carrier signals having a higher radio frequency than the return input carrier signals;
optical receiver means (181) for converting the multitude of return input light beams carrying the return input carrier signals into corresponding return input electronic current signals carrying the same return input carrier signals;
electronic up-converter means (200) comprising a plurality of electronic up-converters (201 - 204) for converting the multitude of return input electronic current signals carrying the return input carrier signals carrying the return information signals into a plurality of return output electronic current signals carrying the higher frequency return output carrier signals carrying the same return information signals;
optical transmitter means (209) for converting each return output electronic current signal carrying the higher frequency return output carrier signals into a corresponding return output light beam carrying the same higher frequency return output carrier signals in an output optical path, each return output light beam having a different wavelength, so that each one of the plurality of return output optical paths carries a corresponding one of the plurality of return output light beams; and
output routing means (220) for combining the return output light beams from the plurality of return output optical paths (215-219) into a common hub fiber (223) carrying the plurality of return output light beams.

28. An optical apparatus (100), comprising:
at least one optical-to-electrical signal converter (182 - 185) configured to convert received optical signals (170 - 179) into received electrical signals (190 - 198);
at least one electrical up-converter (201 - 204) according to claim 1;
at least one electrical-to-optical converter (210 - 214) configured to convert the up-converted electrical signals to optical form; and
at least one modulator (210 - 214) configured to modulate up-converted electrical signals onto light of different wavelengths and into different frequency bands each less than one octave wide.

29. The optical apparatus (100) of claim 28, wherein
the at least one modulator (210 - 214) is configured to modulate up-converted electrical signals onto light of different wavelengths and into different frequency bands each less than one-half of an octave wide.

30. The optical apparatus (100) of claim 28, further comprising:
a plurality of optical outputs; and
the optical apparatus (100) configured to provide multicarrier modulated optical output signals (115-117) within a first frequency band on a first optical output and to provide multicarrier modulated optical output signals within a second frequency band on a second optical output.

31. The optical apparatus (100) of claim 30, wherein
the optical apparatus (100) is configured to provide multicarrier modulated optical output signals within a first frequency band of approximately 200 - 800 MHz on a first optical output and to provide multicarrier modulated optical output signals within a second frequency band of approximately 300 - 1200 MHz on a second optical output.

32. The optical apparatus (100) of claim 30, wherein
the optical apparatus is configured to provide multicarrier modulated optical output signals within a first frequency band of approximately 400 - 600 MHz on a first optical output and to provide multicarrier modulated optical output signals within a second frequency band of approximately 600 - 900 MHz on a second optical output.

33. A method of providing optical communications, comprising the step of:
providing a plurality of optical multicarrier signals; **characterised by**:
converting the plurality of optical multicarrier signals into a plurality of first electronic multicarrier signals including a multitude of carrier signals modulated by respective information signals, with the frequencies of the carrier signals in the same electronic multicarrier signal being different from each other and each carrier signal being within a first frequency band, the carrier frequencies of each carrier signal of the first electronic multicarrier signals being approximately the same;
converting each first electronic multicarrier signal into a second electronic multicarrier signal including a multitude of carrier signals with frequencies in a second frequency band with a minimum frequency being at least 2 times higher than a maximum frequency of the first frequency band, the carrier signals of the second electronic multicarrier signal being modulated by the same information signals as the carrier signals of the first electronic multicarrier signal.

34. The method of claim 33,
further comprising: providing a third multicarrier optical return signal including a multitude of carrier signals with frequencies in a third frequency band with a minimum frequency higher than a maximum frequency of the first frequency band;
the second and third frequency bands have different non-overlapping ranges so that the minimum frequency of any carrier signal in the third frequency band is less than the maximum frequency of any carrier signal in the second frequency band;
the minimum frequencies of carrier signals in the second and third frequency bands are at least 4 times higher than the maximum frequency of the carrier signals in the first frequency band;
the minimum frequencies of carrier signals in the second frequency bands are preferably at least approximately 200 MHz,
preferably at least approximately 400 MHz;
the maximum frequency of the third frequency band is 1200 MHz; and/or
the width of the second and third frequency bands are less than an octave, preferably less than half an octave.

35. The method of claim 33, comprising the steps of:
providing a respective multitude of customer interface units connected to each of a multitude of coaxial cable networks;
generating a first electronic multicarrier signals in each of the coaxial cable networks, using the multitude of the customer interface units connected to each network, with the frequencies of carrier signals of the first electronic multicarrier signal in each coaxial network in the same first frequency band;
providing one or more hybrid fiber cable nodes;
providing one or more optical fibers;
converting one or more forward optical multicarrier signals from one of the optical fibers into forward multicarrier electronic signals in the coaxial cable networks;
separating the multitude of first electronic signals in the coaxial cable networks into a multitude of separated first electronic signals in the nodes;
first converting a first plurality of separated first electronic signals in the nodes into a second single electronic multicarrier signal with frequencies of carrier signals in a second frequency band having a minimum carrier frequency higher than a maximum carrier frequency of the first frequency band and a width of the second frequency band is less than one octave; and
second converting the second electronic multicarrier signal into a first optical multicarrier signal in a first one of the optical fibers, with frequencies of carrier signals in the second frequency band.

36. The method of claim 35,
further comprising third converting a second plurality of separated first electronic signals in the nodes into a single third electronic multicarrier signal with frequencies of carrier signals in a third frequency band having a minimum carrier frequency higher than a maximum carrier frequency of the first frequency band and a frequency band width of less than one octave; and
fourth converting the third electronic signal into a second optical multicarrier signal in the first one of the optical fibers, with frequencies of carrier signals in the third frequency band and a light wavelength sufficiently different from a light wavelength of the first optical signal so that the first and second optical signals can be separated by a wavelength division demultiplexer.

37. The method of claim 35,
further comprising providing a fiber hub;
and the first converting includes:
third converting the first plurality of separated first electronic signals in the nodes into a corresponding plurality of second optical signals in one or more of the optical fibers, with frequencies of carrier signals in a third frequency band;
fourth converting the plurality of second optical signals in the one or more optical fibers into one or more third electronic multicarrier signals in the hub, with frequencies of carrier signals in the third frequency band;
fifth converting the frequencies and combining the carrier signals of the third electronic signals to provide the single second electronic signal.

38. The method of claim 37, in which:
there are a plurality of nodes and each of the nodes is connected to a single respective coaxial cable network;
the third converting uses a respective optical transmitter in each node to provide the second optical signals in different respective optical fibers with frequencies of the carrier signals in the first band;
the fourth converting converts each of the second optical signals in a respective optical fiber into a respective third electronic signal with frequencies in the third band;
the frequency ranges of the first and third bands are approximately equal;
the fifth converting includes: converting the frequencies of carrier signals of the third electronic signals to provide respective fourth electronic signals each with carrier frequencies in a different subband of the second frequency band; and combining the fourth electronic multicarrier signals into the single second electronic multicarrier signal.

39. The method of claim 35, in which the first converting includes:
third converting the plurality of separated first electronic signals in the nodes into a plurality of respective third electronic multicarrier signals with frequencies of carrier signals of each third electronic signal in a different subband of a third frequency band having maximum carrier frequency at least equal to the minimum carrier frequency of the first frequency band plus the number of second electronic signals converted into the first optical signal times the width of the first frequency band;
fourth converting the plurality of third electronic multicarrier signals into the second signal.

40. The method of claim 39, in which:
the third frequency band of the third electronic multicarrier signals has the same frequency range as the second frequency band of the second electronic signals; and
the first converting further includes combining the third electronic multicarrier signals to form the second electronic multicarrier signals.

41. The method of claim 39, in which:
the method further comprises providing a fiber hub;
the maximum carrier frequency of the third frequency band is less than the minimum carrier frequency of the second frequency band; and
the third converting includes:
combining the plurality of third electronic signals into a single fourth electronic signal with frequencies of carrier signals in the third frequency band;
fifth converting the fourth electronic signal into a second optical multi-carrier signal in one of the optical fibers with frequencies of carrier signals in the third frequency band;
sixth converting the second optical signal in the optical fiber into a fifth electronic signal in the hub, which is approximately a duplicate of the fourth electronic signal; and
seventh converting the fifth electronic signal with frequencies of carrier signals in the third frequency band into the second electronic signal with frequencies of carrier signals in the second frequency band.

## Patentansprüche

1. Aufwärtswandler, mit:
einer Empfangseinrichtung (302 - 303) zum Empfangen einer ersten Mehrzahl erster elektronischer Mehrträgersignale, die je eine Vielzahl erster Trägersignale aufweisen, die durch unterschiedliche entsprechende Informationssignale moduliert sind, wobei die Frequenzen der ersten Trägersignale im gleichen elektronischen Mehrträgersignal alle unterschiedlich sind, die Frequenzen einer Mehrzahl erster Trägersignale unterschiedlicher erster elektronischer Mehrträgersignale etwa gleich sind und sich die ersten Trägersignale jedes ersten elektronischen Mehrträgersignals innerhalb des gleichen ersten Frequenzbandes befinden, **gekennzeichnet durch**:
eine Wandlereinrichtung (304 - 305, 310) zum Umwandeln und Kombinieren der entsprechenden ersten elektronischen Mehrträgersignale in ein zweites einziges elektronisches Mehrträgersignal, das eine Vielzahl zweiter Trägersignale mit wechselweise unterschiedlichen entsprechenden Frequenzen aufweist und die entsprechend **durch** die gleichen Informationssignale wie die ersten Trägersignale moduliert sind, wobei sich die Frequenz eines jeden der zweiten Trägersignale innerhalb eines zweiten Frequenzbandes befindet und die minimale Trägerfrequenz des zweiten Bandes zumindest zweimal höher als die maximale Trägerfrequenz des ersten Bandes ist; und
eine Übertragungseinrichtung (312) zum Übertragen des zweiten einzigen elektronischen Mehrträgersignals.

2. Aufwärtswandler nach Anspruch 1, der so ausgestaltet ist, dass:
die Informationssignale eines jeden ersten Signals entsprechende zweite Trägersignale mit Frequenzen innerhalb eines unterschiedlichen Unterbandes des zweiten Frequenzbandes modulieren;
die Frequenzbandbreite des ersten Frequenzbandes mehr als eine Oktave beträgt;
die Frequenzbandbreite des zweiten Frequenzbandes weniger als eine Oktave, vorzugsweise weniger als eine halbe Oktave, beträgt;
die minimale Frequenz des zweiten Bandes etwa sechs mal höher als die maximale Frequenz des ersten Bandes ist;
die maximale Frequenz des ersten Frequenzbandes unter 100 MHz beträgt und sich die minimale Frequenz des zweiten Bandes über 200 MHz befindet;
die maximale Frequenz des ersten Frequenzbandes sich unterhalb etwa 65 MHz befindet und die minimale Frequenz des zweiten Bandes sich über etwa 400 MHz befindet; und/oder
die maximale Frequenz des ersten Frequenzbandes sich über etwa 5 MHz und unter etwa 65 MHz befindet und die erste Bandbreite mehr als etwa 3 Oktaven beträgt und sich die minimale Frequenz des zweiten Bandes über etwa 400 MHz und unter etwa 650 MHz befindet und die zweite Bandbreite weniger als eine halbe Oktave beträgt.

3. Aufwärtswandler nach Anspruch 1, bei dem
die Empfangseinrichtung (753 - 754) zum Kommunizieren mit entsprechenden Koaxialkabelnetzwerken vorgesehen ist, um die erste Mehrzahl erster elektronischer Mehrträgersignale zu empfangen;
die Wandlereinrichtung elektronische Frequenzwandler (757 - 758) zum Wandeln der entsprechenden ersten elektronischen Mehrträgersignale in unterschiedliche entsprechende dritte elektronische Mehrträgersignale, die je einen Teil der zweiten Trägersignale mit Frequenzen innerhalb eines Unterbandes des zweiten Frequenzbandes aufweisen; und einen Kombinator (759) zum Kombinieren der dritten elektronischen Mehrträgersignale in das zweite elektronische Mehrträgersignal aufweist; und
der Aufwärtswandler ferner einen optischen Sender (760) zum Umwandeln des zweiten einzigen elektronischen Mehrträgersignals in ein erstes optisches Mehrträgersignal aufweist.

4. Aufwärtswandler nach Anspruch 1, bei dem:
der Aufwärtswandler ferner einen optischen Sender (800) zum Umwandeln des einzigen zweiten elektronischen Mehrträgersignals in ein erstes optisches Mehrträgersignal aufweist; und
die Umwandlungseinrichtung umfasst:
erste Frequenzwandler (797, 798) zum Umwandeln des entsprechenden ersten elektronischen Mehrträgersignals in unterschiedliche entsprechende dritte elektronische Mehrträgersignale, die je eine Vielzahl dritter Trägersignale aufweisen, wobei sich die Frequenzen der dritten Trägersignale eines jeden dritten elektronischen Mehrträgersignals innerhalb eines unterschiedlichen Unterbandes eines dritten Frequenzbandes befinden, wobei die maximale Frequenz des dritten Frequenzbandes zumindest etwa die minimale Frequenz des ersten Frequenzbandes plus der Frequenzbandbreite des ersten Frequenzbandes mal der Anzahl erster elektronischer Mehrträgersignale der ersten Mehrzahl von Signalen beträgt;
einen Kombinator (799) zum Kombinieren der dritten elektronischen Mehrträgersignale in ein viertes einziges elektronisches Mehrträgersignal mit dritten Trägersignalen im dritten Frequenzband;
einen ersten optischen Sender (800) zum Umwandeln des vierten einzigen elektronischen Mehrträgersignals in ein erstes optisches Mehrträgersignal;
einen optischen Empfänger (820) zum Umwandeln des ersten optischen Mehrträgersignals in ein fünftes elektronisches Mehrträgersignal;
einen zweiten Wandler (821) zum Umwandeln des fünften elektronischen Mehrträgersignals in das zweite einzige elektronische Mehrträgersignal mit zweiten Trägersignalen im zweiten Frequenzband, wobei die minimale Frequenz des zweiten Frequenzbandes höher als die maximale Frequenz des dritten Frequenzbandes ist; und
einen zweiten optischen Sender (822) zum Umwandeln des zweiten einzigen elektronischen Mehrträgersignals in ein zweites optisches Mehrträgersignal.

5. Aufwärtswandler nach Anspruch 1, bei dem:
die Empfangseinrichtung (302 - 303) eine Mehrzahl optischer Empfänger (182 - 183) zum Umwandeln entsprechender erster optischer Mehrträgersignale in die erste Mehrzahl erster elektronische Mehrträgersignale aufweist;
die Umwandlungseinrichtung umfasst: erste Frequenzwandler (304 - 305) zum Umwandeln entsprechender erster elektronischer Mehrträgersignale in unterschiedliche entsprechende dritte elektronische Mehrträgersignale, die einen Teil der zweiten Trägersignale mit Trägerfrequenzen in einem unterschiedlichen entsprechenden Bereich des Frequenzbandes der zweiten Trägersignale aufweisen; und einen Kombinator (310) zum Kombinieren der dritten elektronischen Signale in das zweite elektronische Mehrträgersignal; und
der Aufwärtswandler ferner einen optischen Sender (210) zum Umwandeln des zweiten einzigen elektronischen Mehrträgersignals in ein zweites optisches Mehrträgersignal aufweist.

6. Aufwärtswandler nach Anspruch 1, bei dem:
die Empfangseinrichtungen zum Kommunizieren mit entsprechenden Koaxialkabelnetzwerken (833 - 834) vorgesehen sind, um vierte elektronische Mehrträgersignale in einer gleichen Anzahl wie die erste Mehrzahl erster elektronischer Mehrträgersignale zu empfangen;
die Empfangseinrichtung eine optische Sendereinrichtung (838) zum Umwandeln der vierten elektronischen Mehrträgersignale in entsprechende erste optische Mehrträgersignale aufweist;
die Empfangseinrichtung eine optische Empfängereinrichtung (861) zum Umwandeln der ersten optischen Mehrträgersignale entsprechend in erste elektronische Mehrträgersignale aufweist;
die Umwandlungseinrichtung umfasst: Frequenzwandler (862) zum Umwandeln der entsprechenden ersten elektronischen Mehrträgersignale in unterschiedliche entsprechende dritte elektronische Mehrträgersignale, die je einen Teil der zweiten Trägersignale mit Frequenzen in einem Unterband des zweiten Frequenzbandes aufweisen; und einen Kombinator (864) zum Kombinieren der dritten elektronischen Mehrträgersignale in das zweite elektronische Mehrträgersignal; und
der Aufwärtswandler ferner einen optischen Sender (865) zum Umwandeln des einzigen zweiten elektronischen Mehrträgersignals in ein zweites optisches Mehrträgersignal aufweist.

7. Aufwärtswandler nach Anspruch 1, wobei
der Aufwärtswandler (201 - 204) dazu ausgestaltet ist, einen ersten Träger des ersten Frequenzbandes aufwärts zu wandeln, so dass der erste Träger, sobald er moduliert ist, ein erstes Unterband des ersten Frequenzbandes belegt, und einen zweiten Träger des ersten Frequenzbandes aufwärts wandelt, so dass der zweite Träger, sobald er moduliert ist, ein zweites Unterband des ersten Frequenzbandes belegt, wobei die Bandbreite des ersten Unterbandes größer als eine Oktave ist und die Bandbreite des zweiten Unterbandes niedriger als eine Oktave ist.

8. Der Aufwärtswandler nach Anspruch 7, wobei
der Aufwärtswandler (201 - 204) dazu ausgestaltet ist, einen ersten Träger des ersten Frequenzbandes aufwärts zu wandeln, so dass der erste Träger, sobald er moduliert ist, ein erstes Unterband des ersten Frequenzbandes belegt, und einen zweiten Träger des ersten Frequenzbandes aufwärts wandelt, so dass der zweite Träger, sobald er moduliert ist, ein zweites Unterband des ersten Frequenzbandes belegt, wobei die Bandbreite des ersten Unterbandes größer als drei Oktaven ist und die Bandbreite des zweiten Unterbandes niedriger als eine halbe Oktave ist.

9. Aufwärtswandler nach Anspruch 8, wobei
der Aufwärtswandler (201 - 204) dazu ausgestaltet ist, einen ersten Träger des ersten Frequenzbandes aufwärts zu wandeln, so dass der erste Träger, sobald er moduliert ist, ein erstes Unterband des ersten Frequenzbandes im Bereich von 5 - 65 MHz belegt, und einen zweiten Träger des ersten Frequenzbandes aufwärts zu wandeln, so dass der zweite Träger, sobald er moduliert ist, ein zweites Unterband des ersten Frequenzbandes im Bereich von 400 - 650 MHz belegt.

10. Aufwärtswandler nach Anspruch 7, wobei
der Aufwärtswandler (201 - 204) so ausgestaltet ist, dass er einen ersten Träger des ersten Frequenzbandes aufwärts wandelt, so dass der erste Träger, sobald er moduliert ist, ein erstes Unterband des ersten Frequenzbandes belegt, und einen zweiten Träger des ersten Frequenzbandes aufwärts wandelt, so dass der zweite Träger, sobald er moduliert ist, ein zweites Unterband des ersten Frequenzbandes belegt, wobei eine minimale Frequenz des zweiten Unterbandes mehr als zwei mal höher als eine maximale Frequenz des ersten Unterbandes ist.

11. Aufwärtswandler nach Anspruch 7, wobei
der Aufwärtswandler (201 - 204) so ausgestaltet ist, dass er einen ersten Träger des ersten Frequenzbandes aufwärts wandelt, so dass der erste Träger, sobald er moduliert ist, ein erstes Unterband des ersten Frequenzbandes belegt, und einen zweiten Träger des ersten Frequenzbandes aufwärts wandelt, so dass der zweite Träger, sobald er moduliert ist, ein zweites Unterband des ersten Frequenzbandes belegt, wobei eine minimale Frequenz des zweiten Unterbandes mehr als sechs mal höher als eine maximale Frequenz des ersten Unterbandes ist.

12. Aufwärtswandler nach Anspruch 7, wobei
der Aufwärtswandler (201 - 204) dazu ausgestaltet ist, die Frequenzen der Träger in einem ersten Mehrträger auf ein erstes Frequenzband aufwärts zu wandeln und die Frequenzen der Träger in einem zweiten Mehrträgersignal auf ein zweites Band aufwärts zu wandeln, wobei sich eine minimale Frequenz der Träger im zweiten Band über 200 MHz und eine maximale Trägerfrequenz der Träger im ersten Band unter 100 MHz befindet.

13. Aufwärtswandler nach Anspruch 7, wobei
der Aufwärtswandler (201 - 204) dazu ausgestaltet ist, die Frequenzen der Träger in einem ersten Mehrträger auf ein erstes Frequenzband aufwärts zu wandeln und die Frequenzen der Träger in einem zweiten Mehrträgersignal auf ein zweites Band aufwärts zu wandeln, wobei sich eine minimale Frequenz der Träger im zweiten Band über 300 MHz und eine maximale Trägerfrequenz der Träger im ersten Band unter 65 MHz befindet.

14. Aufwärtswandler nach Anspruch 1, wobei
der Aufwärtswandler (201 - 204) dazu ausgestaltet ist, die Trägerfrequenzen der empfangenen elektrischen Signale um einen Faktor von etwa zwei zu erhöhen, wenn sich die Trägerfrequenz der empfangenen elektrischen Signale unter 100 MHz befindet und sich die Wellenlänge des optischen Signals, in das das empfangene elektrische Signal gewandelt wird, nach dem Aufwärtswandeln zwischen 1220 nm und 1360 nm oder zwischen 1480 nm und 1620 nm befindet.

15. Aufwärtswandler nach Anspruch 1, wobei
der Aufwärtswandler (201 - 204) dazu ausgebildet ist, die Trägerfrequenzen der empfangenen elektrischen Signale um einen Faktor von etwa 40 zu erhöhen, wenn die Trägerfrequenz der empfangenen elektrischen Signale zwischen etwa 5 und 65 MHz beträgt.

16. Hybrider Kabel-Glasfaser-Knoten (752) mit dem Aufwärtswandler nach Anspruch 1 und ferner aufweisend:
ein Gehäuse (766), das die Vorrichtung des Knotens enthält;
eine Einrichtung (767 - 768) zum Verbinden einer Mehrzahl von Koaxialkabelnetzwerken (753 - 754) mit dem Knoten;
eine Einrichtung (769) zum Verbinden einer ersten optischen Glasfaser (762) zum Übertragen eines optischen Signals vom Knoten; und
eine optische Sendereinrichtung (760) zum Umwandeln des zweiten elektronischen Mehrträgersignals in ein erstes optisches Mehrträgersignal.

17. Knoten nach Anspruch 16, bei dem:
der Knoten ferner aufweist: eine erste optische Empfängereinrichtung (764) zum Umwandeln eines optischen Vorwärtssignals in ein entsprechendes elektronisches Vorwärtssignal in einem oder mehreren der Koaxialkabelnetzwerke, und eine Filtereinrichtung (755 - 756) zum Separieren der ersten elektronischen Mehrträgersignale von den elektronischen Vorwärtssignalen in entsprechenden Koaxialkabelnetzwerken und zum Bereitstellen der ersten elektronischen Mehrträgersignale an die Aufwärtswandlereinrichtung.

18. Knoten nach Anspruch 17, bei dem:
die erste optische Empfängereinrichtung und die optische Sendereinrichtung dazu ausgebildet sind, mit dem gleichen Ende einer gemeinsamen optischen Glasfaser (762) zu kommunizieren;
der Knoten ferner eine zweite optische Empfängereinrichtung (819) zum Umwandeln eines optischen Broadcast-Signals in ein elektronisches Broadcast-Signal aufweist; und
eine zweite elektronische Kombinatoreinrichtung (810) zum Kombinieren des elektronischen Broadcast-Signals mit jedem der elektronischen Vorwärtssignale vorgesehen ist.

19. Kommunikationssystem mit dem Aufwärtswandler nach Anspruch 1, aufweisend:
eine Vielzahl optischer Glasfasern (113, 124 - 128, 144 - 148, 154, 223);
eine Gateway-Einrichtung (402) zum Bereitstellen einer Mehrzahl erster elektronischer Broadcast-Signale und;
eine erste Modulationseinrichtung (413) zum Modulieren einer Vielzahl erster Trägersignale mit den ersten elektronischen Broadcast-Signalen;
eine erste Kombinatoreinrichtung (414) zum Kombinieren der modulierten ersten Trägersignale in ein zweites elektronisches Mehrträger-Broadcast-Signal;
eine erste optische Sendereinrichtung (106) zum Umwandeln des zweiten elektronischen Broadcast-Signals in ein optisches Mehrträger-Broadcast-Signal;
eine erste optische Router-Einrichtung (108, 114) zum Aufteilen des optischen Mehrträger-Broadcast-Signals in eine Mehrzahl optischer Mehrträger-Broadcast-Untersignale in entsprechenden optischen Glasfasern;
einer Vielzahl von Koaxialkabelnetzwerken (136 - 140);
eine erste Empfängereinrichtung (135) zum Umwandeln des optischen Mehrträger-Broadcast-Untersignals in entsprechende dritte elektronische Mehrträger-Broadcast-Signale in den Koaxialkabelnetzwerken;
eine Kundenschnittstelleneinrichtung (380 - 381), die an die Koaxialkabelnetzwerke (771) zum Empfangen der dritten elektronischen Broadcast-Signale angeschlossen ist;
wobei die Gateway-Einrichtung zum Bereitstellen einer Vielzahl erster elektronischer Dienstsignale für Computer- und Telefonkommunikationsdienste vorgesehen ist, wobei die ersten elektronischen Dienstsignale in eine Vielzahl von Zielgruppen geteilt sind und jede Zielgruppe eine Vielzahl von Informationssignalen zum Übertragen an ein oder mehrere Koaxialkabeinetzwerk(e) aufweist;
eine zweite Modulationseinrichtung (431) zum Modulieren von Gruppen zweiter Trägersignale mit entsprechenden Gruppen erster elektronischer Dienstsignale;
eine zweite Kombinatoreinrichtung (433) zum Kombinieren der modulierten zweiten Trägersignale einer jeden Gruppe in ein entsprechendes zweites elektronisches Mehrträgerdienstsignal;
eine zweite optische Sendereinrichtung (435) zum Umwandeln der zweiten Dienstsignale in entsprechende optische Mehrträgerdienstsignale;
eine zweite optische Router-Einrichtung (153, 158) zum Multiplexen einer Mehrzahl der optischen Dienstsignale in jede Glasfaser (452) einer Mehrzahl gemeinsamer optischer Glasfasern (452 - 453) für entsprechende Glasfaser-Schaltknoten und wobei für jede gemeinsame Glasfaser die optischen Dienstsignale in der Glasfaser unterschiedliche optischen Wellenlängen aufweisen, und zum Wellenlängen-Demultiplexen der Mehrzahl optischer Dienstsignale von jeder gemeinsamen optischen Glasfaser in entsprechende optische Glasfasern;
wobei die erste Empfängereinrichtung (135) zum Umwandeln der optischen Dienstsignale in den entsprechenden Glasfasern in entsprechende dritte elektronische Mehrträger-Dienstsignale in den Koaxialkabelnetzwerken vorgesehen ist;
wobei die Kundenschnittstelleneinrichtung zum Empfangen der dritten elektronischen Dienstsignale vorgesehen ist; und
wobei die Kundenschnittstelleneinrichtung (380 - 381) zum Bereitstellen einer Vielzahl erster elektronischer Mehrträgerrücksignale vorgesehen ist, wobei jedes erste elektronische Rücksignal eine Vielzahl dritter Trägersignale aufweist, die durch unterschiedliche entsprechende Informationssignale moduliert sind, wobei die Frequenzen der Trägersignale im gleichen Mehrträgersignal alle unterschiedlich sind, wobei die Frequenzen einer Mehrzahl der dritten Trägersignale des ersten elektronischen Rücksignals etwa die gleichen wie bei den anderen ersten elektronischen Rücksignalen sind und wobei sich die Frequenzen der dritten Trägersignale eines jeden ersten elektronischen Rücksignals innerhalb des gleichen ersten Frequenzbandes befinden;
ferner aufweisend eine Umwandlungseinrichtung (181, 200) zum Umwandeln und Kombinieren einer Gruppe aus einem oder mehreren ersten elektronischen Rücksignalen in ein entsprechendes einziges zweites elektronisches Mehrträgersignal, das eine Vielzahl vierter Trägersignale aufweist, wobei jedes eine unterschiedliche Frequenz hat, wobei sie jeweils mit den gleichen Informationssignalen wie in der entsprechenden Gruppe der ersten elektronischen Rücksignale moduliert sind, wobei sich die Frequenzen der vierten Trägersignale innerhalb eines zweiten Frequenzbandes befinden und wobei die minimale Trägerfrequenz des zweiten Bandes höher als die maximale Trägerfrequenz des ersten Bandes ist;
eine dritte optische Sendereinrichtung (209) zum Umwandeln der Vielzahl zweiter elektronischer Rücksignale in entsprechende erste optische Mehrträgerrücksignale in entsprechenden optischen Glasfasern;
eine dritte optische Router-Einrichtung (220, 240) zum Multiplexen einer Gruppe mehrerer erster optischer Rücksignale von entsprechenden optischen Glasfasern in jede Glasfaser einer Mehrzahl gemeinsamer optischer Glasfasern, wobei für jede gemeinsame Glasfaser die ersten optischen Rücksignale in der Glasfaser unterschiedliche optische Wellenlängen aufweisen, und zum Wellenlängen-Demultiplexen der mehreren ersten optischen Rücksignale von jeder gemeinsamen optischen Glasfaser;
eine zweite Empfängereinrichtung (243) zum Umwandeln der ersten optischen Rücksignale in entsprechende dritte Mehrträgerrücksignale;
eine Separiereinrichtung (439) zum Separieren jedes der vierten Trägersignale von jedem der dritten Rücksignale; und
eine Demodulationseinrichtung (440) zum Extrahieren der Informationssignale von entsprechenden vierten Trägersignalen und zum Bereitstellen der extrahierten Informationssignale an die Gateway-Einrichtung;
und bei der die Gateway-Einrichtung (402 - 404) zum Empfangen des extrahierten Informationssignale vorgesehen ist.

20. Optische Vorrichtung, mit:
dem Aufwärtswandler gemäß Anspruch 1;
einem optischen Eingangspfad (170) zum Übertragen eines Eingangslichtstrahls, der durch ein durch ein Informationssignal moduliertes Eingangsträgersignal moduliert ist, wobei das Eingangsträgersignal eine Hochfrequenz aufweist;
einen optischen Ausgangspfad (215) zum Übertragen eines Ausgangslichtstrahls, der durch ein Ausgangsträgersignal moduliert ist, das mit dem gleichen Informationssignal wie das Eingangsträgersignal moduliert ist, wobei das Ausgangsträgersignal eine höhere Hochfrequenz als das Eingangsträgersignal aufweist; und
eine optische Aufwärtswandlereinrichtung (180) zum Umwandeln des Eingangslichtstrahls, der das Eingangsträgersignal überträgt, das das Informationssignal überträgt, in den Ausgangslichtstrahl, der das Ausgangsträgersignal mit der höheren Frequenz überträgt, das das gleiche Informationssignal überträgt.

21. Optische Vorrichtung nach Anspruch 20, bei der:
die Vorrichtung ferner aufweist: einen Eingangskoppler (175) zum Verbinden einer Eingangsglasfaser (144) mit dem optischen Eingangspfad (170), und einen Ausgangskoppler (222) zum Verbinden einer Ausgangsglasfaser (223) mit dem optischen Ausgangspfad (221);
eine Wellenlänge des Eingangs- oder Ausgangslichtstrahls sich zwischen 1250 und 1360 nm oder zwischen 1500 und 1610 nm befindet;
eine Hochfrequenz des Ausgangsträgersignals zumindest etwa zwei mal höher als eine Hochfrequenz des Eingangsträgersignals ist;
die Hochfrequenz des Eingangsträgersignals unter 100 MHz und die Hochfrequenz des Ausgangsträgersignals über 200 MHz ist;
die Hochfrequenz des Ausgangsträgersignals sich zwischen etwa 400 und 900 MHz befindet;
die Hochfrequenz des Ausgangsträgersignals mehr als etwa 40 mal höher als die Frequenz des Eingangsträgersignals ist;
die Hochfrequenz des Eingangsträgersignals sich zwischen etwa 5 und 65 MHz befindet und die Hochfrequenz des Ausgangsträgersignals zumindest 400 MHz beträgt;
die optische Vorrichtung ferner einen oder mehrere zusätzliche optische Eingangspfade (171 - 173) zum Bereitstellen einer Mehrzahl optischer Eingangspfade (170 - 173) zum Übertragen entsprechender Eingangslichtstrahlen aufweist, die durch entsprechende mit einem jeweiligen Informationssignal modulierte Eingangsträgersignale moduliert sind, wobei die entsprechenden Eingangsträgersignale Hochfrequenzen aufweisen, und wobei die optische Aufwärtswandlereinrichtung die Mehrzahl der Eingangslichtstrahlen, die die Eingangsträgersignale übertragen, die die Informationssignale übertragen, in den Ausgangslichtstrahl wandelt, der die Ausgangsträgersignale mit der höheren Frequenz überträgt, die die gleichen Informationssignale übertragen;
die optische Vorrichtung ferner einen oder mehrere zusätzliche optische Ausgangspfade (216 - 219) zum Bereitstellen einer Mehrzahl optischer Ausgangspfade aufweist, die entsprechende Ausgangslichtstrahlen übertragen, die durch entsprechende Ausgangsträgersignale moduliert sind, die durch die gleichen Informationssignale wie die entsprechenden Eingangsträgersignale moduliert sind, wobei die entsprechenden Ausgangsträgersignale eine höhere Hochfrequenz als die entsprechenden Eingangsträgersignale aufweisen; und/oder
die optische Aufwärtswandlereinrichtung (180) zum Umwandeln der Mehrzahl der Eingangslichtstrahlen, die die Eingangsträgersignale übertragen, die die Informationssignale übertragen, in die Mehrzahl von Ausgangslichtstrahlen vorgesehen ist, die die Ausgangsträgersignale mit der höheren Frequenz übertragen, die die gleichen Informationssignale übertragen.

22. Optische Vorrichtung nach Anspruch 20, bei der:
die Eingangs- und Ausgangslichtstrahlen optische Mehrträgersignale sind, in denen der Lichtstrahl durch eine Vielzahl von Trägersignalen moduliert ist, wobei jedes Trägersignal des gleichen Lichtstrahls eine unterschiedliche Hochfrequenz aufweist;
die Trägersignale des gleichen Lichtstrahls durch entsprechende unterschiedliche Informationssignale moduliert sind;
die Ausgangsträgersignale durch die gleichen entsprechenden Informationssignale wie die korrespondierenden Eingangsträgersignale mit niedrigeren Frequenzen moduliert sind;
die Ausgangsträgersignale unterschiedliche entsprechende Hochfrequenzen aufweisen, die sich alle innerhalb eines Frequenzbandes mit einer Bandbreite von etwa weniger als einer Oktave befinden, so dass die maximale Frequenz eines Trägers im Band niedriger als oder gleich etwa zwei mal der minimalen Frequenz des Trägers im Band ist, so dass im Wesentlichen alle Störungen zweiter Ordnung des Mehrträgersignals herausgefiltert werden können;
wobei die Ausgangsträgersignale Hochfrequenzen in einem Frequenzband mit einer Breite von etwa weniger als einer Oktave aufweisen, so dass die maximale Frequenz eines Trägers im Band niedriger als oder gleich etwa dem 1,5-fachen der minimalen Frequenz eines Trägers im Band ist, so dass im Wesentlichen alle Störungen vierter Ordnung des Mehrträgersignals herausgefiltert werden können;
die Mehrträgersignale des Eingangslichtstrahls Hochfrequenzen in einem Frequenzband aufweisen, das sich zumindest zwischen etwa 5 und 45 MHz erstreckt und die entsprechenden Trägersignale im Ausgangslichtstrahl Hochfrequenzen in einem Band mit einer minimalen Trägerfrequenz über 400 MHz aufweisen;
die optische Vorrichtung ferner einen oder mehrere zusätzliche optische(n) Ausgangspfad(e) (216 - 219) aufweist, um eine Mehrzahl von optischen Ausgangspfaden bereitzustellen, die entsprechende Ausgangslichtstrahlen übertragen, die optische Mehrträgerausgangssignale sind, die einen ersten Ausgangslichtstrahl, der durch eine Vielzahl von Trägersignalen in einem ersten Frequenzband moduliert ist, und einen zweiten Ausgangslichtstrahl aufweisen, der durch eine Vielzahl von Trägersignalen in einem zweiten Frequenzband moduliert ist, und bei dem sich die Frequenzbänder nicht überlappen;
die Trägerfrequenzen des ersten Frequenzbandes sich alle zwischen etwa 200 MHz und etwa 800 MHz befinden und sich die Trägerfrequenzen des zweiten Frequenzbandes sich alle zwischen 300 MHz und 1200 MHz befinden;
die Wellenlängen von zwei der Ausgangslichtstrahlen durch eine Differenz zwischen 0,4 nm und 1,6 nm separiert sind.

23. Optische Vorrichtung nach Anspruch 20, bei der:
die optische Aufwärtswandlereinrichtung (180) umfasst:
eine optische Empfängereinrichtung (181) zum Umwandeln des Eingangslichtstrahls, der das Eingangsträgersignal überträgt, in ein elektronisches Eingangsstromsignal, das das gleiche Eingangsträgersignal überträgt;
eine elektronische Aufwärtswandlereinrichtung (200) zum Umwandeln des elektronischen Eingangsstromsignals, das durch das Eingangsträgersignal moduliert ist, das durch das Informationssignal moduliert ist, in ein elektronisches Ausgangsstromsignal, das durch das Ausgangsträgersignal mit der höheren Frequenz moduliert ist, das durch das gleiche Informationssignal moduliert ist; und
eine optische Sendereinrichtung (209) zum Umwandeln des elektronischen Ausgangsstromsignals, das das Trägersignal mit der höheren Frequenz überträgt, in den Ausgangslichtstrahl, der das Ausgangsträgersignal mit der gleichen höheren Frequenz überträgt.

24. Optische Vorrichtung nach Anspruch 23, bei der:
die optische Sendereinrichtung (209) einen direktmodulierten Laser (262), vorzugsweise einen DFB-Laser (262) aufweist;
die optische Sendereinrichtung (209) ein Linsensystem (267) aufweist;
die optische Sendereinrichtung (209) eine Einrichtung (258) aufweist, die dem elektronischen Ausgangssignal eine Vorspannung verleiht;
die optische Sendereinrichtung (209) einen Leistungsverstärker (260) aufweist;
die optische Empfängereinrichtung (181) eine PIN-Fotodiode (286) aufweist;
die optische Empfängereinrichtung (181) einen Vorverstärker (288) aufweist;
die optische Vorrichtung ferner eine Steuerungseinrichtung (225) zum dynamischen Steuern der Wellenlänge des Lasers während des Betriebes aufweist;
die optische Vorrichtung ferner einen oder mehrere zusätzliche optische Eingangspfade (171 - 173) zum Bereitstellen einer Mehrzahl von optischen Eingangspfaden (170 - 173) aufweist, die entsprechende Eingangslichtstrahlen übertragen, die durch entsprechende Eingangsträgersignale moduliert sind, die durch unterschiedliche entsprechende Informationssignale moduliert sind, wobei die optische Empfängereinrichtungen die Mehrzahl von Eingangslichtstrahlen in entsprechende elektronische Eingangsstromsignale umwandeln, die die entsprechenden Eingangsträgersignale übertragen, und die elektronischen Aufwärtswandlereinrichtungen (200) die Mehrzahl von Eingangsstromsignalen, die die Eingangsträgersignale übertragen, in das elektronische Ausgangsstromsignal umwandeln, das die Ausgangsträgersignale mit höheren Frequenzen als die Eingangsträgersignale und die gleichen Informationssignale überträgt;
die elektronischen Aufwärtswandlereinrichtungen (200) eine Kombinatoreinrichtung (310) zum Kombinieren mehrerer elektronischer Stromsignale in ein einzelnes elektronisches Stromsignal aufweist;
die optische Vorrichtung ferner einen oder mehrere zusätzlichen optische Ausgangspfade (216 - 219) aufweist, um eine Mehrzahl optischer Ausgangspfade (215 - 219) bereitzustellen, die entsprechende Ausgangslichtstrahlen übertragen, die durch entsprechende Ausgangsträgersignale moduliert sind, die den Eingangsträgersignalen der Mehrzahl von Eingangslichtstrahlen entsprechen und eine höhere Hochfrequenz als die Eingangsträgersignale aufweisen, wobei die Ausgangsträgersignale durch die gleichen Informationssignale wie die entsprechenden Eingangsträgersignale moduliert sind, wobei die elektronischen Aufwärtswandlereinrichtungen (200) die Mehrzahl elektronischer Eingangsstromsignale, die durch die Eingangsträgersignale moduliert sind, die durch die Informationssignale moduliert sind, in eine Mehrzahl elektronischer Ausgangsstromsignale umwandeln, die durch die Ausgangsträgersignale mit der höheren Frequenz moduliert sind, die durch die gleichen Informationssignale moduliert sind, und die optische Sendereinrichtungen (209) die Mehrzahl elektronischer Ausgangsstromsignale umwandelt, die die Ausgangsträgersignale mit der höheren Frequenz in entsprechende Ausgangslichtstrahlen übertragen, die die Ausgangsträgersignale mit der gleichen höheren Frequenz in den optischen Ausgangspfaden (215 - 219) übertragen; und
die Kombinatoreinrichtung (310) zum Umwandeln von vier oder mehr elektronischen Eingangssignalen in ein elektronisches Ausgangssignal vorgesehen ist.

25. Wellenlängen-Multiplex-Glasfaser-Schaltknoten mit der optischen Vorrichtung nach Anspruch 20, aufweisend:
eine Vielzahl von optischen Rücksignaleingangspfaden (170 - 173) zum Übertragen unterschiedlicher entsprechender Rückeingangslichtstrahlen, die je durch eine unterschiedliche entsprechende Vielzahl von Rückeingangsträgersignalen moduliert sind, wobei bei jedem Rückeingangslichtstrahl die entsprechende Vielzahl von Rückeingangsträgersignalen durch unterschiedliche entsprechende Rückinformationssignale moduliert sind und je eine unterschiedliche Hochfrequenz aufweisen;
eine Mehrzahl von optischen Rücksignalausgangspfaden (215 - 219) zum Übertragen entsprechender Rückausgangslichtstrahlen, die je durch eine entsprechende Vielzahl von Rückausgangsträgersignalen moduliert sind und wobei bei jedem Rückausgangslichtstrahl die entsprechende Vielzahl von Rückausgangsträgersignalen durch ein unterschiedliches der Rückinformationssignale moduliert ist, wobei die Rückausgangsträgersignale je eine unterschiedliche Hochfrequenz aufweisen und die Hochfrequenzen der Rückausgangsträgersignale höher als die Hochfrequenzen der Rückeingangsträgersignale sind;
eine optische Aufwärtswandlereinrichtung (180) zum Umwandeln der Vielzahl von Rückeingangslichtstrahlen, die die Rückeingangsträgersignale übertragen, die die Rückinformationssignale übertragen, in die Mehrzahl von Rückausgangslichtstrahlen, die die Rückausgangsträgersignale mit höherer Frequenz übertragen, die die Rückinformationssignale übertragen, wobei die optische Aufwärtswandlereinrichtung (180) den Aufwärtswandler gemäß Anspruch 1 aufweist; und
eine Signal-Router-Einrichtung, die eine Rückkombinatoreinrichtung (220) zum Kombinieren der Rückausgangslichtstrahlen von der Mehrzahl von optischen Rückausgangspfaden (215 - 219) in eine gemeinsame optische Schaltknoten-Glasfaser (223) aufweist.

26. Schaltknoten nach Anspruch 25, bei dem:
der Schaltknoten ferner eine Vielzahl von optischen Vorwärtssignalpfaden (160 - 164) zum Übertragen entsprechender Vorwärtslichtstrahlen aufweist, die durch entsprechende Vielzahlen von Vorwärtsträgersignalen moduliert sind und wobei bei jedem Vorwärtslichtstrahl jedes Vorwärtsträgersignal durch ein entsprechendes unterschiedliches Vorwärtsinformationssignal moduliert ist und jedes Vorwärtsträgersignal eine unterschiedliche Hochfrequenz aufweist;
wobei der Schaltknoten ferner gemeinsame Knotenglasfasern (540) für entsprechende optische Rückeingangspfade (570) aufweist, und die Signal-Router-Einrichtung zum Routen entsprechender Vorwärtslichtstrahlen von entsprechenden optischen Vorwärtssignalpfaden (556) in entsprechende gemeinsame Knotenglasfasern (540) vorgesehen ist und ein entsprechendes Rückeingangssignal von der entsprechenden gemeinsamen Knotenglasfaser (540) in entsprechende optische Rückeingangspfade (575) routet, so dass sich in jeder gemeinsamen Knotenglasfaser ein Vorwärtslichtstrahl weg vom Schaltknoten ausbreitet und sich ein Rücklichtstrahl in Richtung Schaltknoten ausbreitet;
die Signal-Router-Einrichtung einen Schaltknoten-Wellenlängen-Multiplex-Multiplexer (572) für jede gemeinsame Knotenglasfaser zum Routen entsprechender Vorwärtslichtstrahlen von entsprechenden optischen Vorwärtssignalpfaden (556) in entsprechende gemeinsame Knotenfasern (540) aufweist und ein entsprechendes Rückeingangssignal von der entsprechenden gemeinsamen Knotenglasfaser (540) in entsprechende optische Rückeingangspfade (575) routet;
die Signal-Router-Einrichtung einen Schaltknoten-Wellenlängen-Multiplex-Multiplexexer (524) zum Routen von Vorwärtslichtstrahlen von der gemeinsamen Schaltknotenglasfaser (154) in entsprechende optische Vorwärtssignalpfade (160 - 164) aufweist;
der Schaltknoten-Wellenlängen-Multiplex-Multiplexer (524) zum Routen von Rücklichtstrahlen von optischen Vorwärtssignalpfaden (563) in die gemeinsame Knotenglasfaser vorgesehen ist; und
der Schaltknoten ferner einen optischen Broadcast-Signalpfad (501) zum Übertragen eines Broadcast-Lichtstrahls aufweist, der durch eine Vielzahl von Broadcast-Trägersignalen moduliert ist, die durch unterschiedliche entsprechende Broadcast-Informationssignale moduliert sind, wobei die Broadcast-Trägersignale je eine unterschiedliche Hochfrequenz aufweisen, und die Signal-Router-Einrichtung eine Aufteileinrichtung (504, 552) zum Aufteilen des Broadcast-Lichtstrahls in eine Vielzahl ähnlicher Broadcast-Lichtstrahlen in entsprechende optische Broadcast-Signalpfade (505-508) für entsprechende gemeinsame Knotenglasfasern aufweist, und die Knoten-Wellenlängen-Multiplex-Multiplexer zum Routen der Broadcast-Lichtstrahlen von entsprechenden optischen Broadcast-Signalpfaden (505 - 508) in entsprechende gemeinsame Knotenglasfasern (540 - 541) vorgesehen sind.

27. Multiplex-Glasfaser-Schaltknoten mit der optischen Vorrichtung nach Anspruch 20, aufweisend:
eine Vielzahl von optischen Rückeingangspfaden (170 - 713) zum Übertragen entsprechender Rückeingangslichtstrahlen, wobei jeder Strahl durch eine Vielzahl von Rückeingangsträgersignalen moduliert ist, die durch unterschiedliche entsprechende Rückinformationssignale moduliert sind und wobei für jeden Rückeingangslichtstrahl die Hochfrequenzen der Rückeingangsträgersignale des Rückeingangslichtstrahls wechselweise unterschiedlich sind;
eine Mehrzahl optischer Rückausgangspfade (215 - 219) zum Übertragen entsprechender Rückausgangslichtstrahlen, wobei jeder Strahl durch eine Vielzahl von Rückausgangsträgersignalen moduliert ist, die entsprechend durch die gleichen Rückinformationssignale wie die entsprechenden Rückeingangsträgersignale moduliert sind, wobei die Rückausgangsträgersignale eine höhere Hochfrequenz als die Rückeingangsträgersignale aufweisen;
eine optische Empfängereinrichtung (181) zum Umwandeln der Vielzahl von Rückeingangslichtstrahlen, die die Rückeingangsträgersignale übertragen, in entsprechende elektronische Rückeingangsstromsignale, die die gleichen Rückeingangsträgersignale übertragen; und
eine elektronische Aufwärtswandlereinrichtung (200) mit einer Mehrzahl von elektronischen Aufwärtswandlern (201 - 204) zum Umwandeln der Vielzahl elektronischer Rückeingangsstromsignale, die die Rückeingangsträgersignale übertragen, die die Rückinformationssignale übertragen, in eine Mehrzahl elektronischer Rückausgangsstromsignale, die die Rückausgangsträgersignale mit der höheren Frequenz übertragen, die die gleichen Rückinformationssignale übertragen;
eine optische Sendereinrichtung (209) zum Umwandeln jedes elektronischen Rückausgangsstromsignals, das die Rückausgangsträgersignale mit der höheren Frequenz überträgt, in einen entsprechenden Rückausgangslichtstrahl, der die gleichen Rückausgangsträgersignale mit der höheren Frequenz in einem optischen Ausgangspfad überträgt, wobei jeder Rückausgangslichtstrahl eine unterschiedliche Wellenlänge aufweist, so dass jeder der Mehrzahl von optischen Rückausgangspfaden einen entsprechenden der Mehrzahl von Rückausgangslichtstrahlen überträgt; und
eine Ausgangs-Router-Einrichtung (220) zum Kombinieren der Rückausgangslichtstrahlen von der Mehrzahl von optischen Rückausgangspfaden (215 - 219) in eine gemeinsame Schaltknotenglasfaser (223), die die Mehrzahl von Rückausgangslichtstrahlen überträgt.

28. Optische Vorrichtung (100), aufweisend:
zumindest einen Optisch-zu-Elektrisch-Signalwandler (182 - 185), der dazu ausgebildet ist, empfangene optische Signale (170 - 179) in empfangene elektrische Signale (190 - 198) zu wandeln;
zumindest einen elektrischen Aufwärtswandler (201 - 204) gemäß Anspruch 1,
zumindest einen Elektrisch-zu-Optisch-Wandler (210 - 214), der dazu ausgebildet ist, die aufwärts gewandelten elektrischen Signale in eine optische Form zu wandeln; und
zumindest einen Modulator (210 - 214), der dazu ausgebildet ist, aufwärts gewandelte elektrische Signale in Licht unterschiedlicher Wellenlängen und unterschiedliche Frequenzbänder zu modulieren, die je weniger als eine Oktave breit sind.

29. Optische Vorrichtung (100) nach Anspruch 28, wobei:
der zumindest eine Modulator (210 - 214) dazu ausgebildet ist, aufwärts gewandelte elektrische Signale auf Licht unterschiedlicher Wellenlängen und in unterschiedliche Frequenzbänder zu modulieren, die je weniger als eine halbe Oktave breit sind.

30. Optische Vorrichtung (100) nach Anspruch 28, ferner aufweisend:
eine Mehrzahl optischer Ausgänge; und
und wobei die optische Vorrichtung (100) dazu ausgebildet ist, modulierte optische Mehrträgerausgangssignale (115 - 117) innerhalb eines ersten Frequenzbandes an einem ersten optischen Ausgang bereitzustellen und die modulierten optischen Mehrträgerausgangssignale innerhalb eines zweiten Frequenzbandes an einem zweiten optischen Ausgang bereitzustellen.

31. Optische Vorrichtung (100) nach Anspruch 30, wobei
die optische Vorrichtung (100) dazu ausgebildet ist, modulierte optische Mehrträgerausgangssignale innerhalb eines ersten Frequenzbandes von etwa 200 - 800 MHz an einem ersten optischen Ausgang bereitzustellen und modulierte optische Mehrträgerausgangssignale innerhalb eines zweiten Frequenzbandes von etwa 300 - 1200 MHz an einem zweiten optischen Ausgang bereitzustellen.

32. Optische Vorrichtung (100) nach Anspruch 30,
wobei die optische Vorrichtung dazu ausgebildet ist, modulierte optische Mehrträgerausgangssignale innerhalb eines ersten Frequenzbandes von etwa 400 - 600 MHz an einem ersten optischen Ausgang bereitzustellen und modulierte optische Mehrträgerausgangssignale innerhalb eines zweiten Frequenzbandes von etwa 600 - 900 MHz an einem zweiten optischen Ausgang bereitzustellen.

33. Verfahren zum Bereitstellen einer optischen Kommunikation mit dem Schritt:
Bereitstellen einer Mehrzahl optischer Mehrträgersignale, **gekennzeichnet durch**:
Umwandeln der Mehrzahl optischer Mehrträgersignale in eine Mehrzahl erster elektronischer Mehrträgersignale, die eine Vielzahl von Trägersignalen aufweisen, die durch entsprechende Informationssignale moduliert sind, wobei sich die Frequenzen der Trägersignale im gleichen elektronischen Mehrträgersignal voneinander unterscheiden und sich jedes Trägersignal innerhalb eines ersten Frequenzbandes befindet und wobei die Trägerfrequenzen eines jeden Trägersignals des ersten elektronischen Mehrträgersignals etwa gleich sind;
Umwandeln eines jeden ersten elektronischen Mehrträgersignals in ein zweites elektronisches Mehrträgersignal mit einer Vielzahl von Trägersignalen mit Frequenzen in einem zweiten Frequenzband mit einer minimalen Frequenz, die zumindest zwei mal höher als eine maximale Frequenz des ersten Frequenzbandes ist, wobei die Trägersignale des zweiten elektronischen Mehrträgersignals mit den gleichen Informationssignalen wie die Trägersignale des ersten elektronischen Mehrträgersignals moduliert sind.

34. Verfahren nach Anspruch 33,
ferner aufweisend: Bereitstellen eines dritten optischen Mehrträgerrücksignals mit einer Vielzahl von Trägersignalen mit Frequenzen in einem dritten Frequenzband mit einer minimalen Frequenz, die höher als eine maximale Frequenz des ersten Frequenzbandes ist;
wobei das zweite und das dritte Frequenzband unterschiedliche nicht überlappende Bereiche aufweisen, so dass die minimale Frequenz eines beliebigen Trägersignals im dritten Frequenzband niedriger als die maximale Frequenz eines beliebigen Trägersignals im zweiten Frequenzband ist;
die minimalen Frequenzen der Trägersignale im zweiten und dritten Frequenzband zumindest viermal höher als die maximale Frequenz der Trägersignale im ersten Frequenzband sind;
die minimalen Frequenzen der Trägersignale in den zweiten Frequenzbändern vorzugsweise zumindest etwa 200 MHz,
vorzugsweise zumindest etwa 400 MHz, sind;
die maximale Frequenz des dritten Frequenzbandes 1200 MHz ist; und/oder
die Breite des zweiten und dritten Frequenzbandes niedriger als eine Oktave, vorzugsweise niedriger als eine halbe Oktave sind.

35. Verfahren nach Anspruch 33, mit den folgenden Schritten:
Bereitstellen einer entsprechenden Vielzahl von Kundenschnittstelleneinheiten, die je an eine Vielzahl von Koaxialkabelnetzwerken angeschlossen sind;
Erzeugen eines ersten elektronischen Mehrträgersignals in jedem der Koaxialkabelnetzwerke unter Verwendung der Vielzahl der Kundenschnittstelleneinheiten, die an jedes Netzwerk angeschlossen sind, wobei sich die Frequenzen der Trägersignale des ersten elektronischen Mehrträgersignals in jedem Koaxialnetzwerk im gleichen ersten Frequenzband befinden;
Bereitstellen eines oder mehrerer hybrider Glasfaser-Kabel-Knoten(s);
Bereitstellen einer oder mehrerer optischer Glasfaser(n);
Umwandeln eines oder mehrerer optischer Vorwärtsmehrträgersignale aus einer der optischen Glasfasern in elektronische Vorwärtsmehrträgersignale in den Koaxialkabelnetzwerken;
Separieren der Mehrzahl erster elektronischer Signale in den Koaxialkabelnetzwerken in eine Vielzahl separierter erster elektronischer Signale in den Knoten;
ein erstes Umwandeln einer ersten Mehrzahl separierter erster elektronischer Signale in den Knoten in ein zweites einziges elektronisches Mehrträgersignal, wobei die Frequenzen der Trägersignale in einem zweiten Frequenzband eine minimale Trägerfrequenz aufweisen, die höher als eine maximale Trägerfrequenz des ersten Frequenzbandes ist, und eine Breite des zweiten Frequenzbandes kleiner als eine Oktave ist; und
ein zweites Umwandeln des zweiten elektronischen Mehrträgersignals in ein erstes optisches Mehrträgersignal in einer ersten der optischen Glasfasern, wobei sich die Frequenzen der Trägersignale im zweiten Frequenzband befinden.

36. Verfahren nach Anspruch 35,
ferner aufweisend ein drittes Umwandeln einer zweiten Mehrzahl separierter erster elektronischer Signale in den Knoten in ein einziges drittes elektronisches Mehrträgersignal, wobei die Frequenzen der Trägersignale in einem dritten Frequenzband eine minimale Trägerfrequenz aufweisen, die höher als eine maximale Trägerfrequenz des ersten Frequenzbandes ist, und eine Frequenzbandbreite kleiner als eine Oktave aufweisen; und
ein viertes Umwandeln des dritten elektronischen Signals in ein zweites optisches Mehrträgersignal in der ersten der optischen Glasfasern, wobei sich die Frequenzen der Trägersignale im dritten Frequenzband befinden und sich eine Lichtwellenlänge ausreichend von einer Lichtwellenlänge des ersten optischen Signals unterscheidet, so dass die ersten und zweiten optischen Signale durch einen Wellenlängen-Multiplex-Demultiplexer separiert werden können.

37. Verfahren nach Anspruch 35,
ferner aufweisend das Bereitstellen eines Glasfaserschaltknotens;
und wobei das erste Umwandeln Folgendes umfasst:
ein drittes Umwandeln der ersten Mehrzahl separierter erster elektronischer Signale in den Knoten in eine entsprechende Mehrzahl zweiter optischer Signale in einer oder mehrerer der optischen Glasfaser(n), wobei sich die Frequenzen der Trägersignale in einem dritten Frequenzband befinden;
ein viertes Umwandeln der Mehrzahl zweiter optischer Signale in einer oder mehreren optischen Glasfaser(n) in ein oder mehrere dritte(s) elektronische(s) Mehrträgersignal(e) in dem Schaltknoten, wobei sich die Frequenzen der Trägersignale im dritten Frequenzband befinden;
ein fünftes Umwandeln der Frequenzen und Kombinieren der Trägersignale der dritten elektronischen Signale, um das einzige zweite elektronische Signal bereitzustellen.

38. Verfahren nach Anspruch 37, bei dem:
eine Mehrzahl von Knoten vorhanden sind und jeder der Knoten an ein einziges entsprechendes Koaxialkabelnetzwerk angeschlossen ist;
das dritte Umwandeln einen entsprechenden optischen Sender in jedem Knoten verwendet, um die zweiten optischen Signale in unterschiedlichen entsprechenden optischen Glasfasern bereitzustellen, wobei sich die Frequenzen der Trägersignale im ersten Band befinden;
das vierte Umwandeln jedes der zweiten optischen Signale in einer entsprechenden optischen Glasfaser in ein entsprechendes drittes elektronisches Signal mit Frequenzen im dritten Band umwandelt;
die Frequenzbereiche des ersten und dritten Bandes etwa gleich sind;
das fünfte Umwandeln aufweist: Umwandeln der Frequenzen der Trägersignale des dritten elektronischen Signals, um entsprechende vierte elektronische Signale bereitzustellen, die jeweils Trägerfrequenzen in einem unterschiedlichen Unterband des zweiten Frequenzbandes aufweisen; und
Kombinieren der vierten elektronischen Mehrträgersignale in das einzige zweite elektronische Mehrträgersignal.

39. Verfahren nach Anspruch 35, wobei das erste Umwandeln umfasst:
ein drittes Umwandeln der Mehrzahl separierter erster elektronischer Signale in den Knoten in eine Mehrzahl entsprechender dritter elektronischer Mehrträgersignale, wobei sich die Frequenzen der Trägersignale eines jeden dritten elektronischen Signals in einem unterschiedlichen Unterband eines dritten Frequenzbandes mit einer maximalen Trägerfrequenz befinden, die zumindest gleich der minimalen Trägerfrequenz des ersten Frequenzbandes plus der Anzahl zweiter elektronischer Signale, die in das erste optische Signal umgewandelt werden, multipliziert mit der Breite des ersten Frequenzbandes ist;
ein viertes Umwandeln der Mehrzahl dritter elektronischer Mehrträgersignale in das zweite Signal.

40. Verfahren nach Anspruch 39, bei dem:
das dritte Frequenzband der dritten elektronischen Mehrträgersignale den gleichen Frequenzbereich wie das zweite Frequenzband der zweiten elektronischen Signale aufweist; und
das erste Umwandeln ferner das Kombinieren der dritten elektronischen Mehrträgersignale aufweist, um die zweiten elektronischen Mehrträgersignale zu bilden.

41. Verfahren nach Anspruch 39, bei dem:
das Verfahren ferner das Bereitstellen eines Glasfaser-Schaltknotens aufweist;
die maximale Trägerfrequenz des dritten Frequenzbandes niedriger als die minimale Trägerfrequenz des zweiten Frequenzbandes ist; und
das dritte Umwandeln umfasst:
Kombinieren der Mehrzahl dritter elektronischer Signale in ein einziges viertes elektronisches Signal, wobei sich die Frequenzen der Trägersignale im dritten Frequenzband befinden;
ein fünftes Umwandeln des vierten elektronischen Signals in ein zweites optisches Mehrträgersignal in einer der optischen Glasfasern, wobei sich die Frequenzen der Trägersignale im dritten Frequenzband befinden;
ein sechstes Umwandeln des zweiten optischen Signals in der optischen Glasfaser in ein fünftes elektronisches Signal im Schaltknoten, das etwa ein Duplikat des vierten elektronischen Signals ist; und
ein siebtes Umwandeln des fünften elektronischen Signals mit Trägersignalfrequenzen im dritten Frequenzband in das zweite elektronische Signal mit Trägersignalfrequenzen im zweiten Frequenzband.

## Revendications

1. Convertisseur élévateur de fréquence, comprenant :
un moyen de réception (302-303) pour recevoir une première pluralité de premiers signaux multiporteurs électroniques, chacun comprenant une multitude de premiers signaux porteurs modulés par différents signaux d'informations respectifs, les fréquences des premiers signaux porteurs dans le même signal multiporteur électronique étant toutes différentes, les fréquences d'une pluralité des premiers signaux porteurs de premiers signaux multiporteurs électroniques différents étant approximativement les mêmes, les premiers signaux porteurs de chaque premier signal multiporteur électronique étant dans la même première bande de fréquences ;
**caractérisé par** :
un moyen de conversion (304-305, 310) pour convertir et combiner les premiers signaux multiporteurs électroniques respectifs en un deuxième signal multiporteur électronique unique comprenant une multitude de deuxièmes signaux porteurs de fréquences respectives mutuellement différentes et modulés respectivement par les mêmes signaux d'informations que les premiers signaux porteurs, la fréquence de chacun des deuxièmes signaux porteurs étant dans une deuxième bande de fréquences, la fréquence porteuse minimale de la deuxième bande étant au moins deux fois supérieure à la fréquence porteuse maximale de la première bande ; et
un moyen de transmission (312) pour transmettre le deuxième signal multiporteur électronique unique.

2. Convertisseur élévateur de fréquence selon la revendication 1, qui est adapté de sorte que :
les signaux d'informations de chaque premier signal modulent les deuxièmes signaux porteurs respectifs avec les fréquences dans une sous-bande différente de la deuxième bande de fréquences ;
la largeur de bande de fréquences de la première bande de fréquences est plus d'une octave ;
la largeur de bande de fréquences de la deuxième bande de fréquences est moins d'une octave, de préférence moins d'une demi-octave ;
la fréquence minimale de la deuxième bande est plus qu'environ six fois supérieure à la fréquence maximale de la première bande ;
la fréquence maximale de la première bande de fréquences est au-dessous de 100 MHz et la fréquence minimale de la deuxième bande est au-dessus de 200 MHz ;
la fréquence maximale de la première bande de fréquences est au-dessous d'environ 65 MHz et la fréquence minimale de la deuxième bande est au-dessus d'environ 400 MHz ; et/ou
la fréquence maximale de la première bande de fréquences est au-dessus d'environ 5 MHz et au-dessous d'environ 65 MHz, et la première largeur de bande est plus de trois octaves, et la fréquence minimale de la deuxième bande est au-dessus d'environ 400 MHz et au-dessous d'environ 650 MHz, et la deuxième largeur de bande est moins d'une demi-octave.

3. Convertisseur élévateur de fréquence selon la revendication 1, dans lequel :
le moyen de réception (753-754) est conçu pour communiquer avec les réseaux de câbles coaxiaux respectifs pour recevoir la première pluralité des premiers signaux multiporteurs électroniques ;
le moyen de conversion comprend les convertisseurs de fréquence électroniques (757-758) pour convertir les premiers signaux multiporteurs électroniques respectifs en troisièmes signaux multiporteurs électroniques différents respectifs, chacun comprenant une partie des deuxièmes signaux porteurs avec des fréquences dans une sous-bande de la deuxième bande de fréquences ; et un combineur (759) pour combiner les troisièmes signaux multiporteurs électroniques en deuxième signal multiporteur électronique ; et
le convertisseur élévateur de fréquence comprend en outre un émetteur optique (760) pour convertir le deuxième signal multiporteur électronique unique en un premier signal multiporteur optique.

4. Convertisseur élévateur de fréquence selon la revendication 1, dans lequel :
le convertisseur élévateur de fréquence comprend en outre un émetteur optique (800) pour convertir le deuxième signal multiporteur électronique unique en un premier signal multiporteur optique ; et
le moyen de conversion comprend :
des premiers convertisseurs de fréquence (797, 798) pour convertir les premiers signaux multiporteurs électroniques respectifs en troisièmes signaux multiporteurs électroniques différents respectifs, chacun comprenant une multitude de troisièmes signaux porteurs, les fréquences des troisièmes signaux porteurs de chaque troisième signal multiporteur électronique étant dans une sous-bande différente d'une troisième bande de fréquences, la fréquence maximale de la troisième bande de fréquences étant au moins environ la fréquence minimale de la première bande de fréquences, plus la largeur de bande de fréquences de la première bande de fréquences fois le nombre des premiers signaux multiporteurs électroniques dans la première pluralité de signaux ;
un combineur (799) pour combiner les troisièmes signaux multiporteurs électroniques en un quatrième signal multiporteur électronique unique avec les troisièmes signaux porteurs dans la troisième bande de fréquences ;
un premier émetteur optique (800) pour convertir le quatrième signal multiporteur électronique unique en un premier signal multiporteur optique ;
un récepteur optique (820) pour convertir le premier signal multiporteur optique en un cinquième signal multiporteur électronique ;
un deuxième convertisseur (821) pour convertir le cinquième signal multiporteur électronique en un deuxième signal multiporteur électronique unique avec les deuxièmes signaux porteurs dans la deuxième bande de fréquences, la fréquence minimale de la deuxième bande de fréquences étant supérieure à la fréquence maximale de la troisième bande de fréquences ; et
un deuxième émetteur optique (822) pour convertir le deuxième signal multiporteur électronique unique en un deuxième signal multiporteur optique.

5. Convertisseur élévateur de fréquence selon la revendication 1, dans lequel :
le moyen de réception (302-303) comprend une pluralité de récepteurs optiques (182-183) pour convertir les premiers signaux multiporteurs optiques respectifs en la première pluralité de premiers signaux multiporteurs électroniques ;
le moyen de conversion comprend : des convertisseurs de fréquence (304-305) pour convertir les premiers signaux multiporteurs électroniques respectifs en troisièmes signaux multiporteurs électroniques différents respectifs, chacun ayant une partie des deuxièmes signaux porteurs avec les fréquences porteuses dans une partie différente respective de la bande de fréquences des deuxièmes signaux porteurs ; et un combineur (310) pour combiner les troisièmes signaux électroniques en deuxième signal multiporteur électronique ; et
le convertisseur élévateur de fréquence comprend en outre un émetteur optique (210) pour convertir le deuxième signal multiporteur électronique unique en un deuxième signal multiporteur optique.

6. Convertisseur élévateur de fréquence selon la revendication 1, dans lequel :
les moyens de réception sont conçus pour communiquer avec les réseaux de câbles coaxiaux respectifs (833-834) pour recevoir les quatrièmes signaux multiporteurs électroniques égaux en nombre à la première pluralité des premiers signaux multiporteurs électroniques ;
le moyen de réception comprend un moyen d'émetteur optique (838) pour convertir les quatrièmes signaux multiporteurs électroniques en premiers signaux multiporteurs optiques respectifs ;
le moyen de réception comprend un moyen de récepteur optique (861) pour convertir les premiers signaux multiporteurs optiques respectivement en premiers signaux multiporteurs électroniques ;
le moyen de conversion comprend : un convertisseur de fréquence (862) pour convertir les premiers signaux multiporteurs électroniques respectifs en troisièmes signaux multiporteurs électroniques différents respectifs, chacun comprenant une partie des deuxièmes signaux porteurs avec des fréquences dans une sous-bande de la deuxième bande de fréquences ; et un combineur (864) pour combiner les troisièmes signaux multiporteurs électroniques en le deuxième signal multiporteur électronique ; et
le convertisseur élévateur de fréquence comprend un émetteur optique (865) pour convertir le deuxième signal multiporteur électronique unique en un deuxième signal multiporteur optique.

7. Convertisseur élévateur de fréquence selon la revendication 1, dans lequel
le convertisseur élévateur de fréquence (201-204) est configuré pour convertir à la hausse une première porteuse de la première bande de fréquences de sorte que la première porteuse, une fois modulée, occupe une première sous-bande de la première bande de fréquences, et pour convertir à la hausse une deuxième porteuse de la première bande de fréquences de sorte que la deuxième porteuse, une fois modulée, occupe une deuxième sous-bande de la première bande de fréquences, où la largeur de bande de la première sous-bande est supérieure à une octave, et la largeur de bande de la deuxième sous-bande est moins d'une octave.

8. Convertisseur élévateur de fréquence selon la revendication 7, dans lequel
le convertisseur élévateur de fréquence (201-204) est configuré pour convertir à la hausse une première porteuse de la première bande de fréquences de sorte que la première porteuse, une fois modulée, occupe une première sous-bande de la première bande de fréquences, et pour convertir à la hausse une deuxième porteuse de la première bande de fréquences de sorte que la deuxième porteuse, une fois modulée, occupe une deuxième sous-bande de la première bande de fréquences, où la largeur de bande de la première sous-bande est supérieure à trois octaves, et la largeur de bande de la deuxième sous-bande est moins d'une moitié d'une octave.

9. Convertisseur élévateur de fréquence selon la revendication 8, dans lequel
le convertisseur élévateur de fréquence (201-204) est configuré pour convertir à la hausse une première porteuse de la première bande de fréquences de sorte que la première porteuse, une fois modulée, occupe une première sous-bande de la première bande de fréquences dans la gamme de 5 à 65 MHz, et pour convertir à la hausse une deuxième porteuse de la première bande de fréquences de sorte que la deuxième porteuse, une fois modulée, occupe une deuxième sous-bande de la première bande de fréquences dans la gamme de 400 à 650 MHz.

10. Convertisseur élévateur de fréquence selon la revendication 7, dans lequel
le convertisseur élévateur de fréquence (201-204) est configuré pour convertir à la hausse une première porteuse de la première bande de fréquences de sorte que la première porteuse, une fois modulée, occupe une première sous-bande de la première bande de fréquences, et pour convertir à la hausse une deuxième porteuse de la première bande de fréquences de sorte que la deuxième porteuse, une fois modulée, occupe une deuxième sous-bande de la première bande de fréquences, où une fréquence minimale de la deuxième sous-bande est plus que deux fois supérieure à une fréquence maximale de la première sous-bande.

11. Convertisseur élévateur de fréquence selon la revendication 7, dans lequel
le convertisseur élévateur de fréquence (201-204) est configuré pour convertir à la hausse une première porteuse de la première bande de fréquences de sorte que la première porteuse, une fois modulée, occupe une première sous-bande de la première bande de fréquences, et pour convertir à la hausse une deuxième porteuse de la première bande de fréquences de sorte que la deuxième porteuse, une fois modulée, occupe une deuxième sous-bande de la première bande de fréquences, où une fréquence minimale de la deuxième sous-bande est plus de six fois supérieure à une fréquence maximale de la première sous-bande.

12. Convertisseur élévateur de fréquence selon la revendication 7, dans lequel
le convertisseur élévateur de fréquence (201-204) est configuré pour convertir à la hausse les fréquences des porteuses dans une première multiporteuse en une première bande de fréquences, et pour convertir à la hausse les fréquences des porteuses dans un deuxième signal multiporteur en une deuxième bande, une fréquence minimale des porteuses dans la deuxième bande étant au-dessus de 200 MHz et une fréquence porteuse maximale des porteuses dans la première bande étant au-dessous de 100 MHz.

13. Convertisseur élévateur de fréquence selon la revendication 7, dans lequel
le convertisseur élévateur de fréquence (201-204) est configuré pour convertir à la hausse les fréquences des porteuses dans une première multiporteuse en une première bande de fréquences, et pour convertir à la hausse les fréquences des porteuses dans un deuxième signal multiporteur en une deuxième bande, une fréquence minimale des porteuses dans la deuxième bande étant au-dessus de 300 MHz et une fréquence porteuse maximale des porteuses dans la première bande étant au-dessous de 65 MHz.

14. Convertisseur élévateur de fréquence selon la revendication 1, dans lequel
le convertisseur élévateur de fréquence (201-204) est configuré pour augmenter les fréquences porteuses des signaux électriques reçus par un facteur d'environ deux lorsque la fréquence porteuse des signaux électriques reçus est au-dessous de 100 MHz et que la longueur d'onde du signal optique en lequel le signal électrique reçu est converti après une conversion à la hausse, est entre 1 220 nm et 1 360 nm, ou entre 1 480 nm et 1 620 nm.

15. Convertisseur élévateur de fréquence selon la revendication 1, dans lequel
le convertisseur élévateur de fréquence (201-204) est configuré pour augmenter les fréquences porteuses des signaux électriques reçus par un facteur d'environ 40 lorsque la fréquence porteuse des signaux électriques reçus est environ entre 5 et 65 MHz.

16. Noeud de fibre de câble hybride (752), ayant le convertisseur élévateur de fréquence de la revendication 1 et comprenant en outre :
un boîtier (766) contenant l'appareil du noeud ;
un moyen (767-768) pour connecter une pluralité de réseaux de câbles coaxiaux (753-754) au noeud ;
un moyen (769) pour connecter une première fibre optique (762) pour acheminer un signal optique à partir du noeud ; et
un moyen d'émetteur optique (760) pour convertir le deuxième signal multiporteur électronique en un premier signal multiporteur optique.

17. Noeud selon la revendication 16, dans lequel :
le noeud comprend en outre : un premier moyen de récepteur optique (764) pour convertir un signal en avant optique en un signal en avant électronique respectif dans un ou plusieurs des réseaux de câbles coaxiaux ; et un moyen de filtre (755-756) pour séparer les premiers signaux multiporteurs électroniques des signaux en avant électroniques dans les réseaux de câbles coaxiaux respectifs et fournir les premiers signaux multiporteurs électroniques au moyen du convertisseur élévateur de fréquence.

18. Noeud selon la revendication 17, dans lequel :
le premier moyen de récepteur optique et le moyen d'émetteur optique sont adaptés pour communiquer avec la même extrémité d'une fibre optique commune (762) ;
le noeud comprend en outre un deuxième moyen de récepteur optique (819) pour convertir un signal de diffusion optique en un signal de diffusion électronique ; et
un deuxième moyen de combineur électronique (810) pour combiner le signal de diffusion électronique avec chacun des signaux en avant électroniques.

19. Système de communication, ayant le convertisseur élévateur de fréquence selon la revendication 1, comprenant :
une multitude de fibres optiques (113, 124-128, 144-148, 154, 223);
un moyen de passerelle (402) pour fournir une pluralité de premiers signaux de diffusion électroniques et ;
un premier moyen de modulation (413) pour moduler une multitude de premiers signaux porteurs avec les premiers signaux de diffusion électroniques ;
un premier moyen de combinaison (414) pour combiner les premiers signaux porteurs modulés en un deuxième signal de diffusion électronique multiporteur ;
un premier moyen d'émetteur optique (106) pour convertir le deuxième signal de diffusion électronique en un signal de diffusion multiporteur optique ;
un premier moyen d'acheminement optique (108, 114) pour diviser le signal de diffusion multiporteur optique en une pluralité de sous-signaux de diffusion multiporteurs dans les fibres optiques respectives ;
une multitude de réseaux de câbles coaxiaux (136-140) ;
un premier moyen de récepteur (135) pour convertir les sous-signaux de diffusion multiporteurs optiques en troisièmes signaux de diffusion multiporteurs électroniques respectifs dans les réseaux de câbles coaxiaux ;
un moyen d'interface client (380-381) connecté aux réseaux de câbles coaxiaux (771) pour recevoir les troisièmes signaux de diffusion électroniques ;
le moyen de passerelle pour fournir une multitude de premiers signaux de service électroniques pour des services de communications informatiques et téléphoniques, les premiers signaux de service électroniques étant divisés en une multitude de groupes de destination, chaque groupe de destination comprenant une multitude de signaux d'informations pour une transmission à un ou plusieurs réseaux de câbles coaxiaux ;
un deuxième moyen de modulation (431) pour moduler les groupes des deuxièmes signaux porteurs avec les groupes respectifs des premiers signaux de service électroniques ;
un deuxième moyen de combinaison (433) pour combiner les deuxièmes signaux porteurs modulés de chaque groupe en un deuxième signal de service électronique multiporteur respectif ;
un deuxième moyen d'émetteur optique (435) pour convertir les deuxièmes signaux de service en signaux de service optiques multiporteurs respectifs ;
un deuxième moyen d'acheminement optique (153, 158) pour multiplexer une pluralité des signaux de service optiques dans chaque fibre (452) d'une pluralité de fibres optiques communes (452-453) pour les concentrateurs de fibre respectifs, et pour chaque fibre commune, les signaux de service optiques dans la fibre ayant des longueurs d'onde optique différentes ; et pour démultiplexer la longueur d'onde de la pluralité des signaux de service optiques à partir de chaque fibre optique commune dans les fibres optiques respectives ;
dans lequel le premier moyen de récepteur (135) est conçu pour convertir les signaux de service optiques dans les fibres respectives en troisièmes signaux de service multiporteurs électroniques respectifs dans les réseaux de câbles coaxiaux ;
dans lequel le moyen d'interface client est conçu pour recevoir les troisièmes signaux de service électroniques ; et
dans lequel le moyen d'interface client (380-381) est conçu pour fournir une multitude de premiers signaux de retour multiporteurs électroniques, chaque premier signal de retour électronique comprenant une multitude de troisièmes signaux porteurs modulés par différents signaux d'informations respectifs, les fréquences des signaux porteurs dans le même signal multiporteur sont toutes différentes, les fréquences d'une pluralité des troisièmes signaux porteurs des premiers signaux de retour électroniques sont environ les mêmes que les autres premiers signaux de retour électroniques, les fréquences des troisièmes signaux porteurs de chaque premier signal de retour électronique étant dans la même première bande de fréquences ;
comprenant en outre un moyen de conversion (181, 200) pour convertir et combiner un groupe d'un ou de plusieurs premiers signaux de retour électroniques en un deuxième signal électronique multiporteur unique respectif comprenant une multitude de quatrièmes signaux porteurs, chacun d'une fréquence différente, modulés respectivement par les mêmes signaux d'informations que dans le groupe respectif des premiers signaux de retour électroniques, avec les fréquences des quatrièmes signaux porteurs dans une deuxième bande de fréquences, la fréquence porteuse minimale de la deuxième bande étant supérieure à la fréquence porteuse maximale de la première bande ;
un troisième moyen d'émetteur optique (209) pour convertir la multitude des deuxièmes signaux de retour électroniques en premiers signaux de retour optiques multiporteurs respectifs dans les fibres optiques respectives ;
un troisième moyen d'acheminement optique (220, 240) pour multiplexer un groupe de premiers signaux de retour optiques multiples à partir des fibres optiques respectives dans chaque fibre de fibres optiques communes multiples, pour chaque fibre commune, les premiers signaux de retour optiques dans la fibre ont des longueurs d'onde optiques différentes ; et pour démultiplexer la longueur d'onde des premiers signaux de retour optiques multiples à partir de chaque fibre optique commune ;
un deuxième moyen de récepteur (243) pour convertir les premiers signaux de retour optiques en troisièmes signaux de retour multiporteurs respectifs ;
un moyen de séparation (439) pour séparer chacun des quatrièmes signaux porteurs de chacun des troisièmes signaux de retour ; et
un moyen de démodulation (440) pour extraire les signaux d'informations des quatrièmes signaux porteurs respectifs et fournir les signaux d'informations extraits au moyen de passerelle ; et
dans lequel le moyen de passerelle (402-404) est conçu pour recevoir les signaux d'informations extraits.

20. Appareil optique, comprenant :
le convertisseur élévateur de fréquence selon la revendication 1 ;
un chemin optique d'entrée (170) pour acheminer un faisceau lumineux d'entrée modulé par un signal porteur d'entrée modulé par un signal d'informations, le signal porteur d'entrée ayant une fréquence radio ;
un chemin optique de sortie (215) pour acheminer un faisceau lumineux de sortie modulé par un signal porteur de sortie modulé par le même signal d'informations que le signal porteur d'entrée, le signal porteur de sortie ayant une fréquence radio supérieure au signal porteur d'entrée ; et
un moyen de convertisseur élévateur de fréquence optique (180) pour convertir le faisceau lumineux d'entrée acheminant le signal porteur d'entrée acheminant le signal d'informations dans le faisceau lumineux de sortie acheminant le signal porteur de sortie de fréquence supérieure acheminant le même signal d'informations.

21. Appareil optique selon la revendication 20, dans lequel :
l'appareil comprend en outre : un coupleur d'entrée (175) pour connecter une fibre d'entrée (144) au chemin optique d'entrée (170) ; et un coupleur de sortie (222) pour connecter une fibre de sortie (223) au chemin optique de sortie (221) ;
une longueur d'onde des faisceaux lumineux d'entrée ou de sortie se situe entre 1 250 et 1 360 nm ou entre 1 500 et 1 610 nm ;
une fréquence radio du signal porteur de sortie est au moins environ deux fois supérieure à une fréquence radio du signal porteur d'entrée ;
la fréquence radio du signal porteur d'entrée est au-dessous de 100 MHz et la fréquence radio du signal porteur de sortie est au-dessus de 200 MHz ;
la fréquence radio du signal porteur de sortie est environ entre 400 et 900 MHz;
la fréquence radio du signal porteur de sortie est plus qu'environ 40 fois supérieure à la fréquence du signal porteur d'entrée ;
la fréquence radio du signal porteur d'entrée est environ entre 5 et 65 MHz et la fréquence radio du signal porteur de sortie est au moins 400 MHz ;
l'appareil optique comprend en outre un ou plusieurs chemins optiques d'entrée supplémentaires (171-173) pour fournir une pluralité de chemins optiques d'entrée (170-173) acheminant les faisceaux lumineux d'entrée respectifs modulés par les signaux porteurs d'entrée respectifs modulés par un signal d'informations respectif, les signaux porteurs d'entrée respectifs ayant des fréquences radio ; et le moyen de convertisseur élévateur de fréquence optique convertit la pluralité des faisceaux lumineux d'entrée acheminant les signaux porteurs d'entrée acheminant les signaux d'informations dans le faisceau lumineux de sortie acheminant les signaux porteurs de sortie de fréquence supérieure acheminant les mêmes signaux d'informations ;
l'appareil optique comprend en outre un ou plusieurs chemins optiques de sortie supplémentaires (216-219) pour fournir une pluralité de chemins optiques de sortie acheminant les faisceaux lumineux de sortie respectifs modulés par les signaux porteurs de sortie respectifs modulés par les mêmes signaux d'informations que les signaux porteurs d'entrée correspondants, les signaux porteurs de sortie respectifs ayant une fréquence radio supérieure aux signaux porteurs d'entrée correspondants ; et/ou
le moyen de convertisseur élévateur de fréquence optique (180) est conçu pour convertir la pluralité des faisceaux lumineux d'entrée acheminant les signaux porteurs d'entrée acheminant les signaux d'informations dans la pluralité des faisceaux lumineux de sortie acheminant les signaux porteurs de sortie de fréquence supérieure acheminant les mêmes signaux d'informations.

22. Appareil optique selon la revendication 20, dans lequel :
les faisceaux lumineux d'entrée et de sortie sont des signaux optiques multiporteurs dans lesquels le faisceau lumineux est modulé par une multitude de signaux porteurs, chaque signal porteur du même faisceau lumineux a une fréquence radio différente ;
les signaux porteurs du même faisceau lumineux sont modulés par différents signaux d'informations respectifs ;
les signaux porteurs de sortie sont modulés par les mêmes signaux d'informations respectifs que les signaux porteurs d'entrée correspondants ayant des fréquences inférieures ;
les signaux porteurs de sortie ont des fréquences radio différentes respectives, toutes dans une bande de fréquences avec une largeur de bande d'environ moins d'une octave, de sorte que la fréquence maximale d'une porteuse dans la bande est inférieure ou égale à environ deux fois la fréquence minimale d'une porteuse dans la bande, de sorte qu'essentiellement toutes les deuxièmes distorsions d'ordre du signal multiporteur peuvent être filtrées ;
les signaux porteurs de sortie ont des fréquences radio dans une bande de fréquences avec une largeur d'environ moins d'une demi-octave, de sorte que la fréquence maximale d'une porteuse dans la bande est inférieure ou égale à environ 1,5 fois la fréquence minimale d'une porteuse dans la bande, de sorte qu'essentiellement toutes les quatrièmes distorsions d'ordre du signal multiporteur peuvent être filtrées ;
les signaux porteurs multiples du faisceau lumineux d'entrée ont des fréquences radio dans une bande de fréquences s'étendant au moins entre environ 5 et 45 MHz et les signaux porteurs correspondants dans le faisceau lumineux de sortie ont des fréquences radio dans une bande avec une fréquence porteuse minimale au-dessus de 400 MHz ;
l'appareil optique comprend en outre un ou plusieurs chemins optiques de sortie supplémentaires (216-219) pour fournir une pluralité de chemins optiques de sortie acheminant les faisceaux lumineux de sortie respectifs qui sont des signaux de sortie optiques multiporteurs comprenant un premier faisceau lumineux de sortie modulé par une multitude de signaux porteurs dans une première bande de fréquences et un deuxième faisceau lumineux de sortie modulé par une multitude de signaux porteurs dans une deuxième bande de fréquences, et dans lequel les bandes de fréquences ne se recoupent pas ;
les fréquences porteuses de la première bande de fréquences sont toutes entre environ 200 MHz et environ 800 MHz ; et les fréquences porteuses de la deuxième bande de fréquences sont toutes entre 300 MHz et 1 200 MHz ;
les longueurs d'onde de deux des faisceaux lumineux de sortie sont séparées par une différence entre 0,4 nm et 1,6 nm.

23. Appareil optique selon la revendication 20, dans lequel :
le moyen de convertisseur élévateur de fréquence optique (180) comprend :
un moyen de récepteur optique (181) pour convertir le faisceau lumineux d'entrée acheminant le signal porteur d'entrée en un signal de courant électronique d'entrée acheminant le même signal porteur d'entrée ;
un moyen de convertisseur élévateur de fréquence électronique (200) pour convertir le signal de courant électronique d'entrée modulé par le signal porteur d'entrée modulé par le signal d'informations en un signal de courant électronique de sortie modulé par le signal porteur de sortie de fréquence supérieure modulé par le même signal d'informations ; et
un moyen d'émetteur optique (209) pour convertir le signal de courant électronique de sortie acheminant le signal porteur de fréquence supérieure en faisceau lumineux de sortie acheminant le même signal porteur de sortie de fréquence supérieure.

24. Appareil optique selon la revendication 23, dans lequel :
le moyen d'émetteur optique (209) comprend un laser modulé directement (262), de préférence un laser à rétroaction distribuée (262) ;
le moyen d'émetteur optique (209) comprend un système de lentille (267) ;
le moyen d'émetteur optique (209) comprend un moyen (258) pour polariser le signal électronique de sortie ;
le moyen d'émetteur optique (209) comprend un amplificateur de puissance (260) ;
le moyen de récepteur optique (181) comprend une photo-diode PIN (286) ;
le moyen de récepteur optique (181) comprend un préamplificateur (288) ;
l'appareil optique comprend en outre un contrôleur (225) pour contrôler dynamiquement la longueur d'onde des lasers pendant le fonctionnement ;
l'appareil optique comprend en outre un ou plusieurs chemins optiques d'entrée supplémentaires (171-173) pour fournir une pluralité de chemins optiques d'entrée (170-173) acheminant les faisceaux lumineux d'entrée respectifs modulés par les signaux porteurs d'entrée respectifs modulés par les signaux d'informations différents respectifs ; le moyen de récepteur optique convertit la pluralité des faisceaux lumineux d'entrée en signaux de courant d'entrée électroniques respectifs acheminant les signaux porteurs d'entrée respectifs ; et les moyen de convertisseur élévateur de fréquence électroniques (200) convertissent la pluralité des signaux de courant d'entrée acheminant les signaux porteurs d'entrée dans le signal de courant électronique de sortie acheminant les signaux porteurs de sortie avec les fréquences supérieures aux signaux porteurs d'entrée et acheminant les mêmes signaux d'informations ;
les moyens de convertisseur élévateur de fréquence électroniques (200) comprennent un moyen de combinaison (310) pour combiner les signaux de courant électronique multiples en un signal de courant électronique unique ;
l'appareil optique comprend en outre un ou plusieurs chemins optiques de sortie supplémentaires (216-219) pour fournir une pluralité de chemins optiques de sortie (215-219) acheminant les faisceaux lumineux de sortie respectifs modulés par les signaux porteurs de sortie respectifs correspondant aux signaux porteurs d'entrée de la pluralité des faisceaux lumineux d'entrée et ayant une fréquence radio supérieure aux signaux porteurs d'entrée, les signaux porteurs de sortie étant modulés par les mêmes signaux d'informations que les signaux porteurs d'entrée correspondants ; les moyens de convertisseur élévateur de fréquence électroniques (200) convertissent la pluralité des signaux de courant électroniques d'entrée modulés par les signaux porteurs d'entrée modulés par les signaux d'informations en une pluralité de signaux de courant électroniques de sortie modulés par les signaux porteurs de sortie de fréquence supérieure modulés par les mêmes signaux d'informations ; et les moyens d'émetteur optiques (209) convertissent la pluralité des signaux de courant électroniques de sortie acheminant les signaux porteurs de sortie de fréquence supérieure en faisceaux lumineux de sortie respectifs acheminant les mêmes signaux porteurs de sortie de fréquence supérieure dans les chemins optiques de sortie (215-219) ; et
le moyen de combinaison (310) est conçu pour convertir quatre signaux électroniques d'entrée, ou plus, en un signal électronique de sortie.

25. Concentrateur de fibre de multiplexage de longueur d'onde, ayant l'appareil optique selon la revendication 20, comprenant :
une multitude de chemins optiques d'entrée de signal de retour (170-173) pour acheminer différents faisceaux lumineux d'entrée de retour respectifs, chacun modulé par une multitude différente respective de signaux porteurs d'entrée de retour, pour chaque faisceau lumineux d'entrée de retour, la multitude respective de signaux porteurs d'entrée de retour sont modulés par des signaux d'informations de retour différents respectifs et chacun a une fréquence radio différente ;
une pluralité de chemins optiques de sortie de signal de retour (215-219) pour acheminer les faisceaux lumineux de sortie de retour respectifs, chacun modulé par une multitude respective de signaux porteurs de sortie de retour, et pour chaque faisceau lumineux de sortie de retour, la multitude respective de signaux porteurs de sortie de retour sont modulés par un signal différent des signaux d'informations de retour, les signaux porteurs de sortie de retour ayant chacun une fréquence radio différente, les fréquences radio des signaux porteurs de sortie de retour étant supérieures aux fréquences radio des signaux porteurs d'entrée de retour ;
le moyen de convertisseur élévateur de fréquence optique (180) pour convertir la multitude de faisceaux lumineux d'entrée de retour acheminant les signaux porteurs d'entrée de retour acheminant les signaux d'informations de retour dans la pluralité de faisceaux lumineux de sortie de retour acheminant les signaux porteurs de sortie de retour de fréquence supérieure acheminant les signaux d'informations de retour, ledit moyen de convertisseur élévateur de fréquence optique (180) comprenant le convertisseur élévateur de fréquence selon la revendication 1 ; et
le moyen d'acheminement de signal comprenant le moyen de combinaison de retour (220) pour combiner les faisceaux lumineux de sortie de retour à partir de la pluralité de chemins optiques de sortie de retour (215-219) dans une fibre optique de concentrateur commune (223).

26. Concentrateur selon la revendication 25, dans lequel :
le concentrateur comprend en outre une multitude de chemins optiques de signal en avant (160-164) pour acheminer les faisceaux lumineux en avant respectifs modulés par des multitudes respectives de signaux porteurs en avant, et pour chaque faisceau lumineux en avant, chaque signal porteur en avant est modulé par un signal d'informations en avant différent respectif et chaque signal porteur en avant a une fréquence radio différente ;
le concentrateur comprend en outre des fibres de noeud communes (540) pour les chemins optiques d'entrée de retour respectifs (570) ; et le moyen d'acheminement de signal est conçu pour acheminer les faisceaux lumineux en avant respectifs à partir des chemins optiques de signal en avant respectifs (556) dans les fibres de noeud communes respectives (540), et achemine le signal d'entrée de retour respectif à partir de la fibre de noeud commune respective (540) dans les chemins optiques d'entrée de retour respectifs (575), de sorte que dans chaque fibre de noeud commune, un faisceau lumineux en avant s'éloigne du concentrateur et qu'un faisceau lumineux de retour s'approche du concentrateur ;
le moyen d'acheminement de signal comprend un multiplexeur par répartition en longueur d'onde d'un noeud (572) pour chaque fibre de noeud commune afin d'acheminer les faisceaux lumineux en avant respectifs à partir des chemins optiques de signal en avant respectifs (556) dans les fibres de noeud communes respectives (540), et achemine le signal d'entrée de retour respectif à partir de la fibre de noeud commune respective (540) dans les chemins optiques d'entrée de retour respectifs (575) ;
le moyen d'acheminement de signal comprend un multiplexeur (524) par répartition en longueur d'onde d'un concentrateur pour acheminer les faisceaux lumineux en avant à partir de la fibre de concentrateur commune (154) dans les chemins optiques de signal en avant respectifs (160-164) ;
le multiplexeur (524) par répartition en longueur d'onde d'un concentrateur est conçu pour acheminer les faisceaux lumineux de retour à partir des chemins optiques de signal en avant (563) dans la fibre de concentrateur commune ; et
le concentrateur comprend en outre un chemin optique de signal de diffusion (501) pour acheminer un faisceau lumineux de diffusion modulé par une multitude de signaux porteurs de diffusion modulés par des signaux d'informations de diffusion différents respectifs, les signaux porteurs de diffusion ont chacun une fréquence radio différente ; et les moyens d'acheminement de signal comprennent des moyens de division (504, 552) pour diviser le faisceau lumineux de diffusion en une multitude de faisceaux lumineux de diffusion similaires dans les chemins optiques de signal de diffusion respectifs (505-508) pour les fibres de noeud communes respectives ; et le multiplexeur par répartition en longueur d'onde d'un noeud est conçu pour acheminer les faisceaux lumineux de diffusion à partir des chemins optiques de signal de diffusion respectifs (505-508) dans les fibres de noeud communes respectives (540-541).

27. Concentrateur de fibre de multiplexage, ayant l'appareil optique selon la revendication 20, comprenant :
une multitude de chemins optiques d'entrée de retour (170-173) pour acheminer les faisceaux lumineux d'entrée de retour respectifs, chaque faisceau modulé par une multitude de signaux porteurs d'entrée de retour modulés par différents signaux d'informations de retour correspondants, et pour chaque faisceau lumineux d'entrée de retour, les fréquences radio des signaux porteurs d'entrée de retour du faisceau lumineux d'entrée de retour sont mutuellement différentes ;
une pluralité de faisceaux optiques de sortie de retour (215-219) pour acheminer les faisceaux lumineux de sortie de retour respectifs, chaque faisceau modulé par une multitude de signaux porteurs de sortie de retour respectivement modulés par les mêmes signaux d'informations de retour que les signaux porteurs d'entrée de retour correspondants, les signaux porteurs de sortie de retour ayant une fréquence radio supérieure aux signaux porteurs d'entrée de retour ;
le moyen de récepteur optique (181) pour convertir la multitude de faisceaux lumineux d'entrée de retour acheminant les signaux porteurs d'entrée de retour dans les signaux de courant électronique d'entrée de retour correspondants acheminant les mêmes signaux porteurs d'entrée de retour ;
le moyen de convertisseur élévateur de fréquence électronique (200) comprenant une pluralité de convertisseurs élévateurs de fréquence électroniques (201-204) pour convertir la multitude de signaux de courant électroniques d'entrée de retour acheminant les signaux porteurs d'entrée de retour acheminant les signaux d'informations de retour dans une pluralité de signaux de courant électroniques de sortie de retour acheminant les signaux porteurs de sortie de retour de fréquence supérieure acheminant les mêmes signaux d'informations de retour ;
le moyen d'émetteur optique (209) pour convertir chaque signal de courant électronique de sortie de retour acheminant les signaux porteurs de sortie de retour de fréquence supérieure en un faisceau lumineux de sortie de retour correspondant acheminant les mêmes signaux porteurs de sortie de retour de fréquence supérieure dans un chemin optique de sortie, chaque faisceau lumineux de sortie de retour ayant une longueur d'onde différente, de sorte que chacune de la pluralité des chemins optiques de sortie de retour achemine un faisceau correspondant parmi la pluralité de faisceaux lumineux de sortie de retour ; et
des moyens d'acheminement de sortie (220) pour combiner les faisceaux lumineux de sortie de retour à partir de la pluralité de faisceaux optiques de sortie de retour (215-219) en une fibre de concentrateur commune (223) acheminant la pluralité de faisceaux lumineux de sortie de retour.

28. Appareil optique (100), comprenant :
au moins un convertisseur de signal optique à électrique (182-185) configuré pour convertir les signaux optiques reçus (170-179) en signaux électriques reçus (190-198) ;
au moins un convertisseur élévateur de fréquence électrique (201-204) selon la revendication 1 ;
au moins un convertisseur électrique à optique (210-214) configuré pour convertir les signaux électriques convertis à la hausse en forme optique ; et
au moins un modulateur (210-214) configuré pour moduler les signaux électriques convertis à la hausse en lumière de différentes longueurs d'onde et en différentes bandes de fréquences, chacune étant d'une largeur de moins d'une octave.

29. Appareil optique (100) selon la revendication 28, dans lequel
l'au moins un modulateur (210-214) est configuré pour moduler les signaux électriques convertis à la hausse en lumière de longueurs d'onde différentes et en bandes de fréquences différentes, chacune étant d'une largeur de moins d'une demi-octave.

30. Appareil optique (100) selon la revendication 28, comprenant en outre :
une pluralité de sorties optiques ; et
l'appareil optique (100) est configuré pour fournir des signaux de sortie optiques modulés multiporteurs (115-117) dans une première bande de fréquences sur une première sortie optique et pour fournir des signaux de sortie optiques modulés multiporteurs dans une deuxième bande de fréquences sur une deuxième sortie optique.

31. Appareil optique (100) selon la revendication 30, dans lequel
l'appareil optique (100) est configuré pour fournir des signaux de sortie optique modulés multiporteurs dans une première bande de fréquences d'environ 200 à 800 MHz sur une première sortie optique et pour fournir des signaux de sortie optique modulés multiporteurs dans une deuxième bande de fréquences d'environ 300 à 1 200 MHz sur une deuxième sortie optique.

32. Appareil optique (100) selon la revendication 30, dans lequel
l'appareil optique est configuré pour fournir des signaux de sortie optique modulés multiporteurs dans une première bande de fréquences d'environ 400 à 600 MHz sur une première sortie optique et pour fournir des signaux de sortie optique modulés multiporteurs dans une deuxième bande de fréquences d'environ 600 à 900 MHz sur une deuxième sortie optique.

33. Procédé permettant de fournir des communications optiques, comprenant les étapes consistant à :
fournir une pluralité de signaux multiporteurs optiques ; **caractérisé par**:
la conversion de la pluralité de signaux multiporteurs optiques en une pluralité de premiers signaux multiporteurs électroniques comprenant une multitude de signaux porteurs modulés par les signaux d'informations respectifs, avec les fréquences des signaux porteurs dans le même signal multiporteur électronique étant différentes les unes des autres et chaque signal porteur étant dans une première bande de fréquences, les fréquences porteuses de chaque signal porteur des premiers signaux multiporteurs électroniques étant approximativement les mêmes ;
la conversion de chaque premier signal multiporteur électronique en un deuxième signal multiporteur électronique comprenant une multitude de signaux porteurs avec les fréquences dans une deuxième bande de fréquences avec une fréquence minimale étant au moins deux fois supérieure à une fréquence maximale de la première bande de fréquences, les signaux porteurs du deuxième signal multiporteur électronique étant modulés par les mêmes signaux d'informations que les signaux porteurs du premier signal multiporteur électronique.

34. Procédé selon la revendication 33,
comprenant en outre : la fourniture d'un troisième signal de retour optique multiporteur comprenant une multitude de signaux porteurs avec des fréquences dans une troisième bande de fréquences avec une fréquence minimale supérieure à une fréquence maximale de la première bande de fréquences ;
les deuxième et troisième bandes de fréquences ont différentes gammes qui ne se recoupent pas, de sorte que la fréquence minimale de n'importe quel signal porteur dans la troisième bande de fréquences est inférieure à la fréquence maximale de n'importe quel signal porteur dans la deuxième bande de fréquences ;
les fréquences minimales des signaux porteurs dans les deuxième et troisième bandes de fréquences sont au moins quatre fois supérieures à la fréquence maximale des signaux porteurs dans la première bande de fréquences ;
les fréquences minimales des signaux porteurs dans la deuxième bande de fréquences sont de préférence au moins environ 200 MHz, de préférence au moins environ 400 MHz ;
la fréquence maximale de la troisième bande de fréquences est 1 200 MHz ; et/ou
la largeur des deuxième et troisième bandes de fréquences est moins d'une octave, de préférence moins d'une demi-octave.

35. Procédé selon la revendication 33, comprenant les étapes consistant à :
fournir une multitude respective d'unités d'interface client connectées à chacun d'une multitude de réseaux de câbles coaxiaux ;
générer des premiers signaux multiporteurs électroniques dans chacun des réseaux de câbles coaxiaux, en utilisant la multitude d'unités d'interface client connectées à chaque réseau, avec les fréquences des signaux porteurs du premier signal multiporteur électronique dans chaque réseau coaxial dans la même première bande de fréquences ;
fournir un ou plusieurs noeuds de câble de fibre hybride ;
fournir une ou plusieurs fibres optiques ;
convertir un ou plusieurs signaux multiporteurs optiques en avant à partir de l'une des fibres optiques en signaux électroniques multiporteurs en avant dans les réseaux de câbles coaxiaux ;
séparer la multitude des premiers signaux électroniques dans les réseaux de câbles coaxiaux en une multitude de premiers signaux électroniques séparés dans les noeuds ;
convertir en premier lieu une première pluralité de premiers signaux électroniques séparés dans les noeuds en un deuxième signal multiporteur électronique unique avec les fréquences des signaux porteurs dans une deuxième bande de fréquences ayant une fréquence porteuse minimale supérieure à une fréquence porteuse maximale de la première bande de fréquences et une largeur de la deuxième bande de fréquences est moins d'une octave ; et
convertir en deuxième lieu le deuxième signal multiporteur électronique en un premier signal multiporteur optique dans une première fibre parmi les fibres optiques, avec les fréquences des signaux porteurs dans la deuxième bande de fréquences.

36. Procédé selon la revendication 35,
comprenant en outre de convertir en troisième lieu une deuxième pluralité de premiers signaux électroniques séparés dans les noeuds en un troisième signal multiporteur électronique unique avec les fréquences des signaux porteurs dans une troisième bande de fréquences ayant une fréquence porteuse minimale supérieure à une fréquence porteuse maximale de la première bande de fréquences et une largeur de bande de fréquences de moins d'une octave ; et
convertir en quatrième lieu le troisième signal électronique en un deuxième signal multiporteur optique dans la première fibre parmi les fibres optiques, avec les fréquences des signaux porteurs dans la troisième bande de fréquences et une longueur d'onde de lumière suffisamment différente d'une longueur d'onde de lumière du premier signal optique, de sorte que les premier et deuxième signaux optiques peuvent être séparés par un démultiplexeur par répartition en longueur d'onde.

37. Procédé selon la revendication 35,
comprenant en outre de fournir un concentrateur de fibre ;
et la première conversion comprend :
convertir en troisième lieu la première pluralité des premiers signaux électroniques séparés dans les noeuds en une pluralité correspondante de deuxièmes signaux optiques dans une ou plusieurs des fibres optiques, avec des fréquences de signaux porteurs dans une troisième bande de fréquences ;
convertir en quatrième lieu la pluralité de deuxièmes signaux optiques dans l'une ou les plusieurs fibres optiques en un ou plusieurs troisièmes signaux multiporteurs électroniques dans le concentrateur, avec les fréquences des signaux porteurs dans la troisième bande de fréquences ;
convertir en cinquième lieu les fréquences et combiner les signaux porteurs des troisièmes signaux électroniques pour fournir le deuxième signal électronique unique.

38. Procédé selon la revendication 37, dans lequel :
il y a une pluralité de noeuds et chacun des noeuds est connecté à un seul réseau de câble coaxial respectif ;
la troisième conversion utilise un émetteur optique respectif dans chaque noeud pour fournir les deuxièmes signaux optiques dans des fibres optiques différentes respectives avec des fréquences des signaux porteurs dans la première bande ;
la quatrième conversion convertit chacun des deuxièmes signaux optiques dans une fibre optique respective en un troisième signal électronique respectif avec les fréquences dans la troisième bande ;
les gammes de fréquences de la première et de la troisième bandes sont approximativement égales ;
la cinquième conversion comprend : la conversion des fréquences des signaux porteurs des troisièmes signaux électroniques pour fournir les quatrièmes signaux électroniques respectifs, chacun avec des fréquences porteuses dans une sous-bande différente de la deuxième bande de fréquences ; et la combinaison des quatrièmes signaux multiporteurs électroniques en le deuxième signal multiporteur électronique unique.

39. Procédé selon la revendication 35, dans lequel la première conversion comprend :
convertir en troisième lieu la pluralité des premiers signaux électroniques séparés dans les noeuds en une pluralité de troisièmes signaux multiporteurs électroniques respectifs avec les fréquences des signaux porteurs de chaque troisième signal électronique dans une sous-bande différente d'une troisième bande de fréquences ayant une fréquence porteuse maximale au moins égale à la fréquence porteuse minimale de la première bande de fréquences, plus le nombre des deuxièmes signaux électroniques convertis en le premier signal optique fois la largeur de la première bande de fréquences ;
convertir en quatrième lieu la pluralité des troisièmes signaux multiporteurs électroniques en le deuxième signal.

40. Procédé selon la revendication 39, dans lequel :
la troisième bande de fréquences des troisièmes signaux multiporteurs électroniques a la même gamme de fréquences que la deuxième bande de fréquences des deuxièmes signaux électroniques ; et
la première conversion comprend en outre de combiner les troisièmes signaux multiporteurs électroniques pour former les deuxièmes signaux multiporteurs électroniques.

41. Procédé selon la revendication 39, dans lequel :
le procédé comprend en outre de fournir un concentrateur de fibre ;
la fréquence porteuse maximale de la troisième bande de fréquences est inférieure à la fréquence porteuse minimale de la deuxième bande de fréquences ;
la troisième conversion comprend :
combiner la pluralité des troisièmes signaux électroniques en un quatrième signal électronique unique avec les fréquences des signaux porteurs dans la troisième bande de fréquences ;
convertir en cinquième lieu le quatrième signal électronique en un deuxième signal multiporteur optique dans une fibre parmi les fibres optiques avec les fréquences des signaux porteurs dans la troisième bande de fréquences ;
convertir en sixième lieu le deuxième signal optique dans la fibre optique en un cinquième signal électronique dans le concentrateur, qui est approximativement un double du quatrième signal électronique ; et
convertir en septième lieu le cinquième signal électronique avec les fréquences des signaux porteurs dans la troisième bande de fréquences en deuxième signal électronique avec les fréquences des signaux porteurs dans la deuxième bande de fréquences.
